(19) Europäisches Patentamt
European Patent Office
Office européen des brevets

(11) EP 4 614 829 A1

# (12) EUROPEAN PATENT APPLICATION

(43) Date of publication:
**10.09.2025 Bulletin 2025/37**

(21) Application number: **24220449.3**

(22) Date of filing: **17.12.2024**

(51) International Patent Classification (IPC):
***H04B 7/06*** (2006.01) ***H04B 7/08*** (2006.01)
***H04B 7/155*** (2006.01) ***H04L 5/00*** (2006.01)
***H04W 72/23*** (2023.01)

(52) Cooperative Patent Classification (CPC):
**H04B 7/0695; H04B 7/0626; H04B 7/088; H04B 7/15507; H04L 5/0048; H04W 72/23**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.03.2024 US 202463562706 P**

(71) Applicant: **Industrial Technology Research Institute
Hsinchu 31040 (TW)**

(72) Inventors:
- **Lo, Li-Chung
Taichung City 407 (TW)**
- **Lee, Chien-Min
Taoyuan City 324 (TW)**
- **Hsieh, Chia-Wen
Chiayi City 600 (TW)**

(74) Representative: **Kurig, Thomas
Becker Kurig & Partner
Patentanwälte mbB
Bavariastraße 7
80336 München (DE)**

## (54) COMMUNICATION DEVICE AND METHOD OF BEAM MANAGEMENT

(57) A communication device (800) and a method of beam management are provided. The method is adapted to a communication device (800) including an entity (31) and a function (32), wherein the entity (31) communicates with a network via a first link, and the function (32) forwards signals via a second link, wherein the first link is associated with a first transmission configuration indicator (TCI) state. The method includes: receiving, by the entity (31), a channel state information (CSI) reporting configuration; transmitting, by the entity (31), a CSI report according to the CSI reporting configuration; and receiving, by the entity (31), a TCI state list configuration.

receiving, by the entity, a channel state information (CSI) reporting configuration
S781
transmitting, by the entity, a CSI report according to the CSI reporting configuration
S782
receiving, by the entity, a TCI state list configuration
S783

FIG. 78

EP 4 614 829 A1

## Description

## BACKGROUND

### Technical Field

The disclosure is related to a communication device and a method of beam management.

### Description of Related Art

A network-controlled repeater (NCR) may be used for covering the coverage holes between a gNB and a user equipment (UE). Due to limited amplified power of an NCR, operator have to deploy multiple NCRs to cover different areas. However, independent multiple NCRs may introduce issues such as control signal overhead due to multiple NCRs in the same band or limited uplink (UL) scheduling flexibility due to fixed UL power control. For example, UL resources may not be co-scheduled with normal UEs. Therefore, mechanisms for cooperation of multiple NCRs with different operation modes are required.

## SUMMARY

The disclosure is related to a communication device and a method of beam management.

In one embodiment of the present disclosure, a communication device is provided. The communication device includes an entity and a function, wherein the entity communicates with a network via a first link, and the function forwards signals via a second link, wherein the first link is associated with a first transmission configuration indicator (TCI) state, wherein the entity is configured to perform: receiving a channel state information (CSI) reporting configuration; transmitting a CSI report according to the CSI reporting configuration; and receiving a TCI state list configuration

In one embodiment of the present disclosure, a method of beam management is provided. The method of beam management is adapted to a communication device comprising an entity and a function, wherein the entity communicates with a network via a first link, and the function forwards signals via a second link, wherein the first link is associated with a first transmission configuration indicator (TCI) state, and the method includes: receiving, by the entity, a channel state information (CSI) reporting configuration; transmitting, by the entity, a CSI report according to the CSI reporting configuration; and receiving, by the entity, a TCI state list configuration.

In one embodiment of the present disclosure, a communication device is provided. The communication device includes a transceiver and a processor. The processor is coupled to the transceiver, wherein the processor is configured to perform: transmitting a channel state information (CSI) reporting configuration; receiving a CSI report according to the CSI reporting configuration; and transmitting a transmission configuration indicator (TCI) state list configuration.

In one embodiment of the present disclosure, a method of beam management is provided. The method of beam management is adapted to a communication device, wherein the method includes: transmitting a channel state information (CSI) reporting configuration; receiving a CSI report according to the CSI reporting configuration; and transmitting a transmission configuration indicator (TCI) state list configuration.

To make the aforementioned more comprehensible, several embodiments accompanied with drawings are described in detail as follows.

## BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.

FIG. 1 illustrates a schematic diagram of a gNB, an NCR, and a UE according to one embodiment of the present disclosure.

FIG. 2 illustrates a schematic diagram of multiple NCRs according to one embodiment of the present disclosure.

FIG. 3 illustrates a schematic diagram of NCR according to one embodiment of the present disclosure.

FIG. 4 illustrates a schematic diagram of beam management for C-link according to one embodiment of the present disclosure.

FIG. 5 illustrates a schematic diagram of a procedure of beam (or CSI) measurements and beam (or CSI) reporting according to one embodiment of the present disclosure.

FIG. 6 illustrates a schematic diagram of a procedure of beam maintenance/updating for C-link according to one embodiment of the present disclosure.

FIG. 7 illustrates a schematic diagram of beam application for BH-link according to one embodiment of the present disclosure.

FIG. 8 illustrates a schematic diagram of simultaneous DL/UL transmission according to one embodiment of the present disclosure.

FIG. 9 illustrates a schematic diagram of CORESET and SS according to one embodiment of the present disclosure.

FIG. 10 illustrates a schematic diagram of independent NCR deployment according to one embodiment of the present disclosure.

FIG. 11 illustrates a schematic diagram of advance NCR group according to one embodiment of the present disclosure.

FIG. 12 illustrates a schematic diagram of operation mode A of NCR group according to one embodiment of the present disclosure.

FIG. 13 illustrates a schematic diagram of operations B and C of NCR group according to one embodiment of the present disclosure.

FIG. 14 illustrates a schematic diagram of capability reporting of NCR group according to one embodiment of the present disclosure.

FIG. 15 illustrates a schematic diagram of ambiguity of beam application according to one embodiment of the present disclosure.

FIG. 16 illustrates a schematic diagram of beam management for C-link through one NCR node according to one embodiment of the present disclosure.

FIG. 17 illustrates a schematic diagram of determining beam index for C-link by MT according to one embodiment of the present disclosure.

FIG. 18 illustrates a schematic diagram of reporting restriction with one beam index in a CSI report according to one embodiment of the present disclosure.

FIG. 19 illustrates a schematic diagram of implicit NCR node reception by NCR priority rule according to one embodiment of the present disclosure.

FIG. 20 illustrates a schematic diagram of control signaling transmission timeline corresponding to the implicit NCR node reception according to one embodiment of the present disclosure.

FIG. 21 illustrates a schematic diagram of NCR node reception by indicating an NCR ID associated with a TCI state according to one embodiment of the present disclosure.

FIG. 22 illustrates a schematic diagram of sub-lists for each NCR within a TCI state list according to one embodiment of the present disclosure.

FIG. 23 illustrates a schematic diagram of configuring a sub-list for each NCR based on a bitmap according to one embodiment of the present disclosure.

FIG. 24 illustrates a schematic diagram of configuring a sub-list for each NCR based on a bitmap according to one embodiment of the present disclosure.

FIG. 25 illustrates a schematic diagram of configuring a sub-list for each NCR based on list segmentation according to one embodiment of the present disclosure.

FIG. 26 illustrates a schematic diagram of configuring a sub-list for each NCR based on list segmentation according to one embodiment of the present disclosure.

FIG. 27 illustrates a schematic diagram of configuring a TCI state with an NCR ID according to one embodiment of the present disclosure.

FIG. 28 illustrates a schematic diagram of a tagged TCI state list of an NCR according to one embodiment of the present disclosure.

FIG. 29 illustrates a schematic diagram of beam reporting for each NCR according to one embodiment of the present disclosure.

FIG. 30 illustrates a schematic diagram of beam reporting with NCR group based CSI compression according to one embodiment of the present disclosure.

FIG. 31 illustrates a schematic diagram of NCR reporting according to one embodiment of the present disclosure.

FIG. 32 illustrates a schematic diagram of enabling simultaneous reception according to one embodiment of the present disclosure.

FIG. 33 illustrates a schematic diagram of one beam index associated with limited multiple NCR nodes in a CSI report according to one embodiment of the present disclosure.

FIG. 34 illustrates a schematic diagram of implicit NCR node reception based on the beam reporting according to one embodiment of the present disclosure.

FIG. 35 illustrates a schematic diagram of implicit NCR node reception based on the beam reporting according to one embodiment of the present disclosure.

FIG. 36 illustrates a schematic diagram of NCR node reception by indicating NCR IDs associated with a TCI state according to one embodiment of the present disclosure.

FIG. 37 illustrates a schematic diagram of sub-lists for each NCR within a TCI state list according to one embodiment of the present disclosure.

FIG. 38 illustrates a schematic diagram of configuring a sub-list for each NCR based on a bitmap according to one embodiment of the present disclosure.

FIG. 39 illustrates a schematic diagram of configuring a sub-list for each NCR based on a bitmap according to one embodiment of the present disclosure.

FIG. 40 illustrates a schematic diagram of configuring a sub-list for each NCR based on list segmentation according to one embodiment of the present disclosure.

FIG. 41 illustrates a schematic diagram of configuring a sub-list for each NCR based on list segmentation according to one embodiment of the present disclosure.

FIG. 42 illustrates a schematic diagram of sub-lists for each NCR within a TCI state list according to one embodiment of the present disclosure.

FIG. 43 illustrates a schematic diagram of configuring a sub-list for each NCR based on a bitmap according to one embodiment of the present disclosure.

FIG. 44 illustrates a schematic diagram of a TCI state configured with an NCR ID according to one embodiment of the present disclosure.

FIG. 45 illustrates a schematic diagram of a tagged TCI state list of an NCR according to one embodiment of the present disclosure.

FIG. 46 illustrates a schematic diagram of enabling simultaneous reception according to one embodiment of the present disclosure.

FIG. 47 illustrates a schematic diagram of NCR reception based on a time pattern bitmap according to one embodiment of the present disclosure.

FIG. 48 illustrates a schematic diagram of NCR reception based on a time pattern bitmap according to one embodiment of the present disclosure.

FIG. 49 illustrates a schematic diagram of a time resource configuration according to one embodiment of the present disclosure.

FIG. 50 illustrates a schematic diagram of determining the association between time pattern and NCR nodes according to one embodiment of the present disclosure.

FIG. 51 illustrates a schematic diagram of restricted beam reporting according to one embodiment of the present disclosure.

FIG. 52 illustrates a schematic diagram of NCR hopping with common TCI state according to one embodiment of the present disclosure.

FIG. 53 illustrates a schematic diagram of implicit NCR node reception according to one embodiment of the present disclosure.

FIG. 54 illustrates a schematic diagram of indicating NCR IDs associated with a TCI state according to one embodiment of the present disclosure.

FIG. 55 illustrates a schematic diagram of sub-lists for each NCR within a TCI state list according to one embodiment of the present disclosure.

FIG. 56 illustrates a schematic diagram of sub-lists for each NCR within a TCI state list according to one embodiment of the present disclosure.

FIG. 57 illustrates a schematic diagram of a TCI state configured with an NCR ID according to one embodiment of the present disclosure.

FIG. 58 illustrates a schematic diagram of a tagged TCI state list of an NCR according to one embodiment of the present disclosure.

FIG. 59 illustrates a schematic diagram of determining the association between time pattern and NCR nodes according to one embodiment of the present disclosure.

FIG. 60 illustrates a schematic diagram of NCR hopping with multiple TCI states according to one embodiment of the present disclosure.

FIG. 61 illustrates a schematic diagram of NCR hopping with multiple TCI states according to one embodiment of the present disclosure.

FIG. 62 illustrates a schematic diagram of SS set monitoring according to one embodiment of the present disclosure.

FIG. 63 illustrates a schematic diagram of SS set monitoring according to one embodiment of the present disclosure.

FIG. 64 illustrates a schematic diagram of CORESET group monitoring according to one embodiment of the present disclosure.

FIG. 65 illustrates a schematic diagram of capability of NCR according to one embodiment of the present disclosure.

FIG. 66 illustrates a schematic diagram of operation mode switching according to one embodiment of the present disclosure.

FIG. 67 illustrates a schematic diagram of operation mode switching according to one embodiment of the present disclosure.

FIG. 68 illustrates a schematic diagram of a scheme of restricted beam reporting for NCR-MT with Capability 1 according to one embodiment of the present disclosure.

FIG. 69 illustrates a schematic diagram of a scheme of restricted beam reporting for NCR-MT with Capability 3 according to one embodiment of the present disclosure.

FIG. 70 illustrates a schematic diagram of a scheme of restricted beam reporting for NCR-MT with Capability 2 according to one embodiment of the present disclosure.

FIG. 71 illustrates a schematic diagram of a scheme of implicit NCR node reception for NCR-MT with Capability 1 according to one embodiment of the present disclosure.

FIG. 72 illustrates a schematic diagram of a scheme of implicit NCR node reception for NCR-MT with Capability 3 according to one embodiment of the present disclosure.

FIG. 73 illustrates a schematic diagram of a scheme of implicit NCR node reception for NCR-MT with Capability 2 according to one embodiment of the present disclosure.

FIG. 74 illustrates a schematic diagram of NCR node reception based on NCR ID for NCR-MT with Capability 1 according to one embodiment of the present disclosure.

FIG. 75 illustrates a schematic diagram of NCR node reception based on NCR ID for NCR-MT with Capability 3 according to one embodiment of the present disclosure.

FIG. 76 illustrates a schematic diagram of NCR node reception based on NCR ID for NCR-MT with Capability 2 according to one embodiment of the present disclosure.

FIG. 77 illustrates a schematic diagram of time resource configurations according to one embodiment of the present disclosure.

FIG. 78 illustrates a flowchart of a method of beam management according to one embodiment of the present disclosure.

FIG. 79 illustrates a flowchart of a method of beam management according to one embodiment of the present disclosure.

FIG. 80 illustrates a schematic diagram of a communication device according to one embodiment of the present disclosure.

## DESCRIPTION OF THE EMBODIMENTS

The acronyms in the present disclosure are defined as follows:

| Acronym | Full Name |
|---|---|
| AL | Aggregation level |
| CC | component carrier |
| CRI | CSI-RS resource indicator |
| CSI | Channel state information |
| CSI-RS | Channel state information reference signal |
| CSS | Common search space |
| CORESET | Control Resource Set |
| DCI | downlink control information |
| DL | downlink |
| DM-RS | Demodulation RS |
| gNodeB (gNB) | next Generation Node B |
| ID | identity |
| L1 | layer 1 |
| MAC | medium access control |
| MAC CE | MAC control element |
| MSG | message |
| NCR | Network-controlled Repeater |
| OM | operation mode |
| PDCCH | Physical downlink control channel |
| PDSCH | Physical downlink shared channel |
| PUCCH | physical uplink control channel |
| PUSCH | physical uplink share channel |

(continued)

| Acronym | Full Name |
|---|---|
| QCL | quasi co-located |
| RF | Radio frequency |
| RRC | radio resource control |
| RS | reference signal |
| RSRP | Reference signal receiving power |
| RSRQ | Reference signal receiving quality |
| Rx | received beam |
| SINR | signal to interference noise ratio |
| SRI | SRS resource indicator |
| SRS | Sounding reference signal |
| SS | search space |
| SSB | Synchronization signal block |
| SSBRI | SSB resource indicator |
| TCI | Transmission configuration indicator |
| TRP | transmission reception point |
| Tx | transmitted beam |
| TXRU | transceiver unit |
| UE | user equipment |
| UL | uplink |
| USS | UE-specific search space |
| UCI | Uplink control information |

A cell may be a serving cell, a carrier or a CC (component carrier), a serving cell, MCG (master cell group), or SCG (second cell group), but not limited herein.

"Configured" may indicate default, predefined, fixed, configured, activated, or indicated, but not limited herein.

RRC may be MAC CE or DCI, but not limited herein.

UL transmission may be PUSCH, PUCCH, physical random access channel (PRACH), SRS, or RS, but not limited herein.

NCR may be an NCR group, UE, TRP, gNB, or panel, but not limited herein.

RS may be DL RS and/or UL RS.

A DL RS configuration may be a DM-RS group, a DM-RS group index, a DM-RS resource, a DM-RS resource index, a DM-RS port index, a DM-RS port, a CSI-RS resource set index, a CSI-RS resource set, a CSI-RS resource index, a CSI-RS resource, a CSI-RS port index, a CSI-RS port, a SSB resource set index, a SSB resource set, a SSB resource index, a SSB resource, a SSB port index, or a SSB port, but not limited herein.

A UL RS configuration may be a DM-RS group, a DM-RS group index, a DM-RS resource, a DM-RS resource index, a DM-RS port index, a DM-RS port, a random access channel (RACH) group, a RACH group index, a RACH resource, a RACH resource index, a SRS resource set index, a SRS resource set, a SRS resource index, a SRS resource, a SRS port index, or a SRS port, but not limited herein.

A beam may be represented by an antenna, an antenna port, an antenna element, a group of antenna, a group of antenna port, a group of antenna element, a spatial domain filter, a reference signal resource, a QCL assumption, or a TXRU, but not limited herein. For example, a first beam may be represented as a first antenna port or a first group of antenna port or a first spatial domain filter. For example, a first beam direction may be represented as a QCL assumption or a spatial domain filter.

A Rx beam in configuration may be a spatial Rx parameter, a spatial domain receive filter, or a panel, but not limited herein.

A Tx beam in configuration may be a spatial Tx parameter, a spatial domain transmission filter, or a panel, but not limited herein.

An index or an identity may be *CORESETPoolIndex,* TRP ID, or Panel ID, but not limited herein.

A Cell TRP (e.g., transmission reception point) may be a TRP, a serving cell, a gNodeB (i.e., next Generation Node B), a panel, an unlicensed cell, an unlicensed serving cell, an unlicensed TRP, a gNodeB, an eNodeB (i.e., evolved NodeB), or an eNB, but not limited herein.

Communication device may be represented by UE or gNodeB, but not limited herein.

Combinations of embodiments disclosed is not precluded.

All steps in the embodiment may not be performed in a step-by-step way.

Embodiments disclosed may apply for unlicensed band, licensed band, non-DRX mode, DRX mode, or power saving, but not limited herein.

An NCR-MT may receive one or more CSI reports from each NCR node within the same NCR group, and the NCR-MT may generate a new CSI report (or an updated CSI report) based on the CSI reports received from each NCR node and may transmit the new CSI report to the gNB.

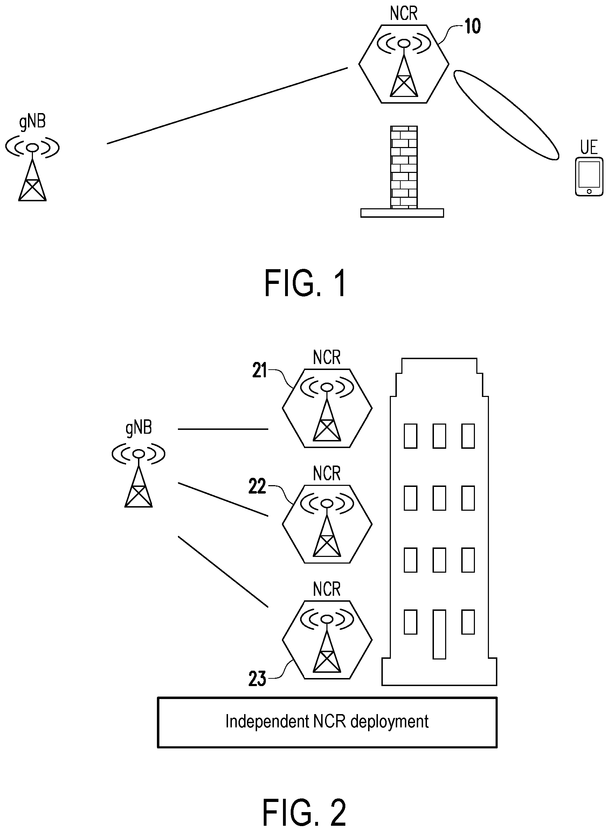

An NCR may be configured to cover the coverage holes between a gNB and a UE, as shown in FIG. 1. Signals between the gNB and the UE may be forwarded to each other through the NCR 10. Due to limited amplified power of an NCR, operator may deploy multiple NCRs to cover different areas. For example, operator may deploy NCR 21, NCR 22, and NCR 23 to cover different areas, as shown in FIG. 2.

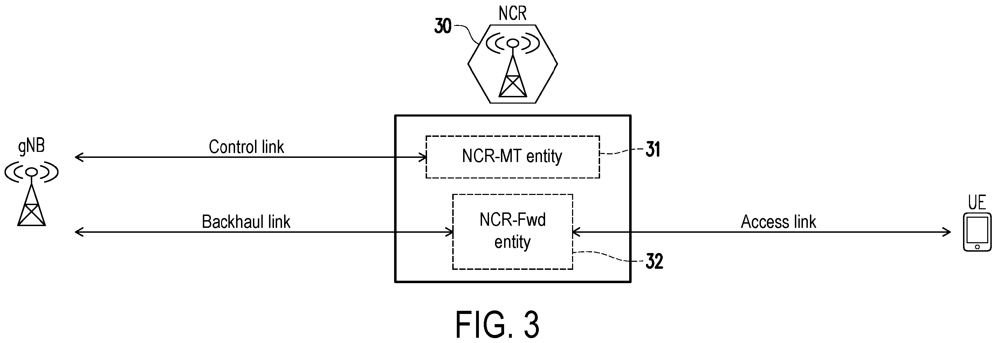

FIG. 3 illustrates a schematic diagram of NCR 30 according to one embodiment of the present disclosure. The NCR 30 may include an NCR-mobile terminal (NCR-MT) entity 31 and an NCR-forwarding (NCR-Fwd) entity 32. The NCR-MT entity 31 is a function entity to communicate with a gNB (or network) via a control link (C-link) to enable exchange of control information, wherein the C-link may be associated with a TCI state. The NCR-Fwd entity 32 is a function entity to perform the amplify-and-forwarding of UL/DL RS signal between a gNB (or network) and a UE via a backhaul link (BH-link) and an access link (AC-link). For example, the NCR-Fwd entity 32 may communicate with the gNB via the BH-link and may communicate with the UE via the AC-link.

In one example, NCR may be a communication device, a reconfigurable intelligent surface (RIS), a reflect device, a relay, a remote radio head (RRH), a Network element, a Base station (BS), a transmission reception point (TRP), a smart repeater, or a gNB, but not limited herein.

In one example, an NCR may be a RIS.

In one example, an NCR may comprise a RIS.

In one example, the NCR-Fwd may be a RIS.

In one example, the NCR-Fwd may comprise a RIS.

In one example, an NCR may comprise an NCR-MT entity and/or an NCR-Fwd entity.

In one example, an NCR-MT may be activated or de-activated in an NCR.

In one example, an NCR-MT may be not included in an NCR.

In one example, a first NCR may comprise a MT entity (e.g., NCR-MT entity).

In one example, a second NCR may comprise a Fwd entity (e.g., NCR-Fwd entity).

An NCR may include an NCR-MT entity and an NCR-Fwd entity.

Throughout this document, statements using the term "UE" may be equally applicable to the NCR-MT entity. Statements using the term "NCR" may be equally applicable to the NCR-Fwd entity.

A procedure for the NCR-MT to perform cell search, system information acquisition, random access procedure, UCI reporting, or PDCCH monitoring is same as a corresponding procedure for a UE.

A procedure for the NCR-MT to perform PDSCH reception, CSI-RS measurements and CSI determination, PUSCH transmission, or SRS transmission may be same as a corresponding procedure for a UE.

The NCR-Fwd may transmit or may receive only after the NCR-MT receives on the control link an indication for one or more beams for the NCR-Fwd to use for transmissions or receptions over corresponding one or more time resources on the access link. When the NCR-MT performs a link recovery procedure, the NCR-Fwd may not transmit or receive until the link recovery procedure is complete.

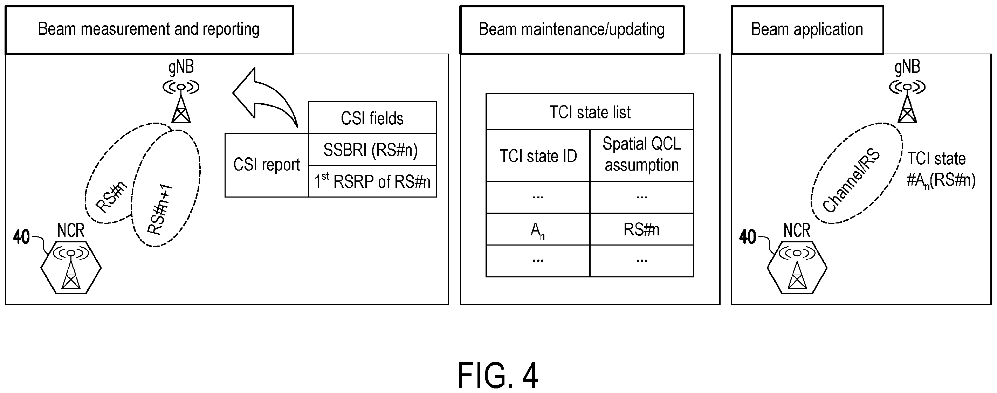

FIG. 4 illustrates a schematic diagram of beam management for C-link according to one embodiment of the present disclosure. The procedure of beam management for C-link may include the step of beam (or CSI) measurement and reporting, the step of beam maintenance/updating, and the step of beam application for BH-link, wherein each step may be executed independently. In the step of beam measurement and reporting, the gNB may receive CSI report from the NCR 40, wherein the CSI report may include measurement values (e.g., SSBRI or RSRP) corresponding to the RS (e.g., RS#n or RS#n+1) transmitted from the gNB to the NCR 40. In the step of beam maintenance/updating, the NCR 40 may receive TCI state list configuration which may be configured with a TCI state list by the gNB, wherein the TCI state list may include mapping relationships between TCI state ID (e.g., $A_n$) and spatial QCL assumption (e.g., spatial QCL assumption corresponding to RS#n). In step of beam application for BH-link, the NCR 40 may perform or may not perform simultaneous transmissions with the gNB.

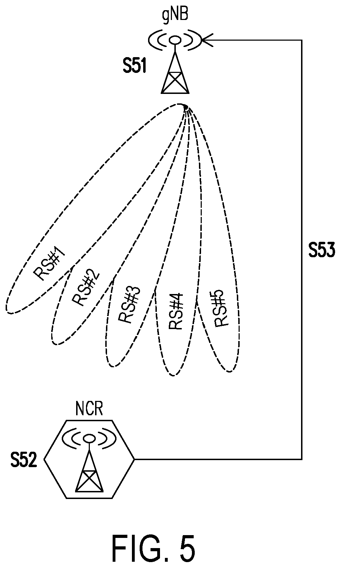

FIG. 5 illustrates a schematic diagram of a procedure of beam (or CSI) measurements and beam (or CSI) reporting according to one embodiment of the present disclosure. In step S51, the NCR may receive RS configuration (or CSI reporting configuration) from the gNB and may be configured with one or more RS (e.g., CSI-RS or SSB, such as RS#1-RS#5) for beam measurements. The NCR may be configured with a quantity for beam reporting, wherein the quantity may include a beam index (e.g., SSBRI/CRI) or a beam quality (e.g., L1-RSRP or L1-SINR). The RS configuration (or CSI reporting configuration) may include a reference signal list, a number of NCR, or a number of reporting RS for each NCR in the CSI report. In step S52, the NCR may perform beam measurement according to the RS configuration (or CSI reporting configuration). The NCR may generate a measurement result accordingly. In step S53, the NCR may report the measurement result (e.g., via a CSI report) to the gNB according to the RS configuration (or CSI reporting configuration), wherein the measurement result may include one or more beam indexes and/or measurement qualities. The CSI report may include IDs of one or more reference signals, RSRP values corresponding to one or more reference signals, or signal to nose ratio (SNR) values of one or more reference signals.

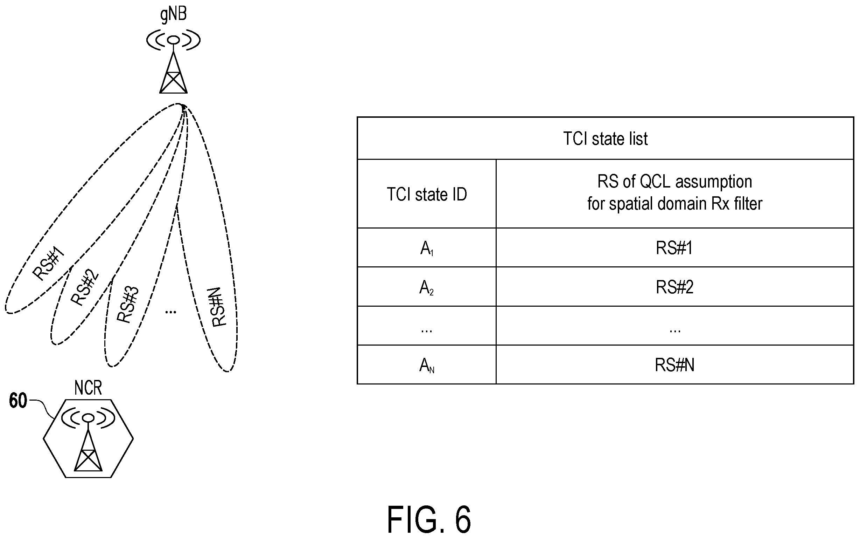

FIG. 6 illustrates a schematic diagram of a procedure of beam maintenance/updating for C-link according to one embodiment of the present disclosure. The NCR 60 may receive a TCI state list configuration. The NCR 60 may be configured with a TCI state list within the higher layer parameter (e.g., *maxNumberConfiguredTCSIstatesPerCC*), wherein the TCI state list may include up to N TCI-state configurations, wherein N is a positive integer and N may be dependent on the capability of the NCR 60. Each TCI-state may contain parameters for configuring a quasi co-location relationship between one or more DL reference signals and the DM-RS ports of the PDSCH, the DM-RS ports of the PDCCH, or the CSI-RS ports of a CSI-RS resource. For example, the TCI state list may include N TCI-state configurations, wherein each TCI-state configuration may include a relationship between a TCI state ID (e.g., $A_1$, $A_2$, ..., or $A_N$) and a corresponding reference signal (e.g., RS#1 corresponding to $A_1$, RS#2 corresponding to $A_2$, ..., or RS#N corresponding to Arr).

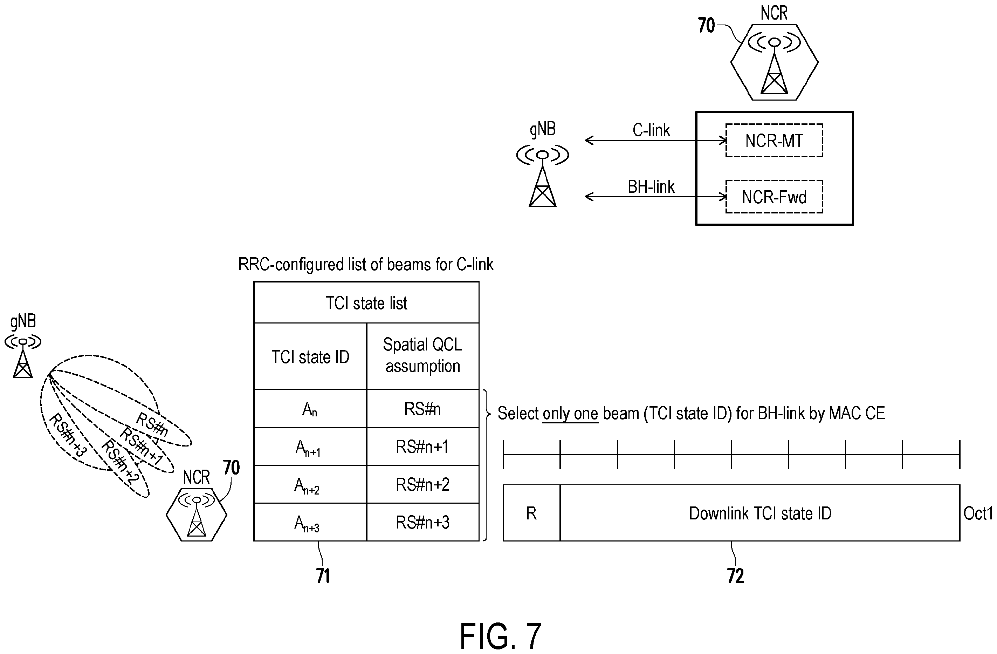

FIG. 7 illustrates a schematic diagram of beam application for BH-link according to one embodiment of the present disclosure. The NCR 70 may be configured with a TCI state list (e.g., TCI state list 71) of beams for C-link through an RRC message from the gNB. The NCR 70 may select only one beam (e.g., select one TCI state ID) from the TCI state list for BH-link according to a MAC CE (e.g., MAC CE 72) received by the NCR 70.

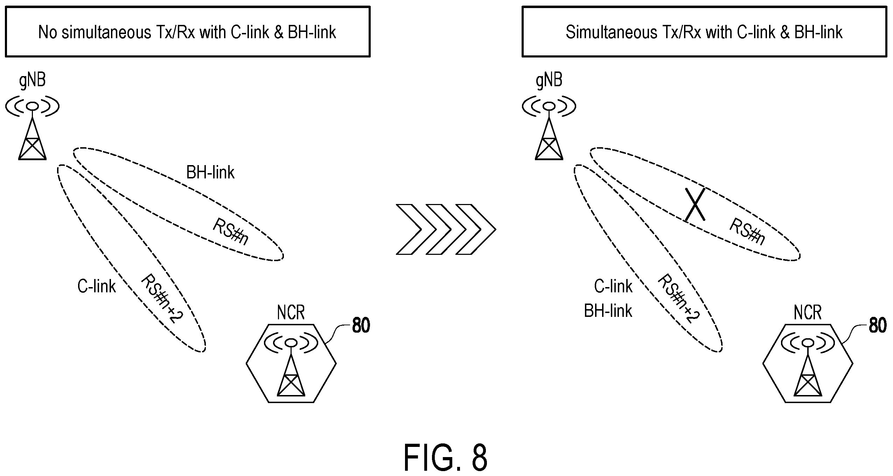

FIG. 8 illustrates a schematic diagram of simultaneous DL/UL transmission according to one embodiment of the present disclosure. If the NCR 80 does not support simultaneous transmission on the C-link and the BH-link (e.g., NCR 80 does not perform transmissions/receptions on the C-link and the BH-link simultaneously in the same set of symbols), the NCR-Fwd of the NCR 80 may not perform a transmission over a time resource if the NCR-MT of the NCR 80 performs a transmission over the time resource. For example, the C-link may be implemented by RS#n+2 while the BH-link is implemented by RS#n, wherein RS#n and RS#n+2 are different reference signals. When the NCR 80 does support simultaneous transmission on the C-link and the BH-link, the NCR 80 may simultaneously transmit or receive signal via both the C-link and the BH-link in a set of symbols. For example, both the C-link and the BH-link may be implemented by RS#n+2.

When the NCR 80 simultaneously receives signals via both the C-link and the BH-link in a set of symbols, the TCI state for receptions on the BH-link may be the same as the TCI state for receptions on the C-link in the set of symbols. That is, NCR 80 may perform receptions via the BH-link according to a quasi co-location relationship, wherein the quasi co-location relationship may be determined according to a TCI state indicated to NCR 80. The TCI state may be included in a DL beam indication in an MCA CE. In other words, NCR 80 may perform receptions via the C-link and the BH-link simultaneously in a set of symbols, wherein the TCI state for receptions via the BH-link may be the same as the TCI state for receptions via the C-link.

When the NCR 80 simultaneously transmits signals via both the C-link and the BH-link in a set of symbols, the spatial filter of the NCR 80 for transmission on the BH-link may be the same as the spatial filter of the NCR 80 for transmission on the C-link in the set of symbols. That is, NCR 80 may perform transmissions via both the C-link and the BH-link simultaneously in a set of symbols, wherein the spatial filter used by NCR 80 for the transmissions via the C-link may be the same as the spatial filter used by NCR 80 for the transmissions via the BH-link.

Assume that the NCR 80 does not simultaneously receive signals on the C-link and the BH-link. That is, a set of symbols received by the NCR 80 from the C-link may be different from a set of symbols received by the NCR 80 from the BH-link. If the NCR 80 does not support determination of a TCI state for receptions on the BH-link based on an indication of a TCI state from the serving cell, or if the NCR 80 does not receive an indication of a TCI state for receptions on the BH-link (e.g., if the NCR 80 does not receive an indication of a unified TCI state for receptions by the NCR-MT), receptions on the BH-link may use the QCL parameters same as the QCL parameters for PDCCH receptions in a CORESET with the lowest *controlResourceSetId* in the active DL bandwidth part (BWP).

In one embodiment, an NCR (or NCR-MT) may obtain an indication of a TCI state for receptions on BH-link from a TCI state list configuration received from the gNB.

If the NCR 80 does not support determination of a TCI state for receptions on the BH-link based on an indication of a TCI state from the serving cell, but the NCR 80 does receive an indication of a unified TCI state for receptions by the NCR-MT, the receptions on the BH-link may use the QCL parameters (e.g., a quasi co-location relationship) provided by an indicated unified TCI state for receptions by the NCR-MT.

If the NCR 80 does support determination of a TCI state for receptions on the BH-link based on an indication of a TCI state from the serving cell, and the NCR 80 does receive an indication of a TCI state for receptions on the BH-link, the receptions on the BH-link may use the QCL parameters provided by a TCI state in the NCR DL BH-link beam indication MAC CE.

Assume that the NCR 80 does not simultaneously transmit signals on the C-link and the BH-link. That is, a set of symbols received by the NCR 80 from the C-link may be different from a set of symbols received by the NCR 80 from the BH-link. If the NCR 80 does not support determination of a spatial filter for transmissions on the BH-link based on an indication of a unified TCI state or an SRI from the serving cell, or if the NCR-MT does not receive an indication of a unified TCI state or an SRI for determining a spatial filter for transmission on the BH-link (e.g., if the NCR 80 does not receive an indication of a unified TCI state for transmissions by the NCR-MT), the transmissions on the BH-link may use the spatial filter same as the spatial filter associated with the PUCCH resource with the smallest *pucch-ResourceId* in *PUCCH-ResourceSet* in the active UL BWP.

If the NCR 80 does not support determination of a spatial filter for transmission on the BH-link based on an indication of a unified TCI state or an SRI from the serving cell, but the NCR 80 does receive an indication of a unified TCI state for transmission by the NCR-MT, the transmissions on the BH-link may use the spatial filter corresponding to the indicated unified TCI state for transmission by the NCR-MT.

If the NCR 80 does not support determination of a spatial filter for transmission on the BH-link based on an indication of a unified TCI state or an SRI from the serving cell, and the NCR 80 does receive an indication of a unified TCI state or an SRI for determining a spatial filter for transmissions on the BH-link, the transmissions on the BH-link may use the spatial filter corresponding to a unified TCI state or an SRI provided in NCR UL BH-link beam indication MAC CE.

In one embodiment, the NCR-Fwd of the NCR 80 may use the same beam for transmission and receptions on the access link during respective time resources, wherein the respective time resources may be associated with the same beam index.

The NCR 80 or the gNB may support the semi-static beam indication for BH-link. If the unified TCI framework is not used for NCR-MT, the DL beam may be indicated by MAC CE to select one of TCI state IDs from the RRC-configured list of beams for C-link, or the UL beam may be indicated by an SRI on C-link, wherein the SRI may be included in a MAC CE. If the unified TCI framework is used for NCR-MT, the DL or UL beam may be indicated by a MAC CE to select one of TCI state IDs from the RRC-configured list of beams for C-link.

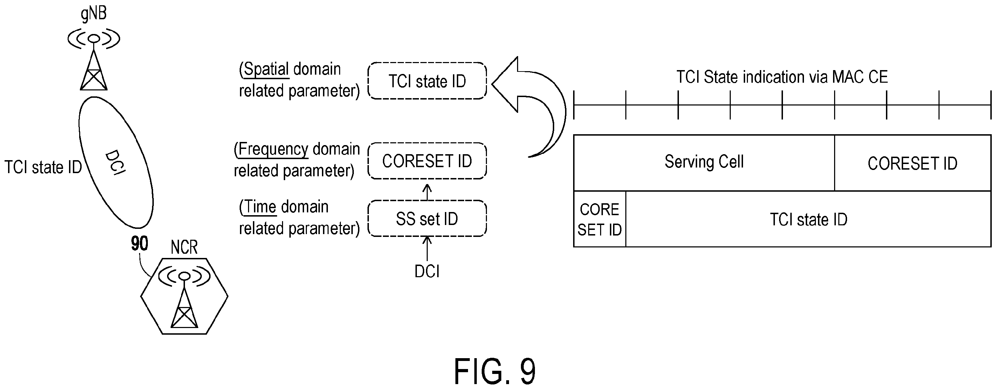

FIG. 9 illustrates a schematic diagram of CORESET and SS according to one embodiment of the present disclosure. The NCR 90 may monitor SS set for PDCCH according to the activated TCI state associated with the corresponding CORESET. The SS set may be associated with a CORESET, and the CORESET may be activated with one TCI state. One or more time resources (e.g., the 1st time resource or the 2nd time resource in the following embodiments) may be indicated by the CORESET.

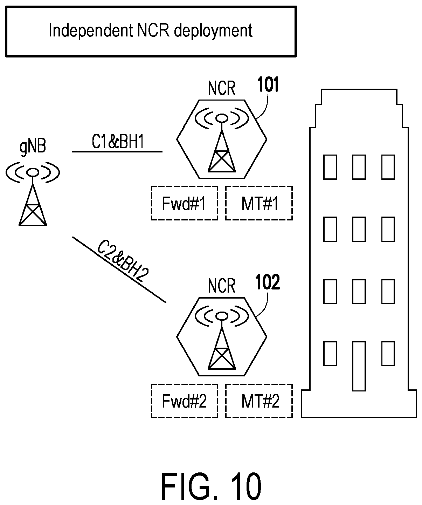

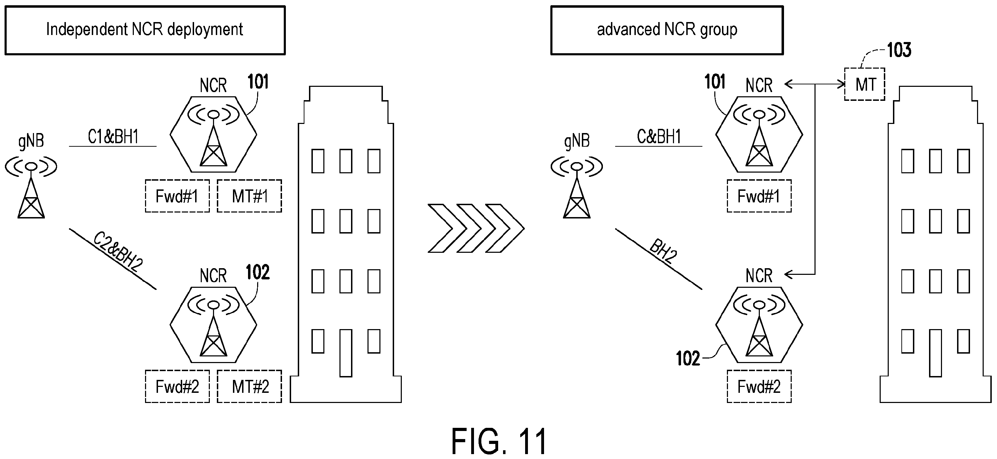

FIG. 10 illustrates a schematic diagram of independent NCR deployment according to one embodiment of the present disclosure, and FIG. 11 illustrates a schematic diagram of advance NCR group according to one embodiment of the present disclosure. In FIG. 10, NCR 101 and NCR 102 are deployed independently. MT#1 of the NCR 101 may communicate with the gNB via C-link C1. Fwd#1 of the NCR 101 may communicate with the gNB via BH-link BH1. MT#2 of the NCR 102 may communicate with the gNB via C-link C2. Fwd#2 of the NCR 102 may communicate with the gNB via BH-link BH2. The issues of independent NCR deployment may include: control signal overhead due to multiple NCR nodes in the same band; and limited UL scheduling flexibility due to fixed UL power control.

To increase the efficiency and flexibility for cooperation of multiple NCRs, the present disclosure proposes an advanced NCR group scheme. An NCR group may include at least one NCR-MT to communicate with gNB though at least one NCR node. For example, the lines connecting NCR 101, NCR 102, and MT 103 represent that MT 103 may be communicatively connected to NCR 101 or NCR 102 via wireline or wireless channel, and MT 103 may be shared between NCR 101 and NCR 102. When MT 103 want to communicate with the gNB, MT 103 may communication with the gNB via the C-link C between NCR 101 and the gNB. For an NCR group (e.g., group of NCR 101 and NCR 102), the number of NCR-MTs used to communicate with the gNB can be reduced. As a result, control signaling overhead may be decreased, UL resource scheduling (e.g., co-scheduled with normal UEs) may become more flexible, power consumption for C-link operations may be reduced, and greater flexibility in BH-link operations (e.g., the BH-link is not required to cooperate with the C-link) may be achieved.

The characteristic of the proposed NCR group may include: multiple NCRs within the NCR group may communicate with a network via one (or more than one) NCR-MT; each NCR in the NCR group may have one NCR-Fwd; or one NCR-MT may be activated to control the behavior of the NCR-Fwds among multi-NCRs.

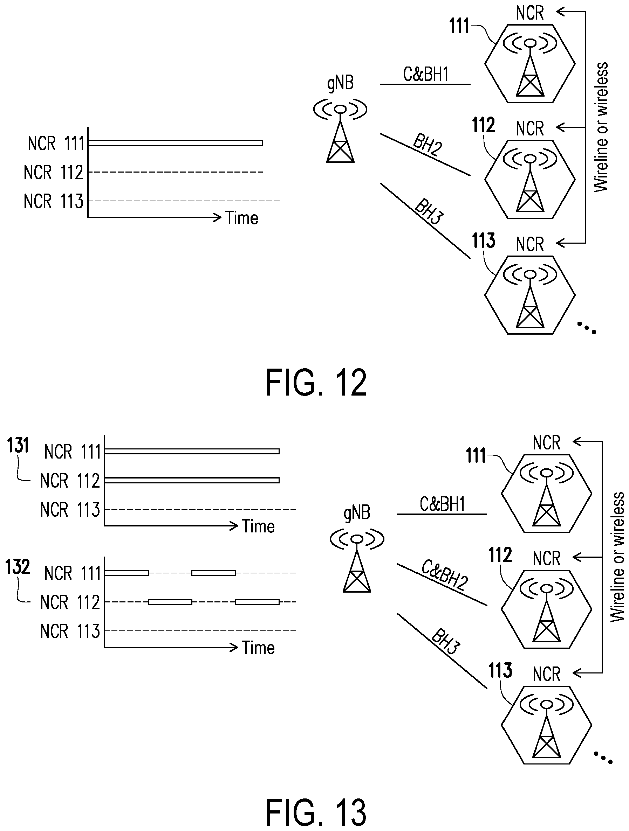

FIG. 12 illustrates a schematic diagram of operation mode A of NCR group according to one embodiment of the present disclosure. FIG. 13 illustrates a schematic diagram of operations B and C of NCR group according to one embodiment of the present disclosure. The NCR group may include, for example, NCR 111, NCR 112, and NCR 113. When operation mode A is applied, the NCR group may access the C-link through one NCR node to communicate with gNB. For example, the NCR group may access the C-link C through NCR 111 to communicate with gNB, wherein the NCR-Fwds of NCR 111, NCR 112, and NCR 113 may access BH-link BH1, BH-link BH2, and BH-link BH3 respectively to communicate with gNB, as shown in FIG. 12.

Compared to operation mode A, operation mode B or operation mode C may improve the reliability, diversity gain, and robustness of the communication system. When operation mode B is applied, the NCR group may access the C-link through more than one NCR node (e.g., through NCR 111 and NCR 112) simultaneously, as shown in control signaling transmission timeline 131 in FIG. 13. When operation mode C is applied, the NCR group may access the C-link through more than one NCR node (e.g., through NCR 111 and NCR 112) by time-division multiplexing (TDM), as shown in data transmission time line 132 in FIG. 13.

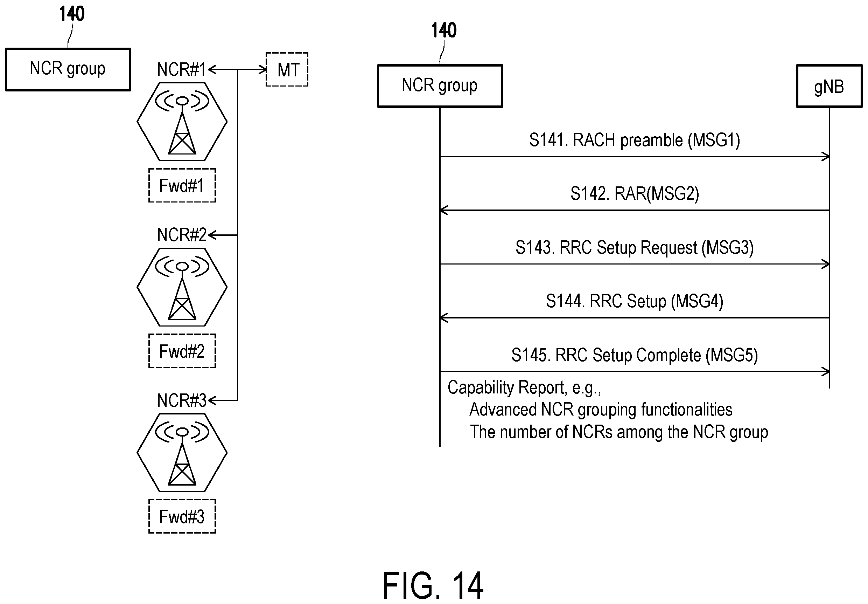

FIG. 14 illustrates a schematic diagram of capability reporting of NCR group 140 according to one embodiment of the present disclosure, wherein NCR group 140 may include NCR#1, NCR#2, and NCR#3, and a MT may be shared among NCR#1, NCR#2, and NCR#3. In step S141, the NCR group 140 may transmit a random-access channel (RACH) preamble to the gNB through MSG1. In step S142, the gNB may transmit a random-access response (RAR) to the NCR group 140 through MSG2 in response to the RACH preamble. In step S143, the NCR group 140 may transmit an RRC setup request to the gNB through MSG3 in response to the RAR. In step S144, the gNB may transmit an RRC setup message to the NCR group 140 through MSG4 in response to the RRC setup request. In step S145, the NCR group 140 may transmit an RRC setup complete message to the gNB through MSG5 in response to the RRC setup message. The NCR group 140 (or the NCR-MT) may report the capability (or the repeater related information) of the NCR group to the gNB through the RRC setup complete message, wherein the capability may include: NCR with advanced functionalities (e.g., NCR grouping); the number of NCRs within the NCR group (e.g., the number of NCRs associated with each other); or the corresponding NCR ID of the NCR group (or NCR IDs of NCRs among the NCR group).

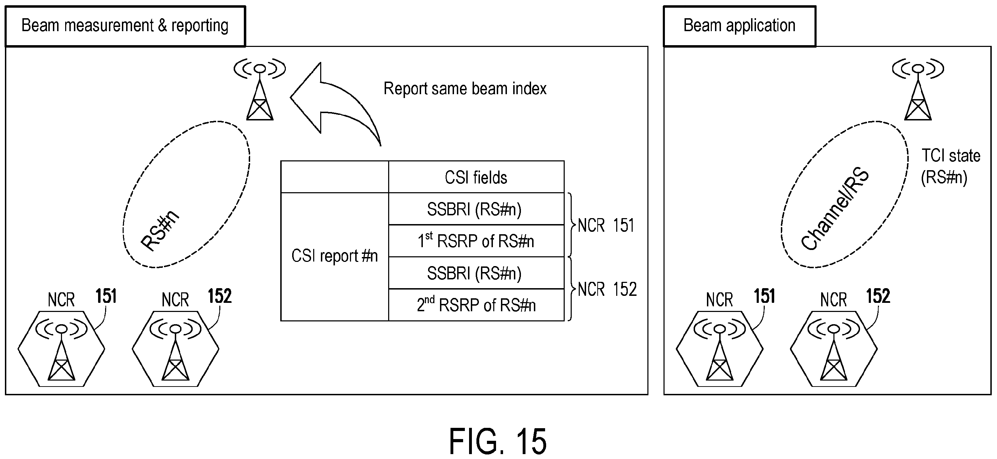

FIG. 15 illustrates a schematic diagram of ambiguity of beam application according to one embodiment of the present disclosure. If multiple NCRs communicate with the gNB using a C-link through a single NCR node (as shown in FIG. 12), ambiguity in beam application may occur. The same beam indexes (e.g., SSBRI) corresponding to different NCRs may be included in the CSI report. If the beam index is applied to a channel/RS, it is not clear which NCR should receive the channel/RS or handle the C-link in the beam application stage. For example, if NCR 151 and NCR 152 report the same beam index (e.g., SSBRI of RS#n) to the gNB and the beam index is applied to a channel/RS, the gNB would not know which NCR (e.g., NCR 151 or 152) should handle the C-link so as to receive the channel/RS.

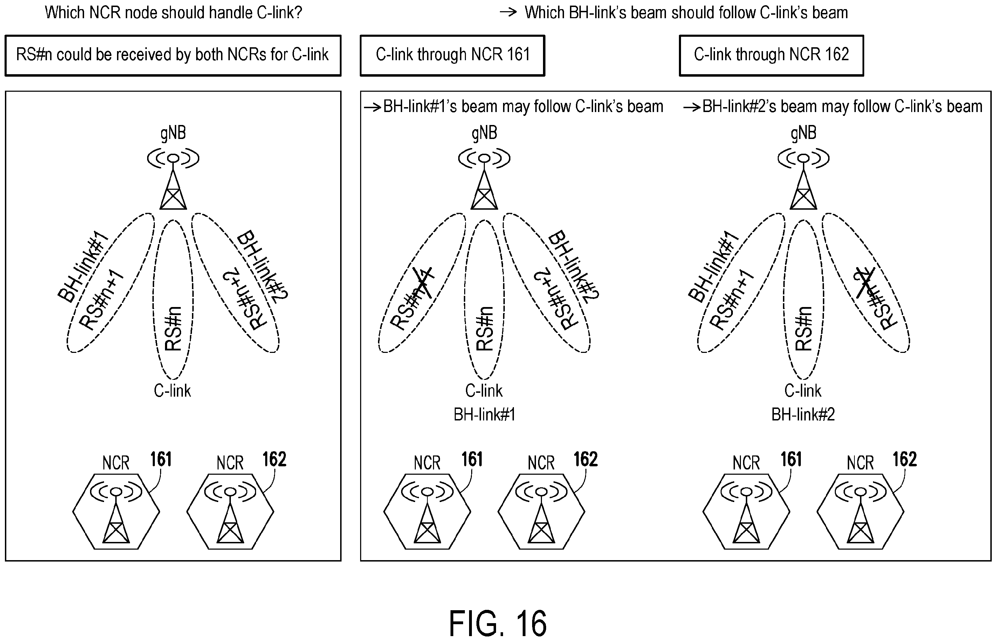

FIG. 16 illustrates a schematic diagram of beam management for C-link through one NCR node according to one embodiment of the present disclosure. It is assumed that both NCR 161 and NCR 162 report the same beam index (i.e., the beam index corresponding to RS#n) to the gNB, NCR 161 may apply BH-link#1 using RS#n+1, and NCR 162 may apply BH-lnik#2 using RS#n+2, wherein RS#n could be received by both NCR 161 and NCR 162 for C-link. If the C-link is applied through NCR 161, BH-link#1's beam may follow C-link's beam. That is, NCR 161 may perform data transmission on both the C-link and BH-link#1 simultaneously using RS#n. NCR 161 may not use RS#n+1 for BH-link#1. On the other hand, if the C-link is applied through NCR 162, BH-link#2's beam may follow C-link's beam. That is, NCR 162 may perform data transmission on both the C-link and BH-link#2 simultaneously using RS#n. NCR 162 may not use RS#n+2 for BH-link#2.

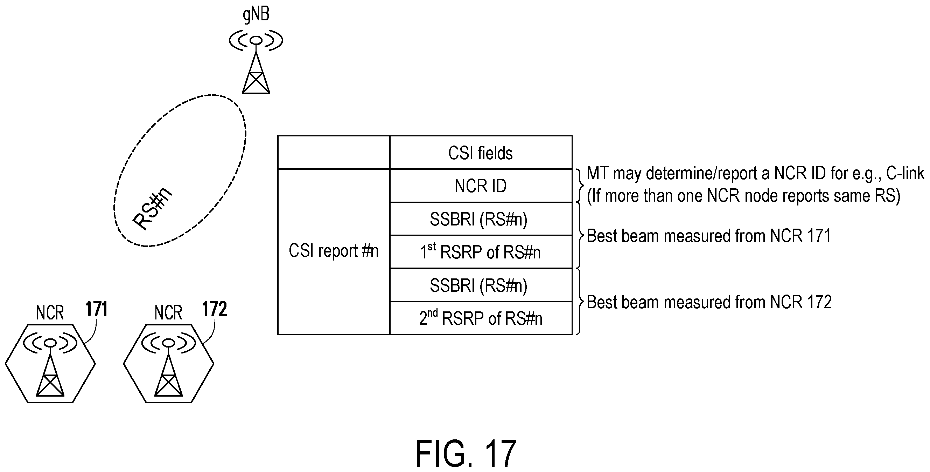

FIG. 17 illustrates a schematic diagram of determining beam index for C-link by MT according to one embodiment of the present disclosure. MT may determine/report an NCR ID for C-link in a new field of the CSI report, wherein the NCR ID may indicate the NCR for applying the C-link. For example, if the best beams respectively measured by NCR 171 and NCT 172 are the same (e.g., RS#n), the MT may report an NCR ID to the gNB through the CSI report, wherein the NCR ID may indicate one of NCR 171 and NCR 172 for applying the C-link using RS#n. In one embodiment, a fixed/pre-determined/configured value in a new field of the CSI report may indicate no NCR ID recommendation.

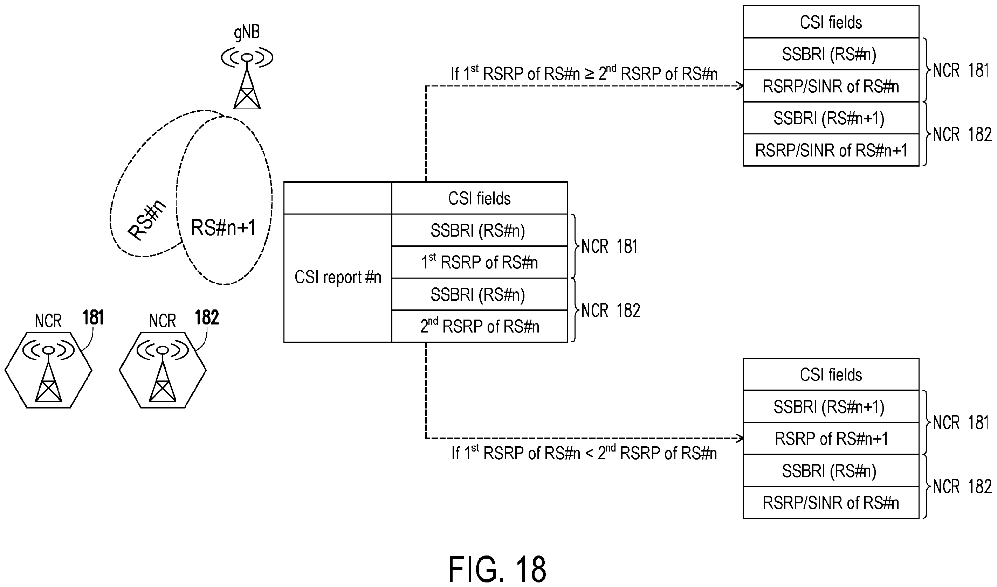

FIG. 18 illustrates a schematic diagram of reporting restriction with one beam index in a CSI report according to one embodiment of the present disclosure. In one embodiment, one beam index may be associated with one NCR in a CSI report. If the beam indexes reported by different NCRs are the same, only the beam index with the highest beam quality may be reported. For example, assume that NCR 181 and NCR 182 report the same beam index RS#n, If a first RSRP of RS#n measured by NCR 181 is greater or equal to a second RSRP of RS#n measured by NCR 182, the MT may report a CSI report indicating that the beam index (e.g., SSBRI) of RS#n is associated with NCR 181. If a he first RSRP of RS#n measured by NCR 181 is less than a second RSRP of RS#n measured by NCR 182, the MT may report a CSI report indicating that the beam index of RS#n is associated with NCR 182.

A UE (e.g., NCR-MT) may not expect the configured number of RSs for CSI report is less than the number of NCRs in the NCR group. If the configured number of RSs for CSI report is less than the number of NCRs in the NCR group, the CSI report may include a null information, wherein the null information may indicate that an NCR may not select a corresponding beam index. The null information may include the highest CRI/SSBRI value, the lowest CRI/SSBRI value, or the lowest RSRP/SINR value.

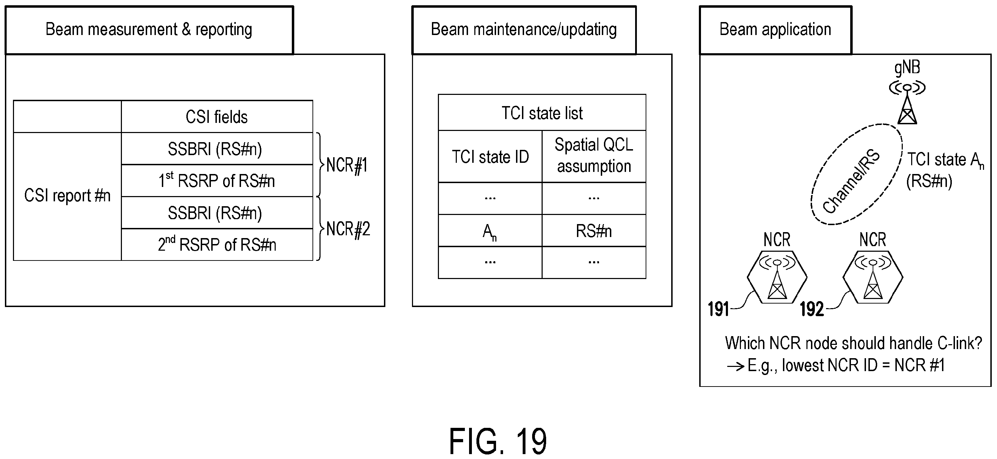

FIG. 19 illustrates a schematic diagram of implicit NCR node reception by NCR priority rule according to one embodiment of the present disclosure. If the same indexes corresponding to different NCRs are included in a CSI report, the channel/RS corresponding to the beam index may be received by an NCR with a predetermined rule. For example, the channel/RS may be received by the NCR with the lowest NCR ID, the highest NCR ID or the highest CSI quality among the multiple NCRs. For example, assume that the NCR ID of NCR 191 is NCR#1 and the NCR ID of NCR 192 is NCR#2. If NCR 191 and NCR 192 report the same beam index (e.g., RS#n), NCR 191 with the lowest NCR ID (e.g., NCR#1) may handle the C-link.

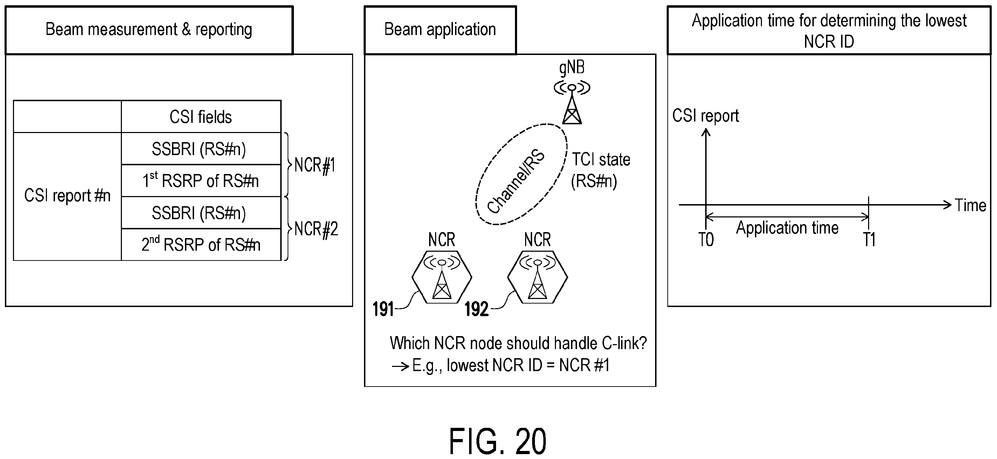

FIG. 20 illustrates a schematic diagram of control signaling transmission timeline corresponding to the implicit NCR node reception according to one embodiment of the present disclosure. The NCR-MT may be configured with an application time for determining an NCR (e.g., the NCR with the lowest NCR ID, the highest NCR ID, or the highest CSI quality) from multiple NCRs according to the predetermined rule. The application time may start from the least symbols of the CSI report in PUCCH/PUSCH (e.g., the application time may start from the time point T0 and stop at the time point T1). After the application time, the determined NCR may be used for the latest CSI report.

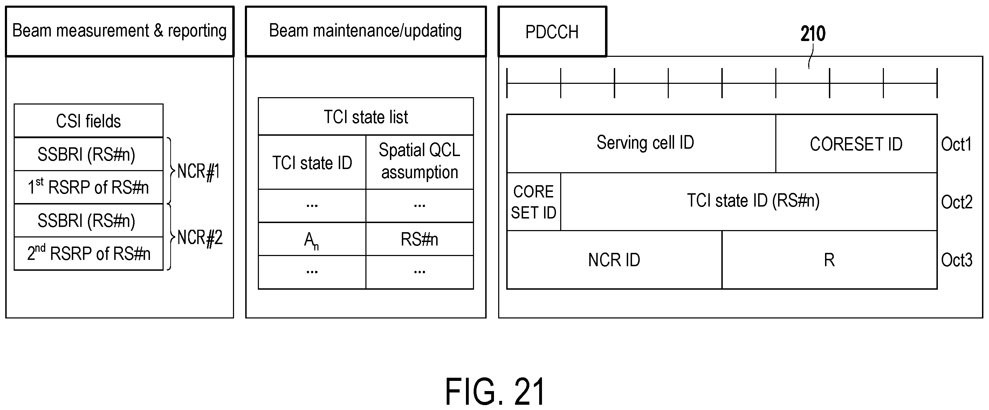

FIG. 21 illustrates a schematic diagram of NCR node reception by indicating an NCR ID associated with a TCI state according to one embodiment of the present disclosure. A CORESET may be activated with a TCI state or a CORESET may be associated with an NCR, wherein the SS set monitoring associated with the CORESET may be received by the NCR with the activated TCI state. For example, if CORESET configuration 210 received by the NCR-MT includes a CORESET ID, an NCR ID of NCR#1, and a TCI state ID corresponding to RS#n, the SS set monitoring associated with the CORESET ID may be received by NCR#1 with an activated TCI state corresponding to the TCI state ID (or RS#n). A DL channel may be received by NCR#1 according to the NCR ID.

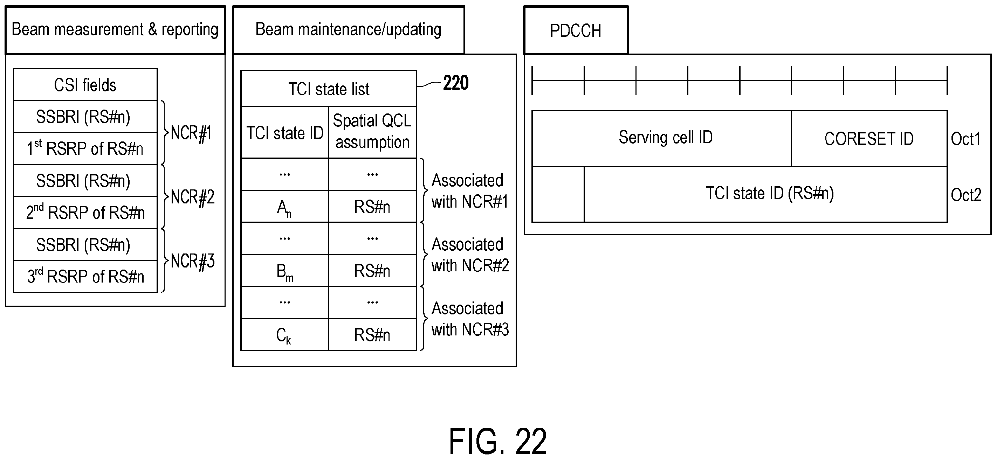

FIG. 22 illustrates a schematic diagram of sub-lists for each NCR within a TCI state list according to one embodiment of the present disclosure. One TCI state list may include one or more sub-lists associated with one or more NCRs respectively. The number of configured TCI states associated with each NCR or the total number of configured TCI states within the TCI state list may be indicated by the TCI state list, wherein the number of configured TCI states associated with one specific NCR may be less than or equal to the total number of configured TCI states within the TCI state list. For example, the TCI state list 220 may include a sub-list for NCR# 1, a sub-list for NCR#2, and a sub-list for NCR#3. The sub-list for NCR#1 may include information associated with TCI state IDs $A_1$, $A_2$, ..., $A_n$, and may indicate that the number of the configured TCI states for NCR#1 is "n", wherein "n" is a positive integer. The sub-list for NCR#2 may include information associated with TCS state IDs $B_1$, $B_2$, ..., $B_m$, and may indicate that the number of the configured TCI states for NCR#2 is "m", wherein "m" is a positive integer. The sub-list for NCR#3 may include information associated with TCI state IDs $C_1$, $C_2$, ..., $C_k$, and may indicate that the number of the configured TCI states for NCR#3 is "k", wherein "k" is a positive integer. It should be noted that $n+m+k \leq$ the maximum number of configured TCI states within the TCI state list 220.

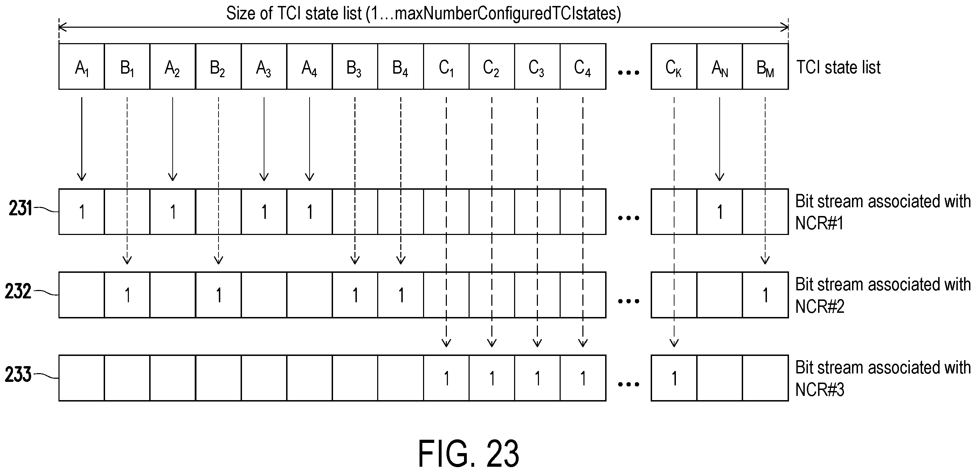

FIG. 23 illustrates a schematic diagram of configuring a sub-list for each NCR based on a bitmap according to one embodiment of the present disclosure. An NCR-MT may be configured with a TCI state list and one or more bit streams corresponding to different NCRs respectively. The size of the TCI state list may be determined according to the parameter *maxNumberConfiguredTCIstates.* The size of the bit streams may be equal to the size of the TCI state list, wherein the m-th bit stream may be associated with the m-th NCR, and the n-th configured TCI state of the TCI state list may be corresponded to the n-th bit of the bit stream. If the n-th bit of the m-th bit stream is set to "1", the corresponding n-th configured TCI state may be associated with the m-th NCR. If the n-th bit of the m-th bit stream is set to "0", the corresponding n-th configured TCI state may not be associated with the m-th NCR. For example, if a bit corresponding to the TCI state $A_1$ of the bit stream 231 is set to "1", the NCR may determine that the TCI state $A_1$ is associated with NCR#1. If a bit corresponding to the TCI state $B_1$ of the bit stream 232 is set to "1", the NCR may determine that the TCI state $B_1$ is associated with NCR#2. If a bit corresponding to the TCI state $C_1$ of the bit stream 233 is set to "1", the NCR may determine that the TCI state $C_1$ is associated with NCR#3.

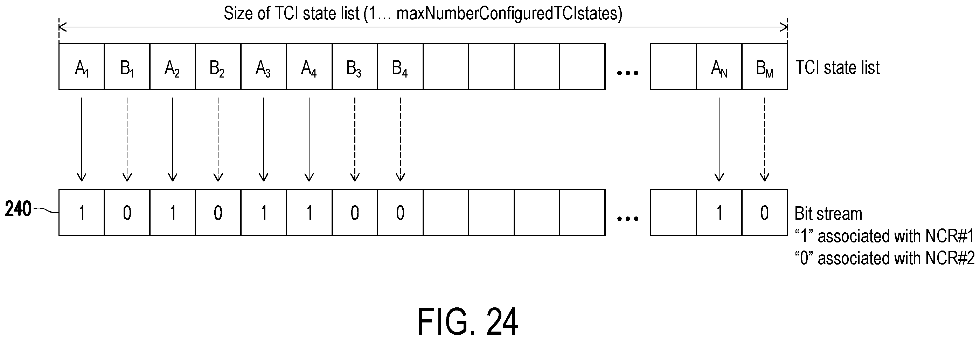

FIG. 24 illustrates a schematic diagram of configuring a sub-list for each NCR based on a bitmap according to one embodiment of the present disclosure. An NCR-MT may be configured with a TCI state list and at least one bit stream. The size of the TCI state list may be determined according to the parameter *maxNumberConfiguredTCIstates.* The size of the bits stream may be equal to the size of the TCI state list. The n-th configured TCI state of the TCI state list may be corresponded to the n-bit of the bit stream. If the n-th bit of the bit stream is set to "1", the corresponding n-th configured TCI state may be associated with a first NCR ID (e.g., NCR#1). If the n-th bit of the bit stream is set to "0", the corresponding n-th configured TCI state may be associated with a second NCR ID (e.g., NCR#2). For example, since the first bit of the bit stream 240 is set to "1", the NCR-MT may determine that the TCI state $A_1$ corresponding to the first bit is associated with NCR#1. Since the second bit of the bit stream 240 is set to "0", the NCR-MT may determine that the TCI state $B_1$ corresponding to the second bit is associated with NCR#2.

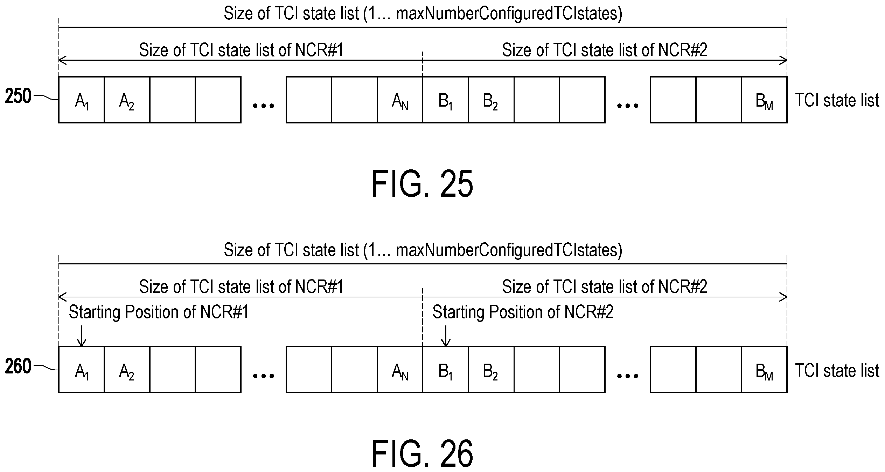

FIG. 25 illustrates a schematic diagram of configuring a sub-list for each NCR based on list segmentation according to one embodiment of the present disclosure. An NCR-MT may be configured with a TCI state list or a list of size for one or more NCRs. The multiple sizes in the list of size may respectively correspond to multiple NCRs (or multiple NCR IDs) in a list of NCR. For example, assume that the size of a TCI state list is N+M, where N and M are positive integers. If a list of size is configured to the NCR, and the list of size indicates that the size of TCI state list (or sub-list) of NCR#1 is equal to N, the NCR-MT may determine that the first N bits of the bit streams 250 of the TCI state list are associated with NCR#1, and the remaining M bits of the bit streams 250 are associated with NCR#2.

FIG. 26 illustrates a schematic diagram of configuring a sub-list for each NCR based on list segmentation according to one embodiment of the present disclosure. An NCR-MT may be configured with a TCI state list, a size of TCI state list for one or more NCRs, or a starting position for the one or more NCRs. For example, if the size of TCI state list for NCR#1 is equal to N and the starting position for NCR#1 is the first bit, the NCR-MT may determine that N bits of the bit stream 260 of the TCI state list are associated with NCR#1, wherein the starting position of the N bits is the first bit of the bit stream 260. If the size of TCI state list for NCR#2 is equal to M and the starting position for NCR#2 is the (N+1)-th bit, the NCR-MT may determine that M bits of the bit stream 260 are associated with NCR#2, wherein the starting position of the M bits is the (N+1)-th bit of the bit stream 260.

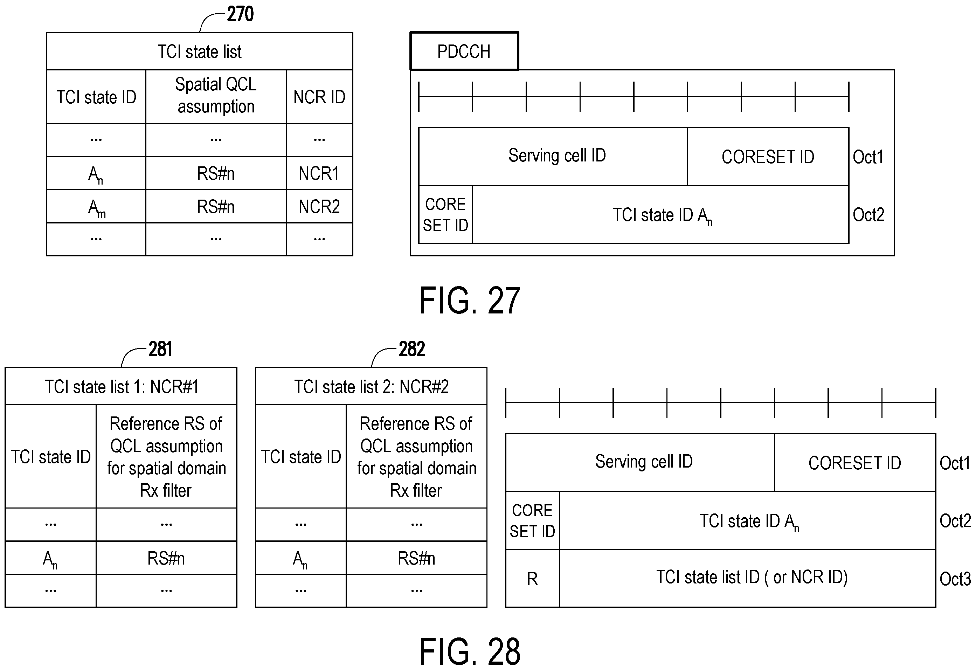

FIG. 27 illustrates a schematic diagram of configuring a TCI state with an NCR ID according to one embodiment of the present disclosure. An NCR-MT may be configured with one or more TCI state configurations, wherein each TCI state configuration may include a mapping relationship among a TCI state ID, a spatial QCL assumption, and an NCR ID. The NCR-MT may receive the downlink channel according to the NCR ID. For example, if the TCI state list 270 configured to the NCR-MT include a TCI state configuration corresponding to the TCI state ID $A_n$ and the ID NCR1, the NCR-MT may receive the PDCCH through a NCR corresponding to the ID NCR1 with an activate TCI state corresponding to the TCI state ID $A_n$.

FIG. 28 illustrates a schematic diagram of a tagged TCI state list of an NCR according to one embodiment of the present disclosure. An NCR-MT may be configured with one or more TCI state lists, wherein each TCI state list may be associated with an NCR or may be configured with an NCR. The CORESET may be activated with a TCI state. The CORESET may be associated with a TCI state list ID, wherein the SS set monitoring associated with the CORESET may be received by the corresponding NCR with the activated TCI state. For example, the NCR-MT may be configured with a TCI state list 281 tagged with ID NCR#1 or a TCI state list 282 tagged with ID NCR#2. The CORESET may indicate that the control resources should be applied by the NCR corresponding to the TCI state list ID with the activated TCI state $A_n$.

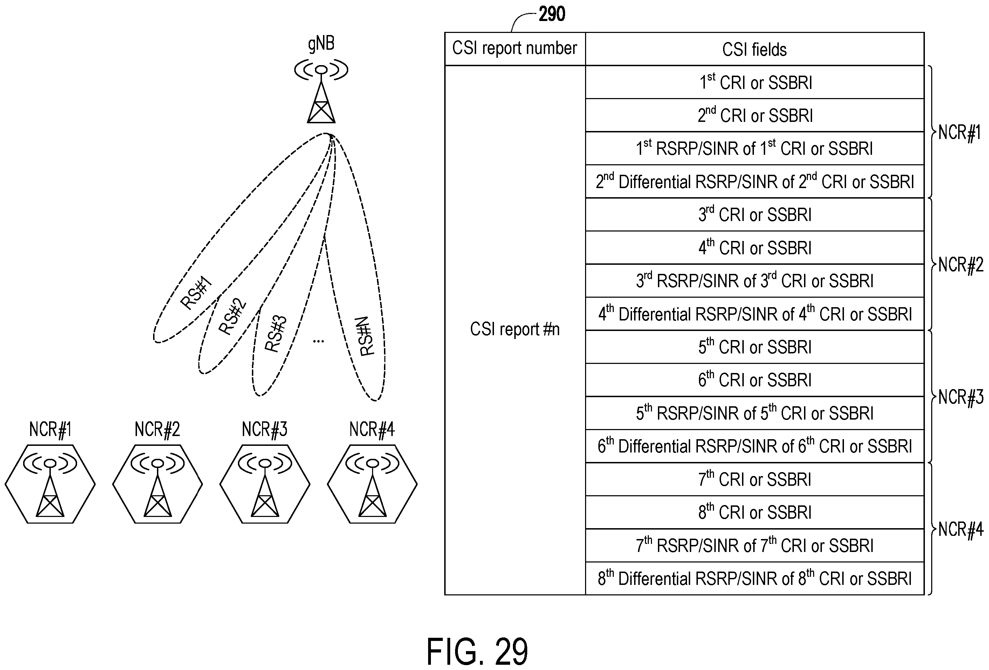

FIG. 29 illustrates a schematic diagram of beam reporting for each NCR according to one embodiment of the present disclosure. An NCR-MT may be configured with the number of reporting beams for each NCR. For example, two reporting beams for each NCR may be included in one CSI report. Assume that an NCR group includes NCR#1, NCR#2, NCR#3, and NCR#4. 1$^{st}$ CRI or SSBRI and 2$^{nd}$ CRI or SSBRI for NCR#1, 3$^{rd}$ CRI or SSBRI and 4$^{th}$ CRI or SSBRI for NCR#2, 5$^{th}$ CRI or SSBRI and 6$^{th}$ CRI or SSBRI for NCR#3, and 7$^{th}$ CRI or SSBRI and 8$^{th}$ CRI or SSBRI for NCR#4 may be included in the CSI report 290.

The number of RS in a CSI report may be determined according to the number of reported RS per cell and the number of cells. If the number of reported RS per cell or the number of cells is greater than 1, the NCR-MT may use differential L1-RSRP based reporting. Specifically, the NCR-MT may include the largest value of RSRP (or SINR) and a differential L1-RSRP (or SINR) in the CSI report, wherein the largest value of RSRP may be quantized to a first value, and the differential L1-RSRP may be quantized to a second value. The differential L1-RSRP value is with a reference to the largest measured RSRP.

Referring to CSI report 290 in FIG. 29. With regard to NCR#1, the NCR-MT may include the 1$^{st}$ RSRP corresponding to the 1$^{st}$ CRI and the 2$^{nd}$ differential RSRP corresponding to the 2$^{nd}$ CRI in the CSI report 290. The RSRP corresponding to the 2$^{nd}$ CRI may be determined based on the 2$^{nd}$ differential RSRP with reference to the 1$^{st}$ RSRP. For example, the RSRP corresponding to the 2$^{nd}$ CRI may be equal to the sum of the 1$^{st}$ RSRP and the 2$^{nd}$ differential RSRP.

In one example, the bit-width for RSRP/SINR field of the CSI report (e.g., CSI report 290) may be equal to 7 bits. The bit-width for differential RSRP/SINR field of the CSI report may be equal to 4 bits. The number of NCR within the NCR group (e.g., the NCR group corresponding to the CSI report 290) may be equal to 4. Total bit-width for measurement quality (i.e., total bit-width of CSI report 290) may be equal to (7+4)*4 = 44 bits.

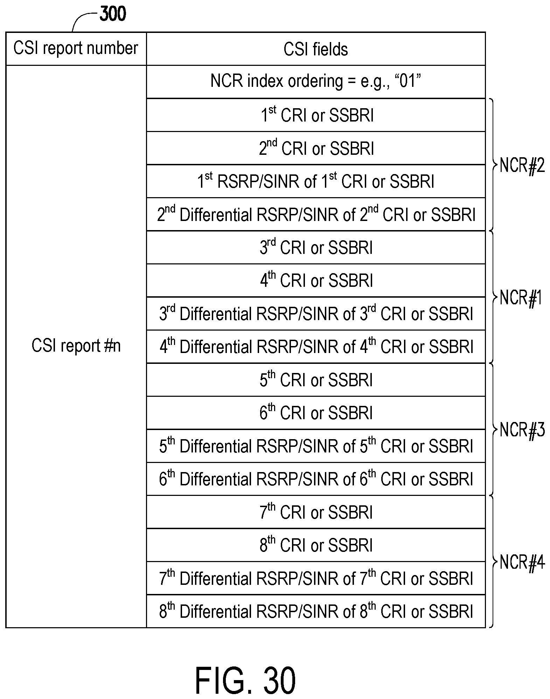

FIG. 30 illustrates a schematic diagram of beam reporting with NCR group based CSI compression according to one embodiment of the present disclosure. An NCR-MT may be configured with the number of reporting beams for each NCR within an NCR group. For example, two reporting beams for each NCR may be included in one CSI report. The CSI report may further include an NCR index ordering field corresponding to the NCR group. The NCR associated with the fields in the CSI report may be determined according to the NCR index ordering.

For example, assume that an NCR group includes NCR#1, NCR#2, NCR#3, and NCR#4, and the CSI report 300 corresponding to the NCR group may include a first sub-list including the 1$^{st}$ CRI, the 2$^{nd}$ CRI, the 1$^{st}$ RSRP, and the 2$^{nd}$ differential RSRP, a second sub-list including the 3$^{rd}$ CRI, the 4$^{th}$ CRI, the 3$^{rd}$ differential RSRP, and the 4$^{th}$ differential RSRP, a third sub-list including the 5$^{th}$ CRI, the 6$^{th}$ CRI, the 5$^{th}$ differential RSRP, and the 6$^{th}$ differential RSRP, and a fourth sub-list including the 7$^{th}$ CRI, the 8$^{th}$ CRI, the 7$^{th}$ differential RSRP, and the 8$^{th}$ differential RSRP. The value "00" of the NCR index ordering field represents the ordering {NCR#1, NCR#2, NCR#3, NCR#4}. The value "01" of the NCR index ordering field represents the ordering {NCR#2, NCR#1, NCR#3, NCR#4}. The value "10" of the NCR index ordering field represents the ordering {NCR#3, NCR#1, NCR#2, NCR#4}. The value "11" of the NCR index ordering field represents the ordering {NCR#4, NCR#1, NCR#2, NCR#3}. If the value of the NCR index ordering field is "01", the first sub-list, the second sub-list, the third sub-list, and the fourth sub-list of the CSI report 300 may be associated with NCR#2, NCR#1, NCR#3, and NCR#4 respectively.

In one example, the bit-width for NCR index ordering field of the CSI report may be equal $\lceil \log_2 K^{NCR} \rceil = 2$, where $K^{NCR}$ is the number of NCRs within the NCR group. The bit-width for RSRP/SINR field of the CSI report (e.g., CSI report 300) may be equal to 7 bits. The bit-width for differential RSRP/SINR field of the CSI report may be equal to 4 bits. The number of NCR within the NCR group (e.g., the NCR group corresponding to the CSI report 300) $K^{NCR}$ may be equal to 4. Total bit-width for measurement quality (i.e., total bit-width of CSI report 300) may be equal to 2+7+7*4 = 37 bits.

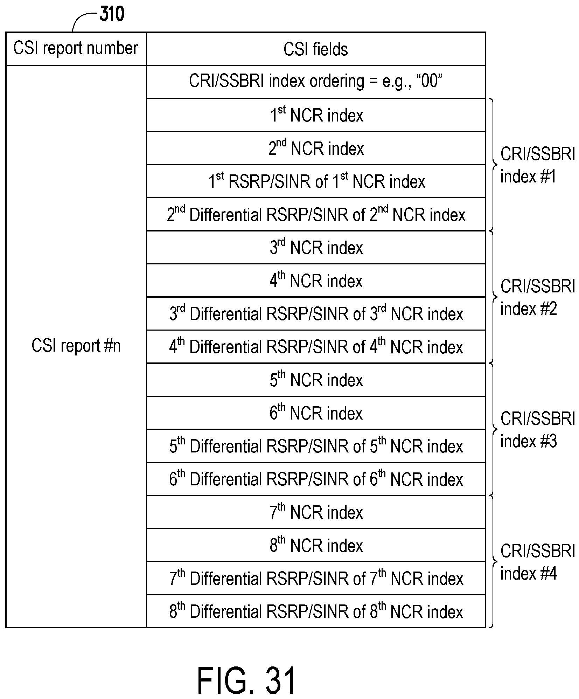

FIG. 31 illustrates a schematic diagram of NCR reporting according to one embodiment of the present disclosure. An NCR-MT may be configured with the number of reporting beams for each NCR within an NCR group. For example, one reporting beam for one or more NCRs may be included in one CSI report. The CSI report may further include one or more differential RSRP (or SINR) for each NCR, wherein the RSRP corresponding to each NCR may be determined based on the corresponding differential RSRP with the reference to the reporting beam. The CSI report may further include an NCR index ordering field corresponding to the NCR group. The NCR associated with the fields in the CSI report may be determined according to the NCR index ordering.

For example, assume that an NCR group includes CRI/SSBRI index #1, CRI/SSBRI index #2, CRI/SSBRI index #3, and CRI/SSBRI index #4, and the CSI report 310 corresponding to the NCR group may include a first sub-list including the 1$^{st}$ NCR index, the 2$^{nd}$ NCR index, the 1$^{st}$ RSRP, and the 2$^{nd}$ differential RSRP, a second sub-list including the 3$^{rd}$ NCR index, the 4$^{th}$ NCR index, the 3$^{rd}$ differential RSRP, and the 4$^{th}$ differential RSRP, a third sub-list including the 5$^{th}$ NCR index, the 6$^{th}$ NCR index, the 5$^{th}$ differential RSRP, and the 6$^{th}$ differential RSRP, and a fourth sub-list including the 7$^{th}$ NCR index, the 8$^{th}$ NCR index, the 7$^{th}$ differential RSRP, and the 8$^{th}$ differential RSRP. The value "00" of the CRI/SSBRI index ordering field represents the ordering {CRI/SSBRI index #1, CRI/SSBRI index #2, CRI/SSBRI index #3, CRI/SSBRI index #4}. The value "01" of the CRI/SSBRI index ordering field represents the ordering {CRI/SSBRI index #2, CRI/SSBRI index #1, CRI/SSBRI index #3, CRI/SSBRI index #4}. The value "10" of the CRI/SSBRI index ordering field represents the ordering {CRI/SSBRI index #3, CRI/SSBRI index #1, CRI/SSBRI index #2, CRI/SSBRI index #4}. The value "11" of the CRI/SSBRI index ordering field represents the ordering {CRI/SSBRI index #4, CRI/SSBRI index #1, CRI/SSBRI index #2, CRI/SSBRI index #3}. If the value of the NCR index ordering field is "00", the first sub-list, the second sub-list, the third sub-list, and the fourth sub-list of the CSI report 310 may be associated with NCR#1, NCR#2, NCR#3, and NCR#4 respectively.

With regard to CRI/SSBRI index #1, the RSRP corresponding to the 2$^{nd}$ NCR index may be determined based on the 2$^{nd}$ differential RSRP with reference to the 1$^{st}$ RSRP. For example, the RSRP corresponding to the 2$^{nd}$ NCR index may be equal to the sum of the 1$^{st}$ RSRP and the 2$^{nd}$ differential RSRP. Similarly, the RSRP corresponding to the 3$^{rd}$ NCR index may be determined based on the 3$^{rd}$ differential RSRP with reference to the 1$^{st}$ RSRP. For example, the RSRP corresponding to the 3$^{rd}$ NCR index may be equal to the sum of the 1$^{st}$ RSRP and the 3$^{rd}$ differential RSRP.

With regard to the beam management schemes disclosed in FIG. 1 to FIG. 31, if none of those schemes are configured to a UE, the UE may apply the scheme discloses in FIG. 19 as a default scheme.

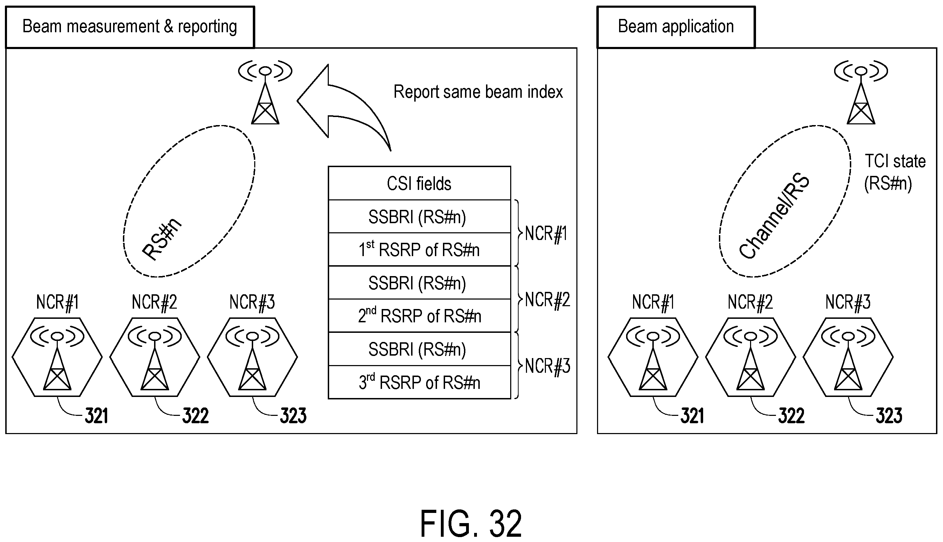

Beam management for a C-link of an NCR group may be applied through more than one NCR nodes. FIG. 32 illustrates a schematic diagram of enabling simultaneous reception according to one embodiment of the present disclosure. The same indexes (e.g., SSBRI) corresponding to different NCRs within an NCR group respectively may be included in one CSI report. If the beam index is applied to a channel/RS (e.g., operation mode B as shown in FIG. 13), it is not clear that how to enable simultaneous reception. For example, if NCR 321, NCR 322, and NCR 323 report the same beam index (e.g., SSBRI of RS#n) to the gNB and the beam index is applied to a channel/RS, the gNB would not know which two NCRs (e.g., NCR 321, NCR 322, or NCR 323) should handle the C-link so as to receive the channel/RS.

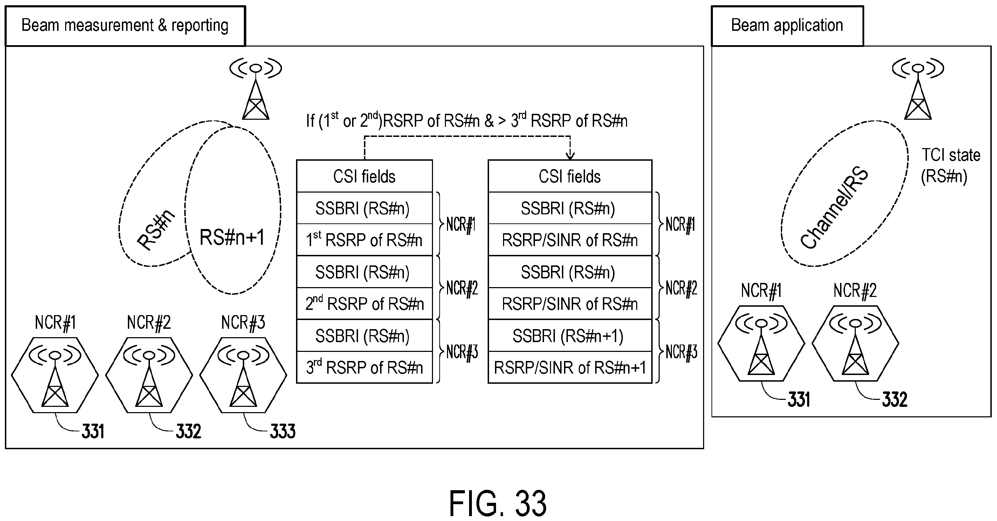

FIG. 33 illustrates a schematic diagram of one beam index associated with limited multiple NCR nodes in a CSI report according to one embodiment of the present disclosure. If the same indexes (e.g., SSBRI) respectively corresponding to different NCRs are included in a CSI report, one beam index may be associated with a limited number of NCR nodes in a CSI report, wherein the limited number is less than or equal to the total number of NCR nodes within the NCR group. The NCR group may be configured to include a number of NCR nodes in the CSI report, wherein the number of the NCR nodes may be associated with one beam index with the highest beam quality.

In one embodiment, the limited number of NCR nodes associated with one beam index may be determined based on the measurement results (e.g., RSRP). If the measurement result of a first NCR node for a specific beam index is greater than the measurement result of a second NCR node for the same beam index, the priority of associating the specific beam index with the first NCR node may be higher than the priority of associating the specific beam index with the second NCR node. For example, assume that the NCR group is allowed to associate one beam index with at most two NCR nodes in a CSI report. If NCR 331, NCR 332, and NCR 333 report the same SSBRI RS#n, the NCR-MT may have to select two NCR nodes from NCR 331, NCR 332, and NCR 333. Since both the RSRP of RS#n measured by NCR 331 and the RSRP of RS#n measured by NCR 332 are greater than the RSRP of RS#n measured by NCR 333, the NCR-MT may associate the SSBRI RS#n with NCR 331 and NCR 332 in the CSI report.

In one embodiment, a CSI report may include null information which means that the corresponding NCR does not select a beam index. The null information may include the highest CRI/SSBRI value, the lowest CRI/SSBRI value, or the lowest RSRP/SINR value.

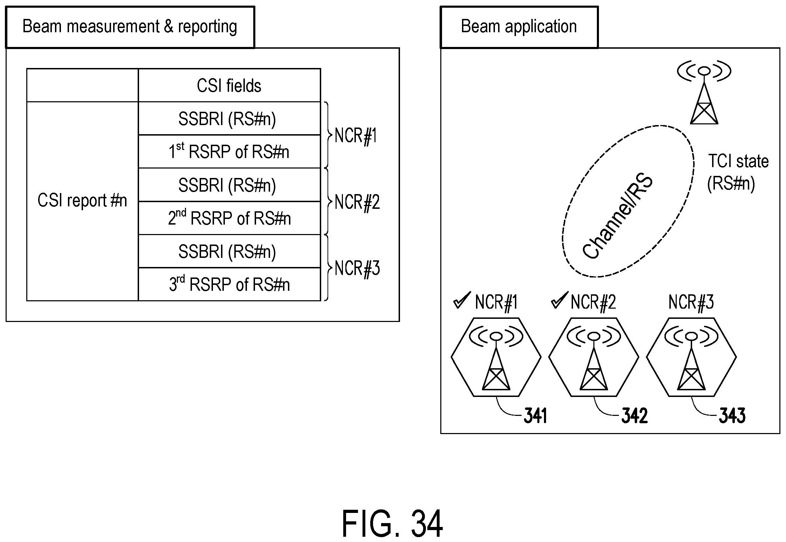

FIG. 34 illustrates a schematic diagram of implicit NCR node reception based on the beam reporting according to one embodiment of the present disclosure. If the same indexes corresponding to different NCRs are included in a CSI report, the channel/RS corresponding to the beam index may be receive by one or more NCRs with a predetermined rule. The NCR-MT may be configured to select N NCR nodes (where N is a positive integer greater than one) from M NCR nodes within the NCR group for C-link simultaneous reception/transmission, where M is a positive integer greater than or equal to N. The NCR-MT may select N NCR nodes with the lowest N NCR IDs (or the highest N NCR IDs, the lowest N CSI qualities, the highest N CSI qualities) from the NCR group. For example, assume that the NCR ID of NCR 341 is NCR#1, the NCR ID of NCR 342 is NCR#2, and the NCR ID of NCR 343 is NCR#3. If NCR 341, NCR 342, and NCR 343 report the same beam index (e.g., RS#n), NCR 341 and NCR 342 with the lowest two NCR ID (e.g., NCR#1 and NCR#2) may handle the C-link.

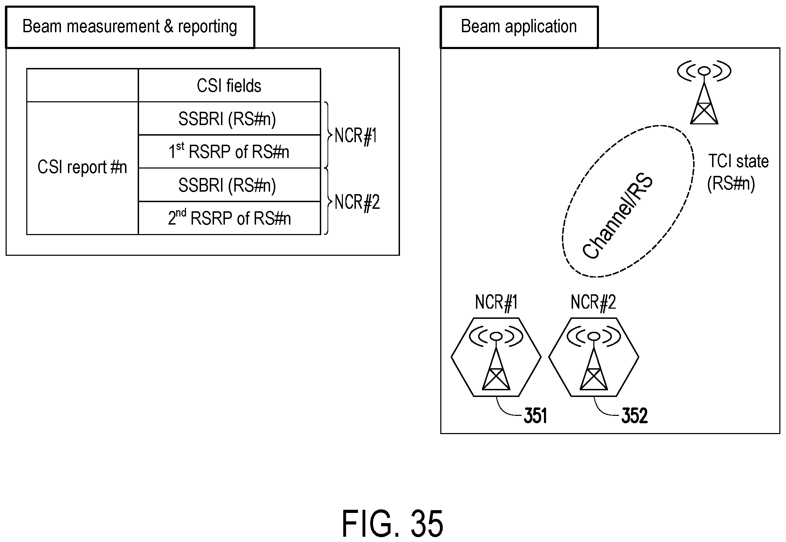

FIG. 35 illustrates a schematic diagram of implicit NCR node reception based on the beam reporting according to one embodiment of the present disclosure. If the same indexes corresponding to N different NCR nodes (where N is a positive integer) are included in a CSI report, the NCR-MT may be configured to use the N NCR nodes for C-link simultaneous reception/transmission. The channel/RS may be received by the NCR nodes report the same beam index. For example, assume that the NCR ID of NCR 351 is NCR#1 and the NCR ID of NCR 352 is NCR#2. If NCR 351 and NCR 352 report the same beam index (e.g., RS#n), the channel/RS may be received by both NCR 351 and NCR 352.

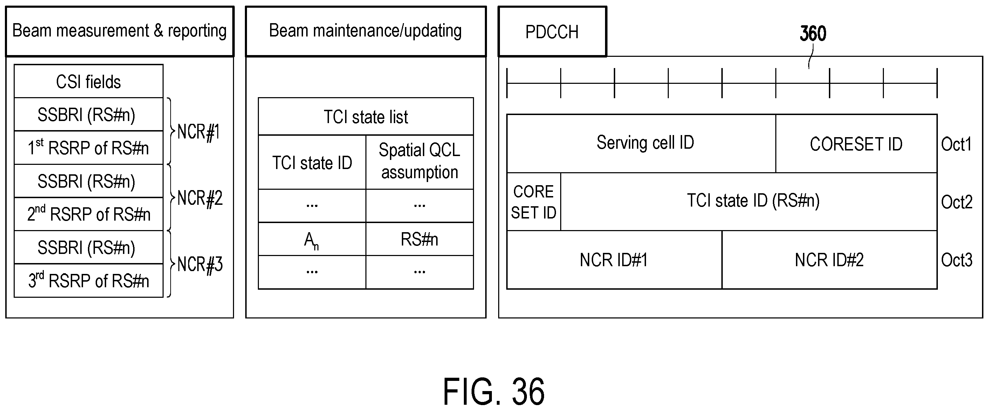

FIG. 36 illustrates a schematic diagram of NCR node reception by indicating NCR IDs associated with a TCI state according to one embodiment of the present disclosure. A CORESET may be activated with a TCI state or a CORESET may be associated with one or more NCRs, wherein the SS set monitoring associated with the CORESET may be received by one or more NCRs with the activated TCI state. For example, if CORESET configuration 360 received by the NCR-MT includes a CORESET ID, an NCR ID of NCR#1, an NCR ID of NCR#2, and a TCI state ID corresponding to RS#n, the SS set monitoring associated with the CORESET ID may be receive by NCR#1 and NCR#2 with an activated TCI state corresponding to the TCI state ID (or RS#n).

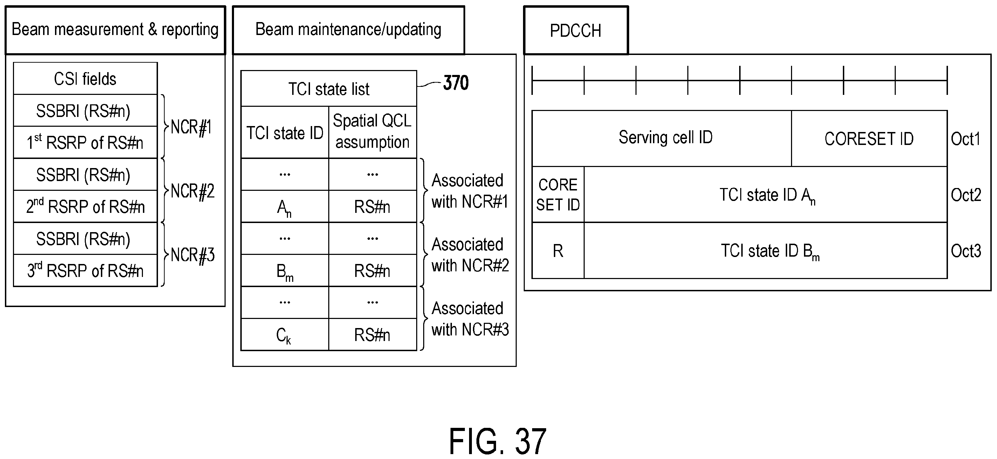

FIG. 37 illustrates a schematic diagram of sub-lists for each NCR within a TCI state list according to one embodiment of the present disclosure. Considering few beams cover one or more NCRs, one TCI state list may include multiple sub-lists associated with multiple NCRs respectively. The number of configured TCI states associated multiple NCRs or the total number of configured TCI states within the TCI state list may be indicated by the TCI state list, wherein the number of configured TCI states associated with multiple NCRs may be less than or equal to the total number of configured TCI states within the TCI state list. For example, the TCI state list 370 may include a sub-list for NCR#1, a sub-list for NCR#2, and a sub-list for NCR#3.

The sub-list for NCR#1 may include information associated with TCI state IDs $A_1, A_2, ..., A_n$, and may indicate that the number of the configured TCI states for NCR#1 is "n", wherein "n" is a positive integer. The sub-list for NCR#2 may include information associated with TCS state IDs $B_1, B_2, ..., B_m$, and may indicate that the number of the configured TCI states for NCR#2 is "m", wherein "m" is a positive integer. The sub-list for NCR#3 may include information associated with TCI state IDs $C_1, C_2, ..., C_k$, and may indicate that the number of the configured TCI states for NCR#3 is "k", wherein "k" is a positive integer. It should be noted that $n+m+k \leq$ the maximum number of configured TCI states within the TCI state list 370.

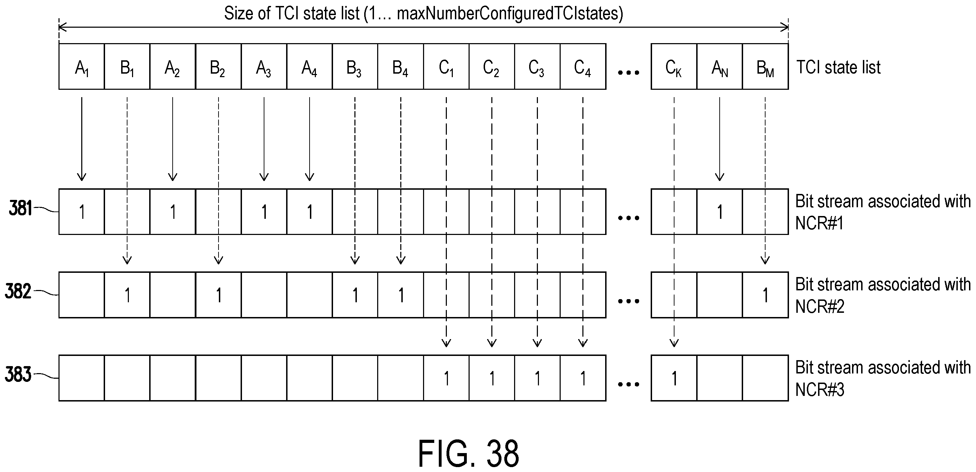

FIG. 38 illustrates a schematic diagram of configuring a sub-list for each NCR based on a bitmap according to one embodiment of the present disclosure. An NCR-MT may be configured with a TCI state list and one or more bit streams corresponding to different NCRs respectively. The size of the TCI state list may be determined according to the parameter *maxNumberConfiguredTCIstates.* The size of the bit streams may be equal to the size of the TCI state list, wherein the m-th bit stream may be associated with the m-th NCR, and the n-th configured TCI state of the TCI state list may be corresponded to the n-th bit of the bit stream. If the n-th bit of the m-th bit stream is set to "1", the corresponding n-th configured TCI state is associated with the m-th NCR. For example, if a bit corresponding to the TCI state $A_1$ of the bit stream 381 is set to "1", the NCR may determine that the TCI state $A_1$ is associated with NCR#1. If a bit corresponding to the TCI state $B_1$ of the bit stream 382 is set to "1", the NCR may determine that the TCI state $B_1$ is associated with NCR#2. If a bit corresponding to the TCI state $C_1$ of the bit stream 383 is set to "1", the NCR may determine that the TCI state $C_1$ is associated with NCR#3.

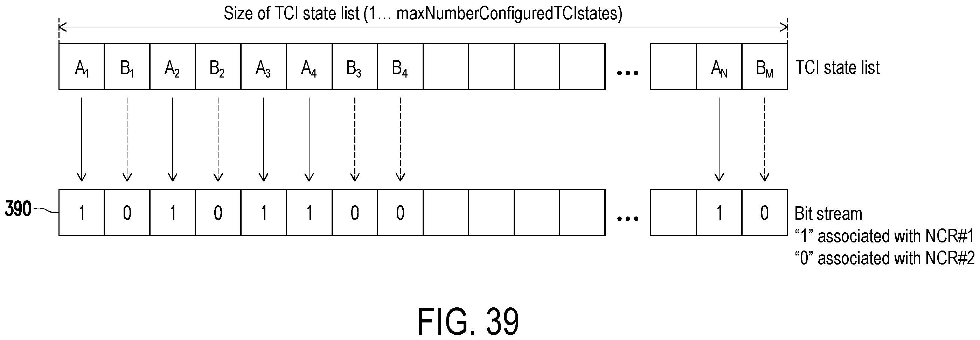

FIG. 39 illustrates a schematic diagram of configuring a sub-list for each NCR based on a bitmap according to one embodiment of the present disclosure. An NCR-MT may be configured with a TCI state list and at least one bit stream. The size of the TCI state list may be determined according to the parameter *maxNumberConfiguredTCIstates.* The size of the bits stream may be equal to the size of the TCI state list. The n-th configured TCI state of the TCI state list may be corresponded to the n-bit of the bit stream. If the n-th bit of the bit stream is set to "1", the corresponding n-th configured TCI state may be associated with a first NCR ID (e.g., NCR#1). If the n-th bit of the bit stream is set to "0", the corresponding n-th configured TCI state may be associated with a second NCR ID (e.g., NCR#2). For example, since the first bit of the bit stream 390 is set to "1", the NCR-MT may determine that the TCI state $A_1$ corresponding to the first bit is associated with NCR#1. Since the second bit of the bit stream 390 is set to "0", the NCR-MT may determine that the TCI state $B_1$ corresponding to the second bit is associated with NCR#2.

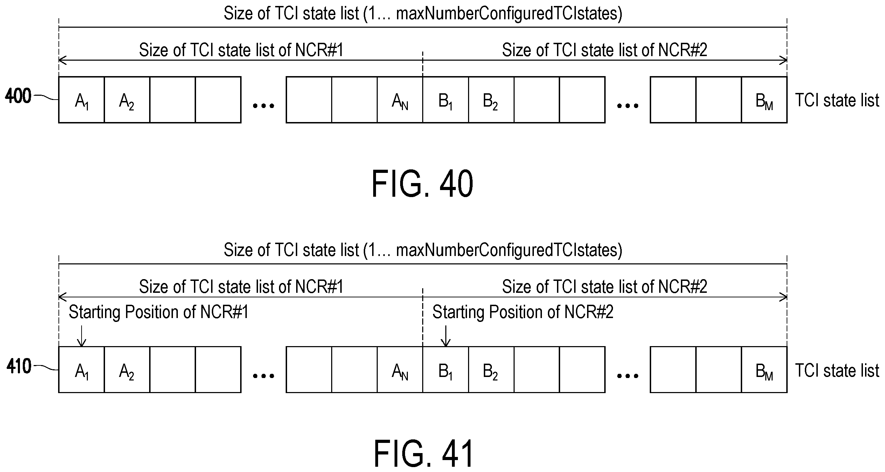

FIG. 40 illustrates a schematic diagram of configuring a sub-list for each NCR based on list segmentation according to one embodiment of the present disclosure. An NCR-MT may be configured with a TCI state list or a list of size for one or more NCRs. The multiple sizes in the list of size may respectively correspond to multiple NCRs (or multiple NCR IDs) in a list of NCR. For example, assume that the size of a TCI state list is N+M, where N and M are positive integers. If a list of size is configured to the NCR, and the list of size indicates that the size of TCI state list (or sub-list) of NCR#1 is equal to N, the NCR-MT may determine that the first N bits of the bit streams 400 of the TCI state list are associated with NCR#1, and the remaining M bits of the bit streams 400 are associated with NCR#2.

FIG. 41 illustrates a schematic diagram of configuring a sub-list for each NCR based on list segmentation according to one embodiment of the present disclosure. An NCR-MT may be configured with a TCI state list, a size of TCI state list for one or more NCRs, or a starting position for the one or more NCRs. For example, if the size of TCI state list for NCR#1 is equal to N and the starting position for NCR#1 is the first bit, the NCR-MT may determine that N bits of the bit stream 410 of the TCI state list are associated with NCR#1, wherein the starting position of the N bits is the first bit of the bit stream 410. If the size of TCI state list for NCR#2 is equal to M and the starting position for NCR#2 is the (N+1)-th bit, the NCR-MT may determine that M bits of the bit stream 410 are associated with NCR#2, wherein the starting position of the M bits is the (N+1)-th bit of the bit stream 410.

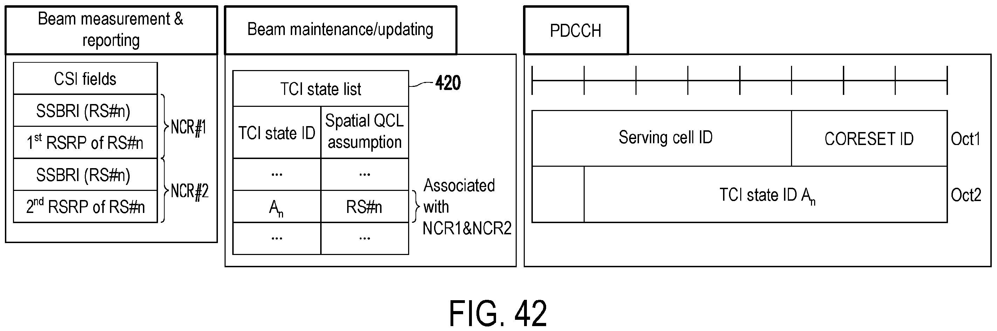

FIG. 42 illustrates a schematic diagram of sub-lists for each NCR within a TCI state list according to one embodiment of the present disclosure. Considering few beams cover one or more NCRs, one TCI state list may include one or more sub-lists associated with multiple NCRs. The number of configured TCI states associated multiple NCRs or the total number of configured TCI states within the TCI state list may be indicated by the TCI state list, wherein the number of configured TCI states associated with multiple NCRs may be less than or equal to the total number of configured TCI states within the TCI state list. For example, the TCI state list 420 may include a sub-list for both NCR#1 and NCR#2.

The sub-list for both NCR#1 and NCR#2 may include information associated with TCI state IDs $A_1$, $A_2$, ..., $A_n$, and may indicate that the number of the configured TCI states for both NCR#1 and NCR#2 is "n", wherein "n" is a positive integer. It should be noted that n ≤ the maximum number of configured TCI states within the TCI state list 420.

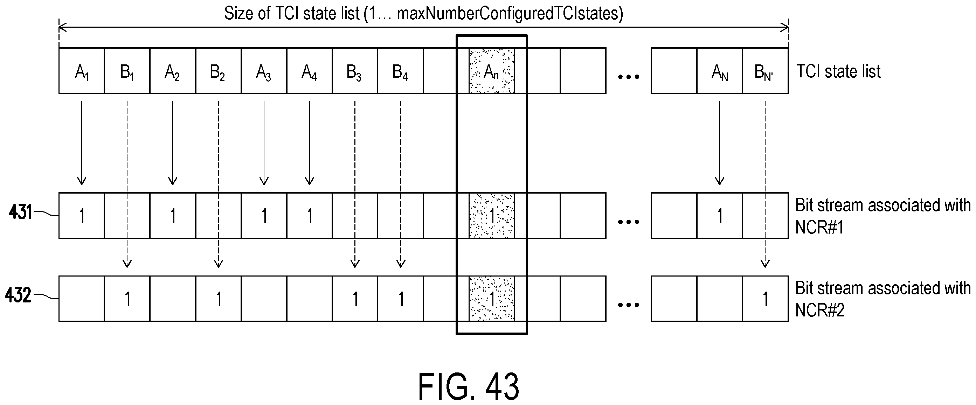

FIG. 43 illustrates a schematic diagram of configuring a sub-list for each NCR based on a bitmap according to one embodiment of the present disclosure. An NCR-MT may be configured with a TCI state list and one or more bit streams corresponding to different NCRs respectively. The size of the TCI state list may be determined according to the parameter *maxNumberConfiguredTCIstates.* The size of the bit streams may be equal to the size of the TCI state list, wherein the m-th bit stream may be associated with the m-th NCR, and the n-th configured TCI state of the TCI state list may be corresponded to the n-th bit of the bit stream. If the n-th bit of the m-th bit stream is set to "1", the corresponding n-th configured TCI state is associated with the m-th NCR. For example, if a bit corresponding to the TCI state $A_n$ of the bit stream 431 is set to "1", the NCR may determine that the TCI state $A_n$ is associated with NCR# 1. If a bit corresponding to the TCI state $A_n$ of the bit stream 432 is also set to "1", the NCR may determine that the TCI state $A_n$ is also associated with NCR#2.

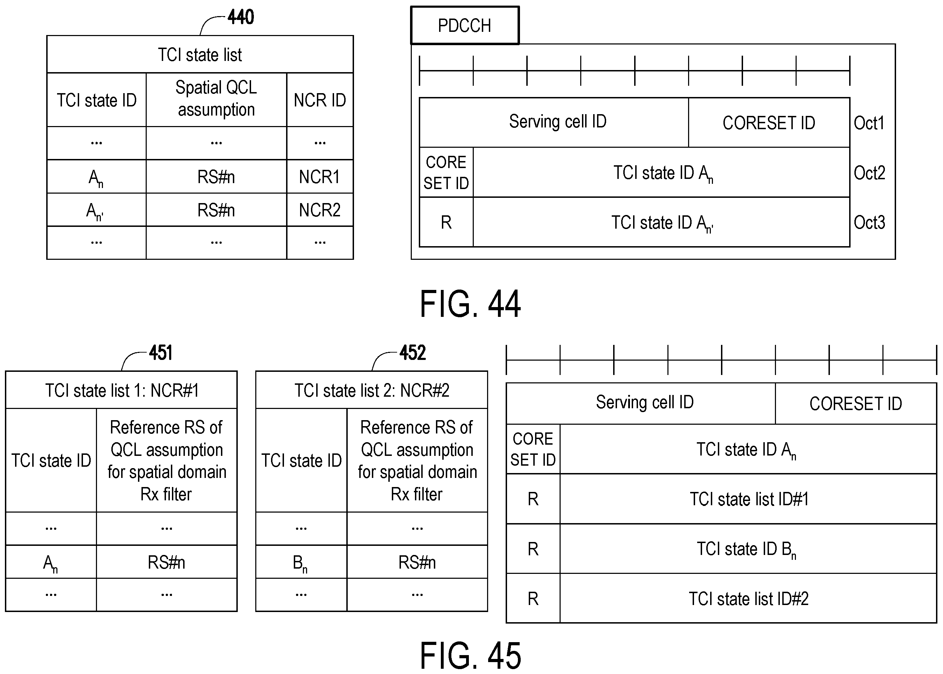

FIG. 44 illustrates a schematic diagram of a TCI state configured with an NCR ID according to one embodiment of the present disclosure. An NCR-MT may be configured with one or more TCI state configurations, wherein each TCI state configuration may include a mapping relationship among a TCI state ID, a spatial QCL assumption, and an NCR ID. The NCR-MT may receive the downlink channel according to the NCR ID. For example, if the TCI state list 440 configured to the NCR-MT includes a TCI state configuration corresponding to the TCI state ID $A_n$ and the ID NCR1, the NCR-MT may receive the PDCCH through a NCR corresponding to the ID NCR1 with an activate TCI state corresponding to the TCI state ID $A_n$ (or corresponding to spatial QCL assumption RS#n). If the TCI state list 440 configured to the NCR-MT include a TCI state configuration corresponding to the TCI state ID $A_{n'}$ and the ID NCR2, the NCR-MT may receive the PDCCH through a NCR corresponding to the ID NCR2 with an activate TCI state corresponding to the TCI state ID $A_{n'}$ (or corresponding to spatial QCL assumption RS#n).

FIG. 45 illustrates a schematic diagram of a tagged TCI state list of an NCR according to one embodiment of the present disclosure. An NCR-MT may be configured with one or more TCI state lists, wherein each TCI state list may be associated with an NCR or may be configured with an NCR. The CORESET may be activated with one or more TCI states. The CORESET may be associated with one or more TCI state list IDs, wherein the SS set monitoring associated with the CORESET may be received by the corresponding NCR with the activated TCI state. For example, the NCR-MT may be configured with a TCI state list 451 tagged with ID NCR#1 or a TCI state list 452 tagged with ID NCR#2. The CORESET may indicate that the control resources should be applied by NCR#1 corresponding to the TCI state list ID#1 (i.e., NCR#1) with the activated TCI state $A_n$ or by NCR#2 corresponding to the TCI state list ID#2 (i.e., NCR#2) with the activated TCI state $B_n$.

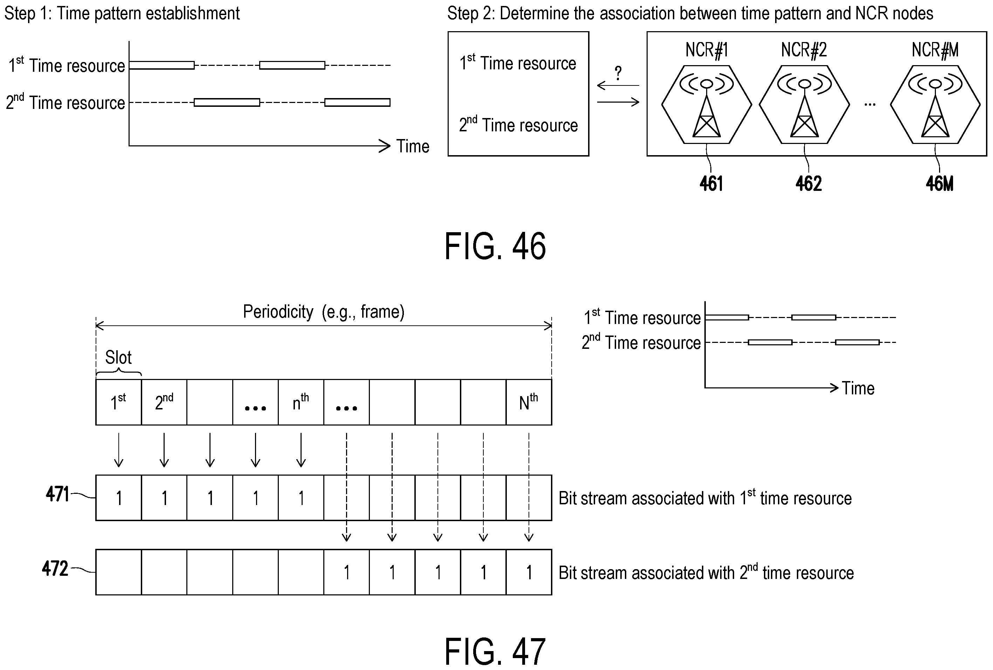

Beam management for a C-link of an NCR group may be applied through more than one NCR nodes by TDM. FIG. 46 illustrates a schematic diagram of enabling simultaneous reception according to one embodiment of the present disclosure. The same indexes (e.g., SSBRI) corresponding to different NCRs within an NCR group respectively may be included in one CSI report. If the beam index is applied to a channel/RS by TDM (e.g., operation mode C as shown in FIG. 13), it is not clear that how to enable simultaneous reception. For example, if NCR 461, NCR 462, and NCR 46M report the same beam index and NCR 461 and NCR 462 are selected to handle the C-link, the gNB would not know how to assign the 1st time resource and the 2nd time resource to NCR 461 and NCR 462.

FIG. 47 illustrates a schematic diagram of NCR reception based on a time pattern bitmap according to one embodiment of the present disclosure. A NCR-MT may be configured with a periodic resource configuration, wherein the periodic resource configuration may include a periodicity (e.g., frame, half frame, slot, slot group including one or more slots, symbol, symbol group including one or more symbols, or ns), a periodic resource identity, a symbol offset, a duration in symbols, or a beam index. The NCR-MT may further be configured with one or more bit streams. The size of the bit stream may be equal to the size of the periodicity. The m-th bit stream may be associated with the m-th time resource for the m-th NCR. The n-th time unit (e.g., slot, symbol group, or half frame) of the periodicity may be corresponded to the n-th bit of the m-th bit stream. If the n-th bit of the m-th bit stream is set to "1", the corresponding n-th time unit may be associated with the m-th NCR. If the n-th bit of the m-th bit stream is set to "0", the corresponding n-th time unit may not be associated with the m-th NCR. For example, if the bit corresponding the 1st slot in the bit stream 471 is set to "1", the 1st slot may be assigned to the 1st time resource. If the bit corresponding to the N-th slot in the bit stream 472 is set to "1", the N-th slot may be assigned to the 2nd time resource.

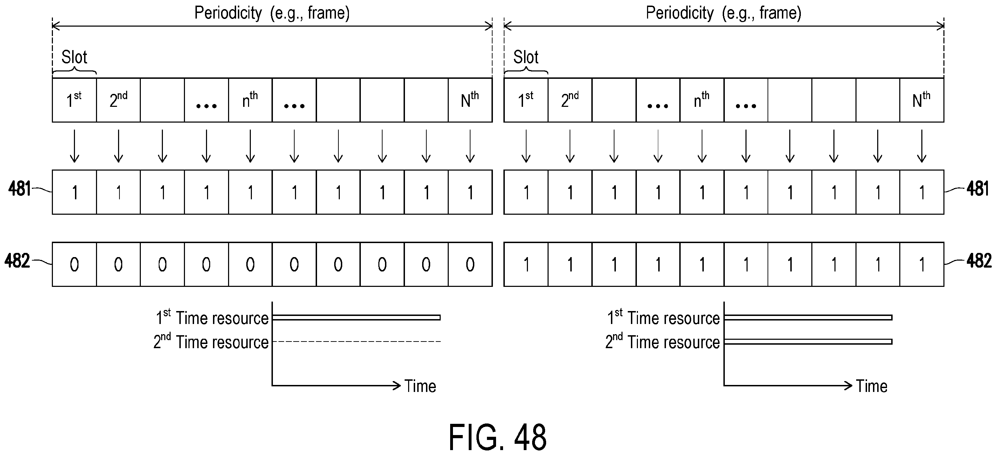

FIG. 48 illustrates a schematic diagram of NCR reception based on a time pattern bitmap according to one embodiment of the present disclosure. If the bit corresponding to a specific slot is set to "1" in a single bit stream, the specific slot may be associated with a single NCR corresponding to the bit stream. If the bit corresponding to a specific slot is set to "1" in multiple bit streams, the specific slot may be associated with multiple NCRs respectively corresponding to the multiple bit streams. For example, if the bit corresponding to the 1st slot is set to "1" in bit stream 481 and is set to "0" in bit stream 482, the 1st slot may be assigned only to the 1st time resource corresponding to bit stream 481. If the bit corresponding to the 1st slot is set to "1" in both bit stream 481 and bit stream 482, the 1st slot may be assigned to the 1st time resource corresponding to bit stream 481 and to the 2nd time resource corresponding to bit stream 482.

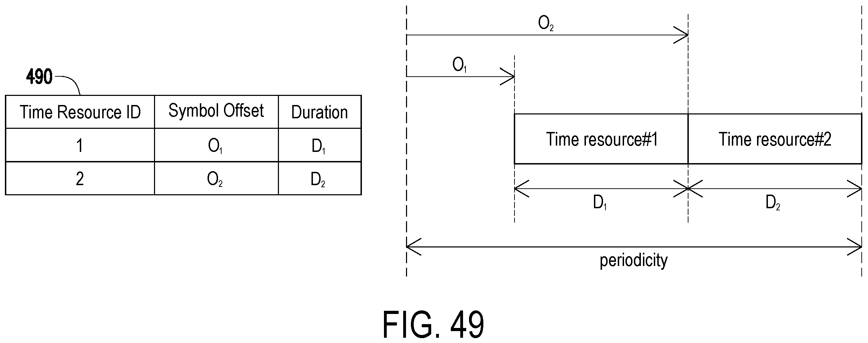

FIG. 49 illustrates a schematic diagram of a time resource configuration according to one embodiment of the present disclosure. An NCR may be configured with a time resource configuration, wherein the time resource configuration may include a periodicity of time pattern of NCR node reception, a time resource ID, an NCR ID, a time offset (e.g., symbols, slots, or ns), or a duration (e.g., symbols, slots, or ns). For example, time resource configuration 490 may include a mapping relationship among time source ID 1, symbol offset $O_1$, and duration Di and a mapping relationship among time resource ID 2, symbol offset $O_2$, and duration $D_2$. Time resource #1 corresponding to time resource ID 1 may be determined according to symbol offset $O_1$ and duration $D_1$, wherein the starting time of the time resource #1 may be determined according to offset $O_1$. Time resource #2 corresponding to time resource ID 2 may be determined according to symbol offset $O_2$ and duration $D_2$, wherein the starting time of the time resource #2 may be determined according to offset $O_2$.

In one embodiment, the NCR may be provided by *periodicFwdRsrcSetToAddModList* which is a list of sets of resources for transmissions or receptions on the access link.

In one embodiment, a set of resources, from the list of sets of resources, may be provided by *NCR-PeriodicFwdResourceSet* and may occur with a periodicity provided by *periodicityAndOffset-r18.*

In one embodiment, a resource from the set of resources may be provided by *NCR-PeriodicFwdResource* and may include a pair of a time resource provided by *periodicTimeRsrc* and a beam with an index provided by *beamIndex.*

In one embodiment, the time resource starts at a slot may be offset by a number of slots provided by *periodicityAndOffset-r18* from the start of the period for the set of resources. The time resource starts at a symbol may be offset by *symbolOffset* from the start of the slot. The time resource may have a duration provided by *durationInSymbols* for a subcarrier spacing (SCS), wherein the SCS may be provided by *referenceSCS* and the *cyclicPrefix* of the active DL BWP.

In one embodiment, the NCR may be provided by *semiPersistentFwdRsrcSetToAddModList* which is a list of sets of resources for transmissions or receptions on the access link. The NCR Access Link Beam Indication MAC CE command can indicate a set of resources for the NCR to use or to stop using based on a corresponding identity provided by *semiPersistentFwdRsrcSetId.*

In one embodiment, the set of resources may be provided by *NCR-SemiPersistentFwdResourceSet* and may occur with a periodicity provided by *periodicityAndOffset-r18.*

In one embodiment, a resource from the set of resources may be provided by *NCR-SemiPersistentFwdResource.* The resource may include a pair of a time resource provided by *semiPersistentTimeRsrc* and a beam with an index provided by *beamIndex,* where *beamIndex* may be updated by the NCR Access Link Beam Indication MAC CE command.

In one embodiment, the time resource starts at a slot may be offset by a number of slots provided by *periodicityAndOffset*-r18 from the start of the period for the set of resources. The time resource starts at a symbol may be offset by *symbolOffset* from the start of the slot. The time resource may have a duration provided by *durationInSymbols* for a SCS, wherein the SCS may be provided by *referenceSCS* and the *cyclicPrefix* of the active DL BWP.

In one embodiment, the NCR does not expect overlapping time resources provided by either *NCR-PeriodicFwdResourceSet* or *NCR-SemiPersistentFwdResourceSet* to be associated with different beam indexes.

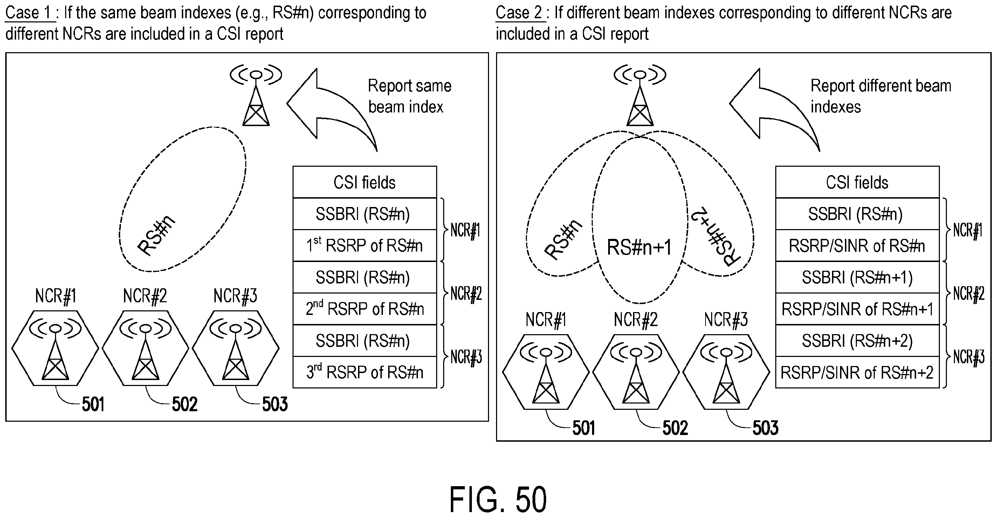

FIG. 50 illustrates a schematic diagram of determining the association between time pattern and NCR nodes according to one embodiment of the present disclosure. With regard to the operation mode C as shown in FIG. 13, if the same beam indexes (e.g., RS#n) respectively corresponding to different NCRs (e.g., NCR 501, 502, or 503) are included in a CSI report, it is not clear how to schedule time resources (e.g., time resources of RS#n) for each NCR. If different beam indexed (e.g., RS#n, RS#n+1, or RS#n+2) respectively corresponding to different NCRs (e.g., NCR 501, 502, or 503) are included in a CSI report, it is not clear how to schedule time resources (e.g., time resources of RS#n, RS#n+1, or RS#n+2) for each NCR.

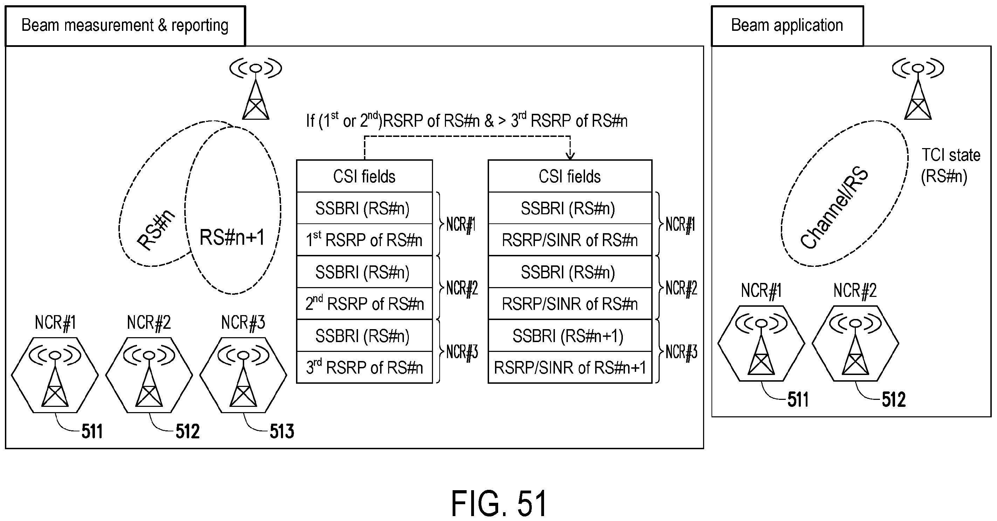

FIG. 51 illustrates a schematic diagram of restricted beam reporting according to one embodiment of the present disclosure. If the same indexes (e.g., SSBRI) respectively corresponding to different NCRs are included in a CSI report, one beam index may be associated with a limited number of NCR nodes in a CSI report, wherein the limited number is less than or equal to the total number of NCR nodes within the NCR group. The NCR group may be configured to include a number of NCR nodes in the CSI report, wherein the number of the NCR nodes may be associated with one beam index with the highest beam quality.

In one embodiment, the limited number of NCR nodes associated with one beam index may be determined based on the measurement results (e.g., RSRP). If the measurement result of a first NCR node for a specific beam index is greater than the measurement result of a second NCR node for the same beam index, the priority of associating the specific beam index with the first NCR node may be higher than the priority of associating the specific beam index with the second NCR node. For example, assume that the NCR group is allowed to associate one beam index with at most two NCR nodes in a CSI report. If NCR 511, NCR 512, and NCR 513 report the same SSBRI RS#n, the NCR-MT may have to select two NCR nodes from NCR 511, NCR 512, and NCR 513. Since both the RSRP of RS#n measured by NCR 511 and the RSRP of RS#n measured by NCR 512 are greater than the RSRP of RS#n measured by NCR 513, the NCR-MT may associate the SSBRI RS#n with NCR 511 and NCR 512 in the CSI report.

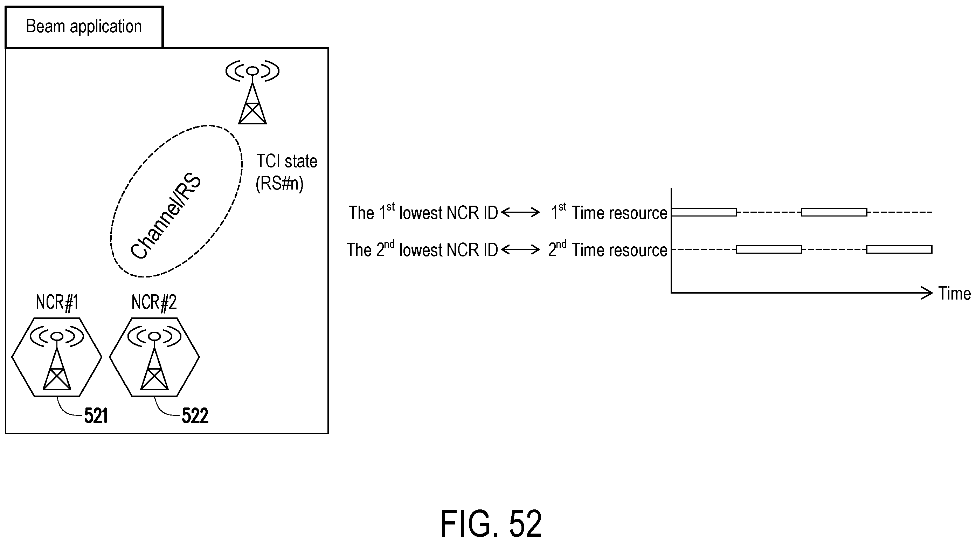

FIG. 52 illustrates a schematic diagram of NCR hopping with common TCI state according to one embodiment of the present disclosure. An NCR group may be configured with a time resource configuration, wherein the time resource configuration may indicate one or more time resources in time domain. If a channel/RS could be received by M NCR nodes (where M is a positive integer greater than 1), the channel/RS received by the m-th lowest NCR ID may apply the m-th time resource in time domain, the channel/RS received by the m-th highest NCR ID may apply the m-th time resource in time domain, the channel/RS received by the NCR of the m-th lowest CSI quality may apply the m-th time resource in time domain, or the channel/RS received by the NCR of the m-th highest CSI quality may apply the m-th time resource in time domain, wherein $1 \leq m \leq M$. For example, assume that a channel/RS could be receive by 2 NCR nodes. The channel/RS received by NCR 521 with the lowest ID NCR#1 may apply the $1^{st}$ time resource, and the channel/RS received by NCR 522 with the second lowest ID NCR#2 may apply the $2^{nd}$ time resource.

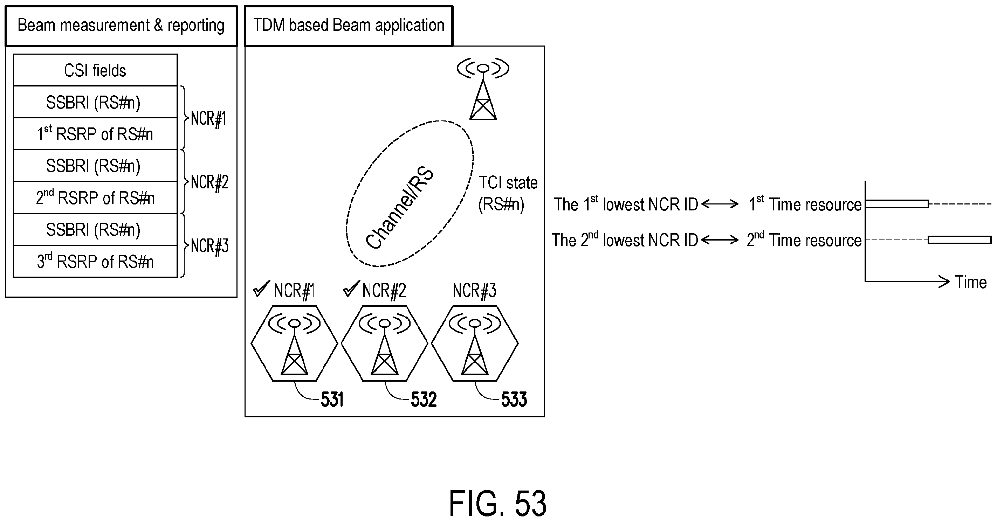

FIG. 53 illustrates a schematic diagram of implicit NCR node reception according to one embodiment of the present disclosure. If the same indexes corresponding to different NCRs are included in a CSI report, the channel/RS corresponding to the beam index may be received by one or more NCRs according to one or more configured time resources. The NCR-MT may be configured to select N NCR nodes (where N is a positive integer greater than one) from M NCR nodes within the NCR group for C-link simultaneous reception/transmission, where M is a positive integer greater than or equal to N. The channel/RS received by the m-th lowest NCR ID may apply the m-th time resource in time domain, the channel/RS received by the m-th highest NCR ID may apply the m-th time resource in time domain, the channel/RS received by the NCR of the m-th lowest CSI quality may apply the m-th time resource in time domain, or the channel/RS received by the NCR of the m-th highest CSI quality may apply the m-th time resource in time domain, wherein $1 \leq m \leq M$.

For example, assume that the NCR ID of NCR 531 is NCR#1, the NCR ID of NCR 532 is NCR#2, and the NCR ID of NCR 5333 is NCR#3. If NCR 531, NCR 532, and NCR 533 report the same beam index (e.g., RS#n), NCR 531 and NCR 532 with the lowest two NCR ID (e.g., NCR#1 and NCR#2) may handle the C-link. The channel/RS received by NCR 531 with the lowest NCR ID (i.e., NCR#1) may apply the $1^{st}$ time resource and the channel/RS received by NCR 532 with the second lowest NCR ID (i.e., NCR#2) may apply the $2^{nd}$ time resource.

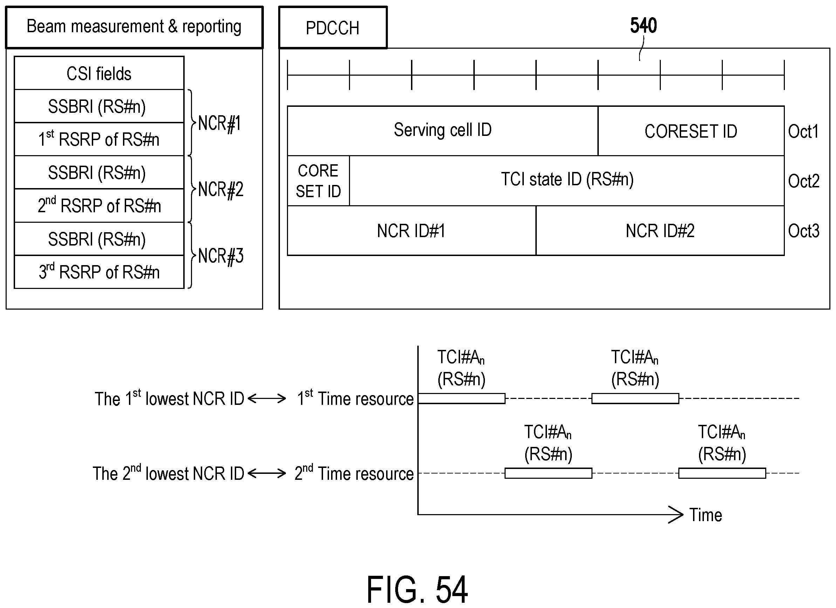

FIG. 54 illustrates a schematic diagram of indicating NCR IDs associated with a TCI state according to one embodiment of the present disclosure. Assume that the same beam indexes (e.g., RS#n) respectively corresponding to different NCRs are included in a CSI report. If the beam index is applied to a channel/RS, the channel/RS received by the m-th NCR (e.g., NCR with the m-th lowest NCR ID or NCR with the m-th highest NCR ID) may apply the m-th time resource in time domain, wherein the channel/RS may be indicated/activated/configured with a TCI state. The TCI state may be associated with one or more NCR IDs. For example, if CORESET configuration 540 received by the NCR-MT includes a CORESET ID, an NCR ID of NCR#1, an NCR ID of NCR#2, and a TCI state ID corresponding to RS#n, the SS set monitoring associated with the CORESET ID may be receive by NCR#1 and NCR#2 with an activated TCI state corresponding to the TCI state ID (or RS#n), wherein the 1st time resource may be assigned to NCR#1 with the lowest NCR ID and the 2nd time resource may be assigned to NCR#2 with the second lowest NCR ID.

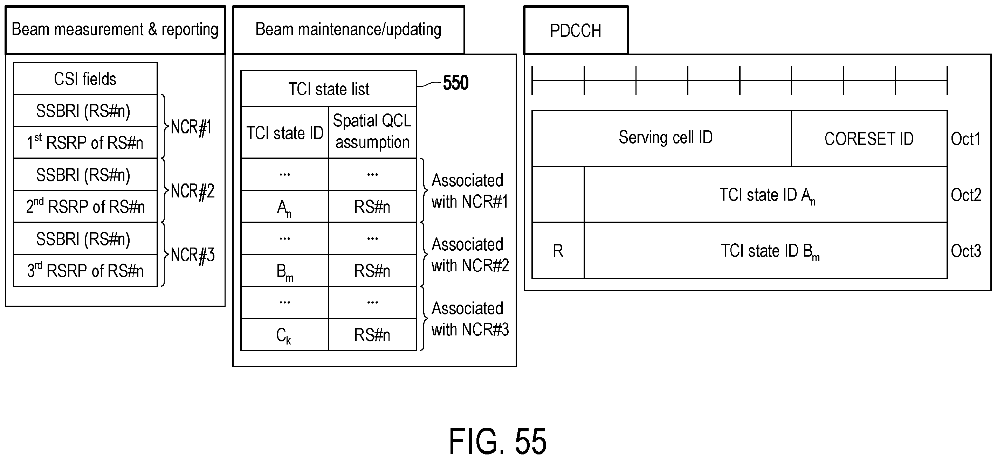

FIG. 55 illustrates a schematic diagram of sub-lists for each NCR within a TCI state list according to one embodiment of the present disclosure. Considering few beams cover one or more NCRs, one TCI state list may include multiple sub-lists associated with multiple NCRs respectively. The number of configured TCI states associated multiple NCRs or the total number of configured TCI states within the TCI state list may be indicated by the TCI state list, wherein the number of configured TCI states associated with multiple NCRs may be less than or equal to the total number of configured TCI states within the TCI state list. For example, the TCI state list 550 may include a sub-list for NCR#1, a sub-list for NCR#2, and a sub-list for NCR#3.

The sub-list for NCR#1 may include information associated with TCI state IDs $A_1, A_2, ..., A_n$, and may indicate that the number of the configured TCI states for NCR#1 is "n", wherein "n" is a positive integer. The sub-list for NCR#2 may include information associated with TCS state IDs $B_1, B_2, ..., B_m$, and may indicate that the number of the configured TCI states for NCR#2 is "m", wherein "m" is a positive integer. The sub-list for NCR#3 may include information associated with TCI state IDs $C_1, C_2, ..., C_k$, and may indicate that the number of the configured TCI states for NCR#3 is "k", wherein "k" is a positive integer. It should be noted that $n+m+k \leq$ the maximum number of configured TCI states within the TCI state list 550.

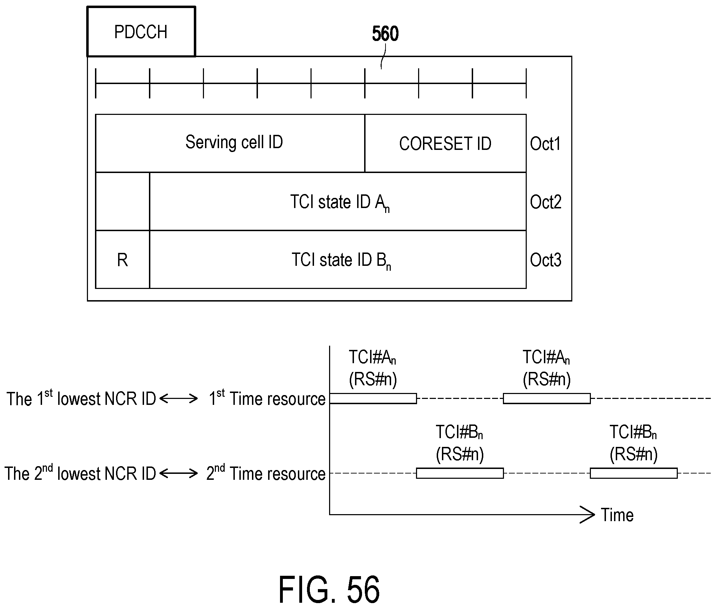

FIG. 56 illustrates a schematic diagram of sub-lists for each NCR within a TCI state list according to one embodiment of the present disclosure. A CORESET may be activated with one or more TCI states or be configured with one or more TCI states. The m-th activated/configured TCI state may be associated with the m-th time resource. For example, if CORESET configuration 560 received by the NCR-MT includes a CORESET ID, a TCI state ID corresponding to TCI state $A_n$ for RS#n, and a TCI state ID corresponding TCI state $B_n$ for RS#n, the 1st time resource of RS#n may apply the TCI state $A_n$, and the 2nd time resource of RS#n may apply the TCI state $B_n$.

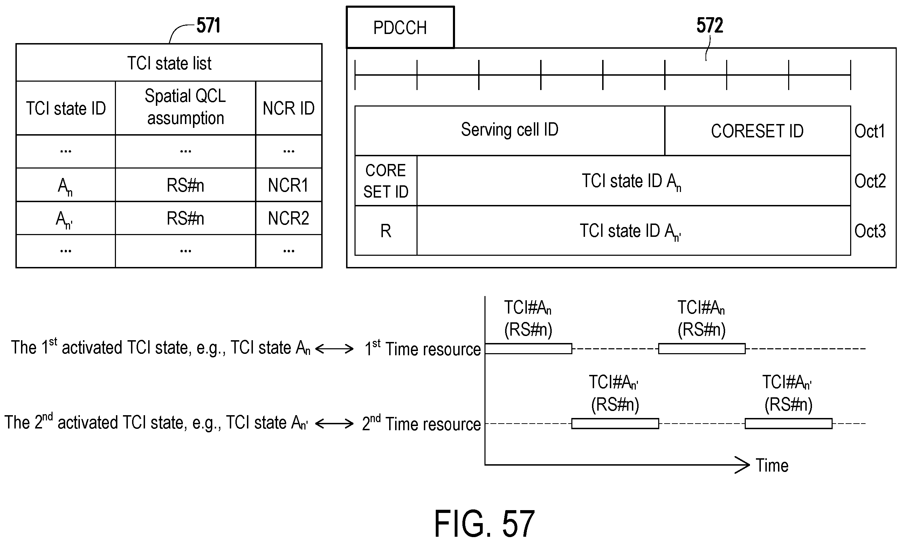

FIG. 57 illustrates a schematic diagram of a TCI state configured with an NCR ID according to one embodiment of the present disclosure. An NCR-MT may be configured with one or more TCI state configurations, wherein each TCI state configuration may include a mapping relationship among a TCI state ID, a spatial QCL assumption, and an NCR ID. The NCR-MT may receive the downlink channel according to the NCR ID. For example, if the TCI state list 571 configured to the NCR-MT includes a TCI state configuration corresponding to the TCI state ID $A_n$ and the ID NCR1, the NCR-MT may receive the PDCCH through a NCR corresponding to the ID NCR1 with an activate TCI state corresponding to the TCI state ID $A_n$ (or corresponding to spatial QCL assumption RS#n). If the TCI state list 571 configured to the NCR-MT include a TCI state configuration corresponding to the TCI state ID $A_{n'}$ and the ID NCR2, the NCR-MT may receive the PDCCH through a NCR corresponding to the ID NCR2 with an activate TCI state corresponding to the TCI state ID $A_{n'}$ (or corresponding to spatial QCL assumption RS#n).

A CORESET may be activated with one or more TCI states or be configured with one or more TCI states. The m-th activated/configured TCI state may be associated with the m-th time resource. For example, if CORESET configuration 572 received by the NCR-MT includes a CORESET ID, a TCI state ID corresponding to TCI state $A_n$ for RS#n, and a TCI state ID corresponding TCI state $A_{n'}$ for RS#n, the 1st time resource of RS#n for NCR1 may apply the TCI state $A_n$, and the 2nd time resource of RS#n for NCR2 may apply the TCI state $A_{n'}$.

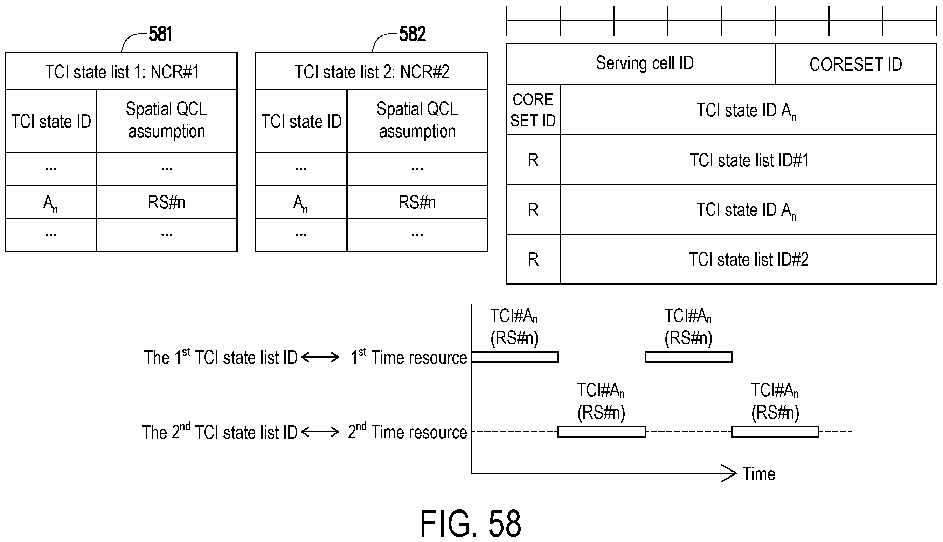

FIG. 58 illustrates a schematic diagram of a tagged TCI state list of an NCR according to one embodiment of the present disclosure. An NCR-MT may be configured with one or more TCI state lists, wherein each TCI state list may be associated with an NCR or may be configured with an NCR. The CORESET may be activated with one or more TCI states. The CORESET may be associated with one or more TCI state list IDs, wherein the SS set monitoring associated with the CORESET may be received by the corresponding NCR with the activated TCI state, and the m-th TCI state list may be associated with the m-th time resource.

For example, the NCR-MT may be configured with a TCI state list 581 tagged with ID NCR#1 or a TCI state list 582 tagged with ID NCR#2. The CORESET may indicate that the control resources should be applied by NCR#1 corresponding to the TCI state list ID#1 (i.e., NCR#1) with the activated TCI state $A_n$ and by NCR#2 corresponding to the TCI state list ID#2 (i.e., NCR#2) with the activated TCI state $A_n$ by TDM, wherein the 1st time resource may be assigned to NCR#1 corresponding to TCI state list 581 and the 2nd time resource may be assigned to NCR#2 corresponding to TCI state list 582.

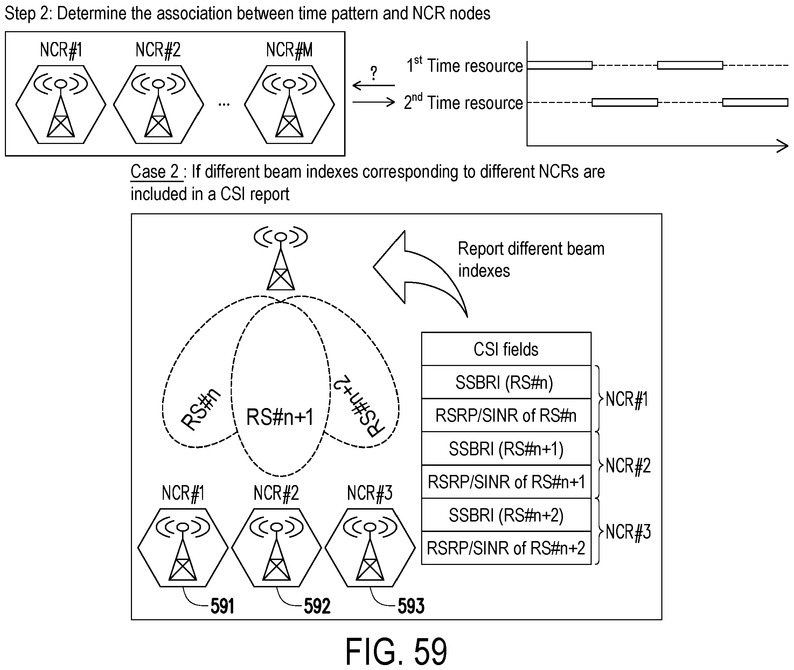

FIG. 59 illustrates a schematic diagram of determining the association between time pattern and NCR nodes according to one embodiment of the present disclosure. With regard to the operation mode C as shown in FIG. 13, if different beam indexes (e.g., RS#n, RS#n+1, or RS#n+2) respectively corresponding to different NCRs (e.g., NCR 591, 592, or 593) are included in a CSI report, it is not clear how to schedule time resources (e.g., time resources of RS#n, RS#n+1, or RS#n+2) for each NCR.

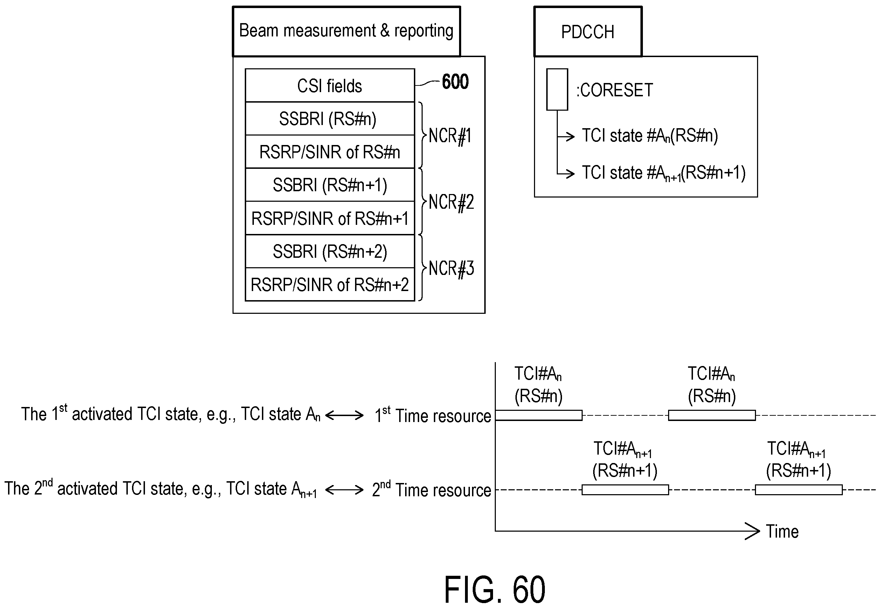

FIG. 60 illustrates a schematic diagram of NCR hopping with multiple TCI states according to one embodiment of the present disclosure. One CORESET may be activated with more than one TCI state. Assume that different beam indexes respectively corresponding to different NCRs are included in a CSI report. If more than one beam index is applied to a channel/RS, the channel/RS may be indicated/activated/configured with more than one TCI state, wherein each TCI state may be associated with one or more NCR IDs. One CORESET may be configured/activated with N TCI states, where N is a positive integer and one of N TCI states may map to one NCR. The m-th activated/configured TCI state may be associated with the m-th time resource. The channel/RS may be received by those NCRs according to the pre-configured time pattern.

For example, assume that beam index RS#n for NCR#1, beam index RS#n+1 for NCR#2, and beam index RS#n+2 for NCR#3 are included in CSI report 600. If a CORESET is activated/configured with two TCI states including TCI state $\#A_n$ corresponding to RS#n and TCI state $\#A_{n+1}$ corresponding to RS#n+1, the 1st time resource may be assigned to RS#n corresponding to the activated TCI state $\#A_n$ and the 2nd time resource may be assigned to RS#n+1 corresponding to the activated TCI state $\#A_{n+1}$.

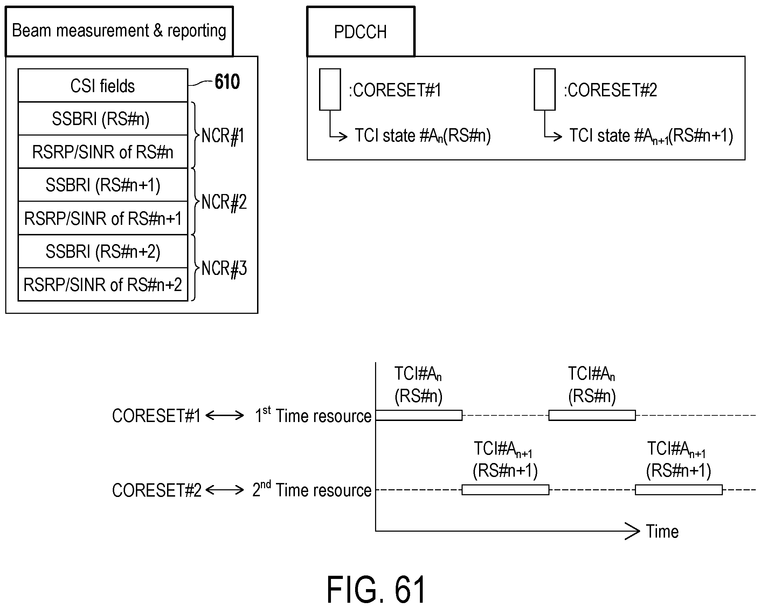

FIG. 61 illustrates a schematic diagram of NCR hopping with multiple TCI states according to one embodiment of the present disclosure. One CORESET may be activated with more than one TCI state. Assume that different beam indexes respectively corresponding to different NCRs are included in a CSI report. If more than one beam index is applied to a channel/RS, the channel/RS may be indicated/activated/configured with more than one TCI state, wherein each TCI state may be associated with one or more NCR IDs. One CORESET may be configured/activated with a TCI state, where the TCI state may map to one NCR. The CORESET may be configured/associated with one of configured time resources. The channel/RS may be received by those NCRs according to the pre-configured time pattern.

For example, assume that beam index RS#n for NCR#1, beam index RS#n+1 for NCR#2, and beam index RS#n+2 for NCR#3 are included in CSI report 610. If CORESET#1 is activated/configured with TCI state #$A_n$ corresponding to RS#n and CORESET#2 is activated/configured with TCI state #$A_{n+1}$ corresponding to RS#n+1, the 1st time resource may be assigned to RS#n corresponding to the activated TCI state #$A_n$ and CORESET#1 and the 2nd time resource may be assigned to RS#n+1 corresponding to the activated TCI state #$A_{n+1}$ and CORESET#2.

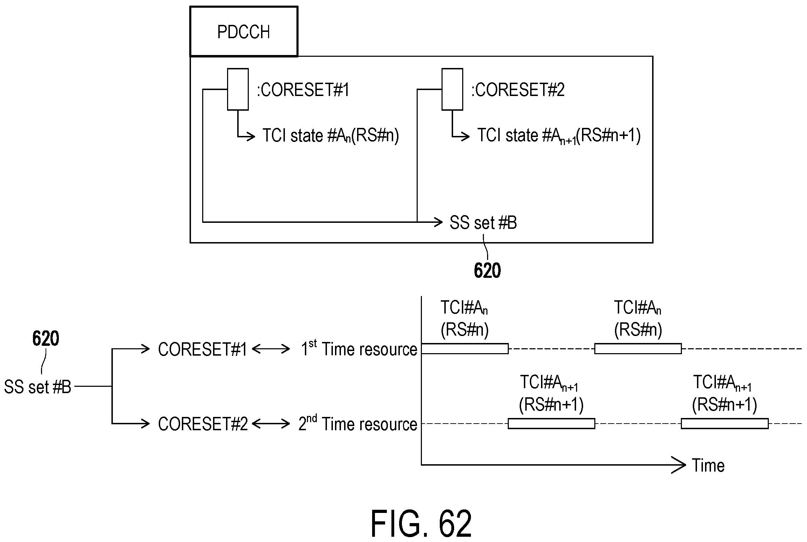

FIG. 62 illustrates a schematic diagram of SS set monitoring according to one embodiment of the present disclosure. One CORESET may be activated with one TCI state. One SS set may be associated with more than one CORESET. An NCR-MT may be configured with a SS set, wherein the SS set maybe configured with more than one CORESET. The SS set monitoring associated with the CORESET may be received by the corresponding NCR with the activated TCI state. For example, assume that CORESET#1 is configured with TCI state #$A_n$ for RS#n, CORESET#2 is configured with TCI state #$A_{n+1}$ for RS#n+1, and CORESET#1 and CORESET#2 are configured to SS set 620 (i.e., SS set #B). The SS set monitoring associated with CORESET#1 may be received by the NCR corresponding to the activated TCI state #$A_n$, and the SS set monitoring associated with CORESET#2 may be received by the NCR corresponding to the activated TCI state #$A_{n+1}$, wherein the 1st time resource may be assigned to the TCI state #$A_n$ and the 2nd time resource may be assigned to the TCI state #$A_{n+1}$.

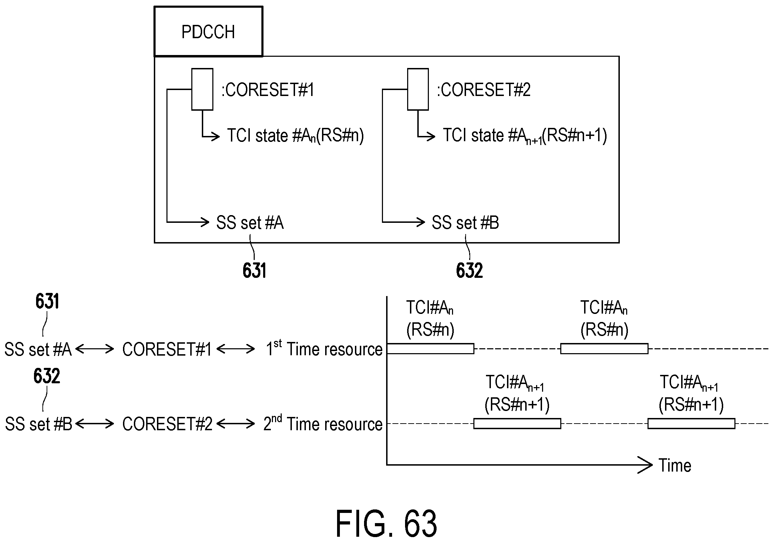

FIG. 63 illustrates a schematic diagram of SS set monitoring according to one embodiment of the present disclosure. One CORESET may be activated with one TCI state. Each SS set associated with the CORESET may be linked to a TCI state according to a time pattern. An NCR-MT may be configured with one or more SS sets, wherein each SS set maybe linked with each other by configuration. The two linked SS sets may be the same SS set type (USS/CSS), the same DCI format to monitor, or the same number of candidates for each AL. The SS set monitoring associated with the CORESET may be received by the corresponding NCR with the activated TCI state.

For example, assume that CORESET#1 is configured with TCI state #$A_n$ for RS#n and is configured to SS set 631 (i.e., SS set #A), and CORESET#2 is configured with TCI state #$A_{n+1}$ for RS#n+1 and is configured to SS set 632 (i.e., SS set #B). The SS set monitoring of SS set #A associated with CORESET#1 may be received by the NCR corresponding to the activated TCI state #$A_n$, and the SS set monitoring of SS set #B associated with CORESET#2 may be received by the NCR corresponding to the activated TCI state #$A_{n+1}$, wherein the 1st time resource may be assigned to the TCI state #$A_n$ and the 2nd time resource may be assigned to the TCI state #$A_{n+1}$.

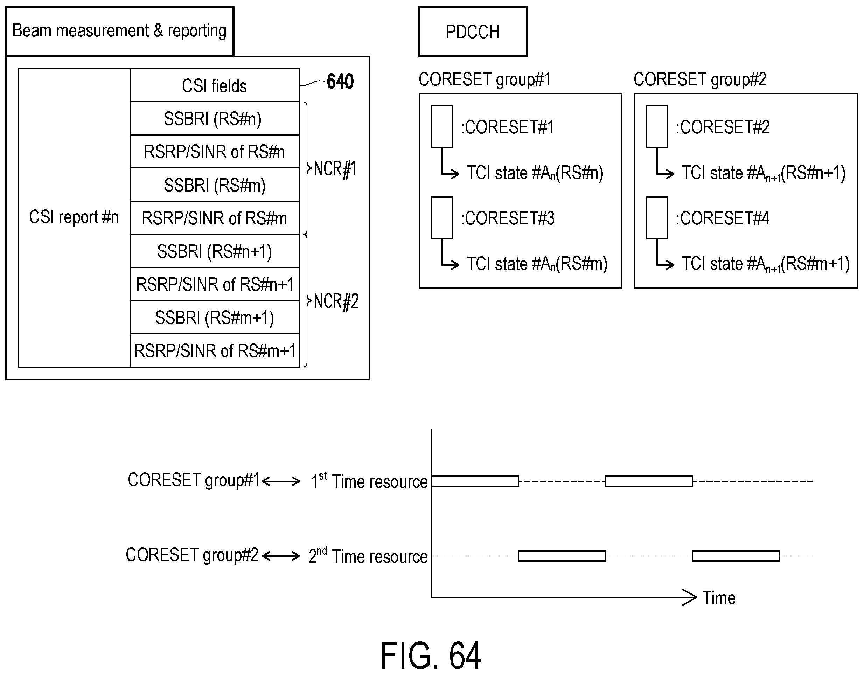

FIG. 64 illustrates a schematic diagram of CORESET group monitoring according to one embodiment of the present disclosure. One CORESET may be activated with one TCI state. Once CORESET group may be configured with one or more CORESETs. An NCR-MT may be configured with one or more CORESETs, wherein each CORESET may be configured with a CORESET group ID. The CORESET group ID may be configured with a time resource ID. The channel/RS may be received by hosed NCRs according to a pre-determined time pattern.

For example, assume that beam indexes RS#n and RS#m reported by NCR#1 and beam indexed RS#n+1 and RS#m+1 reported by NCR#2 are included in CSI report 640, wherein CORESET#1 and CORESET#3 are configured to CORESET group #1, and CORESET#2 and CORESET#4 are configured to CORESET group#2. The 1st time resource may be assigned to CORESET group#1, wherein TCI state #$A_n$ may be applied for the 1st time resource and TCI state #$A_{n+1}$ may be applied for the 2nd time resource.

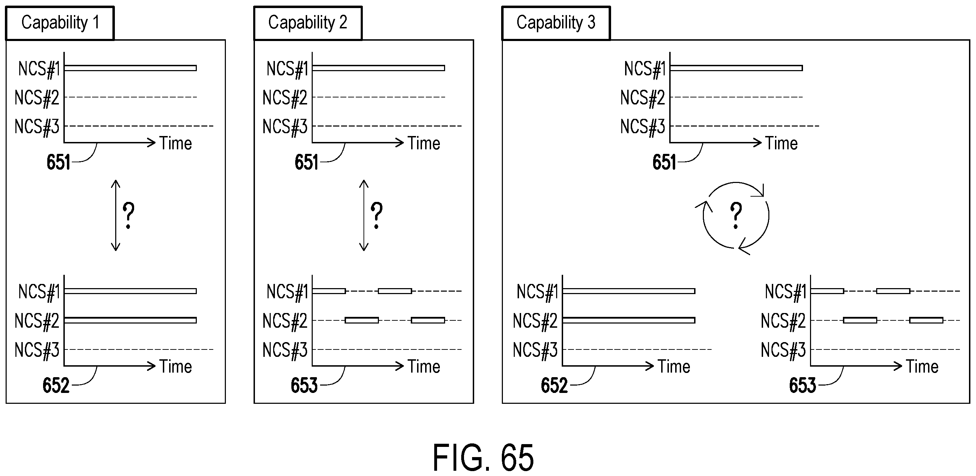

FIG. 65 illustrates a schematic diagram of capability of NCR according to one embodiment of the present disclosure. An NCR may report one or more capabilities to the gNB, wherein the capabilities may include Capability 0, Capability 1, Capability 2, and Capability 3. The reporting of Capability 0 represents that the NCR may be operated in operation mode A (i.e., the operation mode corresponding to control signaling transmission timeline 651). The reporting of Capability 1 represents that the NCR may be switched between operation mode A and operation mode B (i.e., the operation mode corresponding to control signaling transmission timeline 652). The reporting of Capability 2 represents that the NCR may be switched between operation mode A and operation mode C (i.e., the operation mode corresponding to control signaling transmission timeline 653). The reporting of Capability 3 represents that the NCR may be switched among operation mode A, operation mode B, and operation mode C.

In one embodiment, an NCR may be configured with one or more configurations of operation modes according to the capability of the NCR.

In one embodiment, an NCR may be configured/activated/indicated with one or more configuration of operation modes by RRC, MAC CE, or DCI.

In one embodiment, an NCR may be predetermined/configured with a default operation mode (or a default time resource configuration), for example, operation mode A.

If an NCR is not configured/activated/indicated with one or more configurations of operation modes, the NCR may apply the default OM for the C-link to communicate with gNB.

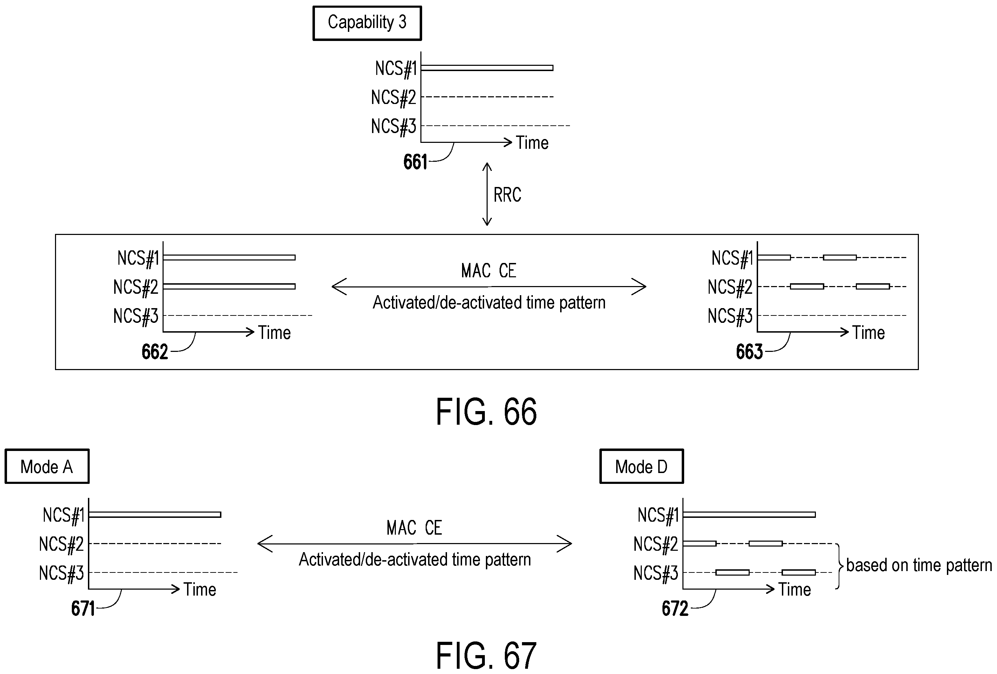

FIG. 66 illustrates a schematic diagram of operation mode switching according to one embodiment of the present disclosure. For example, an NCR supporting Capability 3 may be switched between operation mode A (e.g., the operation mode corresponding to control signaling transmission timeline 661) and one of operation mode B (e.g., the operation mode corresponding to control signaling transmission timeline 662) and operation mode C (e.g., the operation mode corresponding to control signaling transmission timeline 663) based on an RRC message. Furthermore, the NCR may be switched between operation B and operation C based on a MAC CE.

FIG. 67 illustrates a schematic diagram of operation mode switching according to one embodiment of the present disclosure. An NCR may be switched between operation mode A (e.g., the operation mode corresponding to control signaling transmission timeline 671) and operation mode D (e.g., the operation mode corresponding to control signaling transmission timeline 672 based on a MAC CE. When operation mode D is applied by an NCR group, the NCR group may access the C-link through more than one NCR node simultaneously. Furthermore, the NCR group may access the C-link through more than one NCR node by TDM. For example, NCR#1 and NCR#2 may perform control signaling transmission simultaneously. In addition, NCR#1 and NCR#3 may perform control signaling transmission simultaneously. Furthermore, NCR#2 and NCR#3 may perform control signaling transmission by TDM, as shown in control signaling transmission timeline 672.

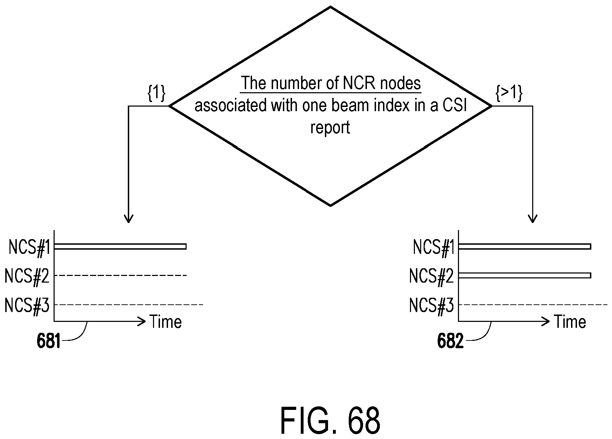

FIG. 68 illustrates a schematic diagram of a scheme of restricted beam reporting for NCR-MT with Capability 1 (e.g., capability to switch between operation modes A and B) according to one embodiment of the present disclosure. An NCR-MT may be configured with one or more NCR nodes associated with one beam index in a CSI report. The NCR-MT may determine the number of NCR nodes associated with one beam index in the CSI report. If the number of NCR nodes associated with one beam index in the CSI report is equal to one, the NCR-MT may apply operation mode A (e.g., the operation mode corresponding to control signaling transmission timeline 681). If the number of NCR nodes associated with one beam index in the CSI report is greater than one, the NCR-MT may apply operation mode B (e.g., the operation mode corresponding to control signaling transmission timeline 682).

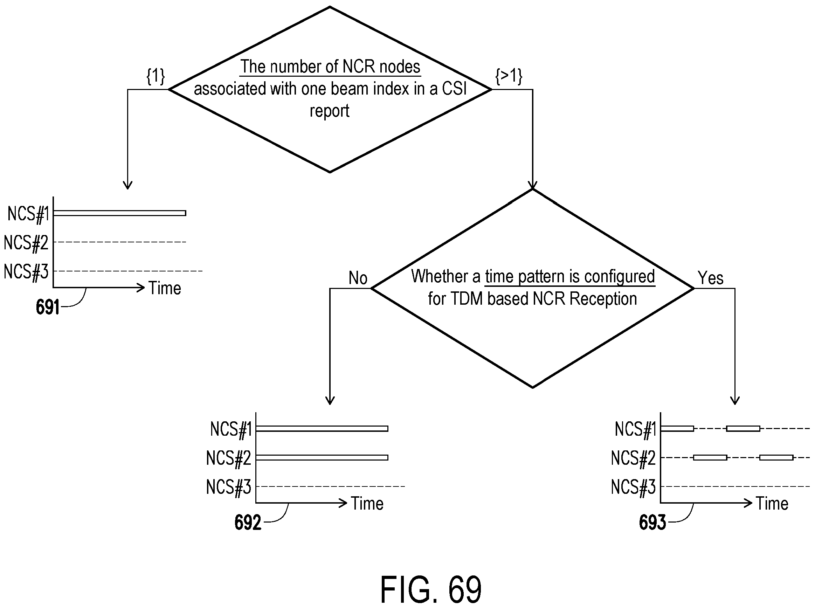

FIG. 69 illustrates a schematic diagram of a scheme of restricted beam reporting for NCR-MT with Capability 3 (e.g., capability to switch among operation modes A, B, and C) according to one embodiment of the present disclosure. An NCR-MT may be configured with one or more NCR nodes associated with one beam index in a CSI report. The NCR-MT may determine the number of NCR nodes associated with one beam index in the CSI report. If the number of NCR nodes associated with one beam index in the CSI report is equal to one, the NCR-MT may apply operation mode A (e.g., the operation mode corresponding to control signaling transmission timeline 691). If the number of NCR nodes associated with one beam index in the CSI report is greater than one, the NCR-MT may determine whether a time pattern for TDM based NCR reception is configured to the NCR-MT. If the time pattern is not configured to the NCR-MT, the NCR-MT may apply operation mode B (e.g., the operation mode corresponding to control signaling transmission timeline 692). If the time pattern is configured to the NCR-MT, the NCR-MT may apply operation mode C (e.g., the operation mode corresponding to control signaling transmission timeline 693).

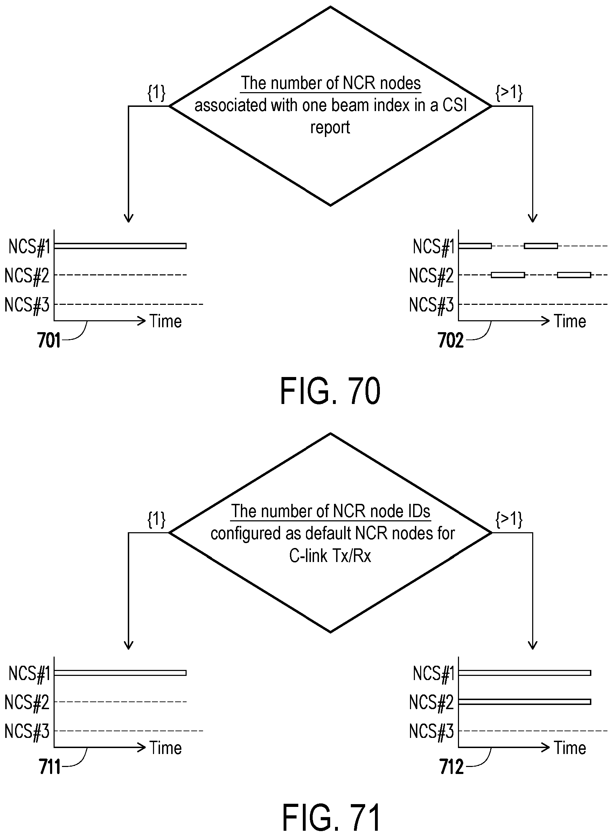

FIG. 70 illustrates a schematic diagram of a scheme of restricted beam reporting for NCR-MT with Capability 2 (e.g., capability to switch between operation modes A and C) according to one embodiment of the present disclosure. An NCR-MT may be configured with one or more NCR nodes associated with one beam index in a CSI report. The NCR-MT may determine the number of NCR nodes associated with one beam index in the CSI report. If the number of NCR nodes associated with one beam index in the CSI report is equal to one, the NCR-MT may apply operation mode A (e.g., the operation mode corresponding to control signaling transmission timeline 701). If the number of NCR nodes associated with one beam index in the CSI report is greater than one, the NCR-MT may apply operation mode C (e.g., the operation mode corresponding to control signaling transmission timeline 702).

FIG. 71 illustrates a schematic diagram of a scheme of implicit NCR node reception for NCR-MT with Capability 1 (e.g., capability to switch between operation modes A and B) according to one embodiment of the present disclosure. An NCR-MT may be configured with one or more default NCR nodes for C-link transmission/reception. The NCR-MT may determine the number of NCR node IDs (e.g., the N lowest NCR node IDs where N is a positive integer) configured as default NCR nodes for C-link transmission/reception. If the number of NCR node IDs is equal to one, the NCR-MT may apply operation mode A (e.g., the operation mode corresponding to control signaling transmission timeline 711). If the number of NCR node IDs is greater than one, the NCR-MT may apply operation mode B (e.g., the operation mode corresponding to control signaling transmission timeline 712).

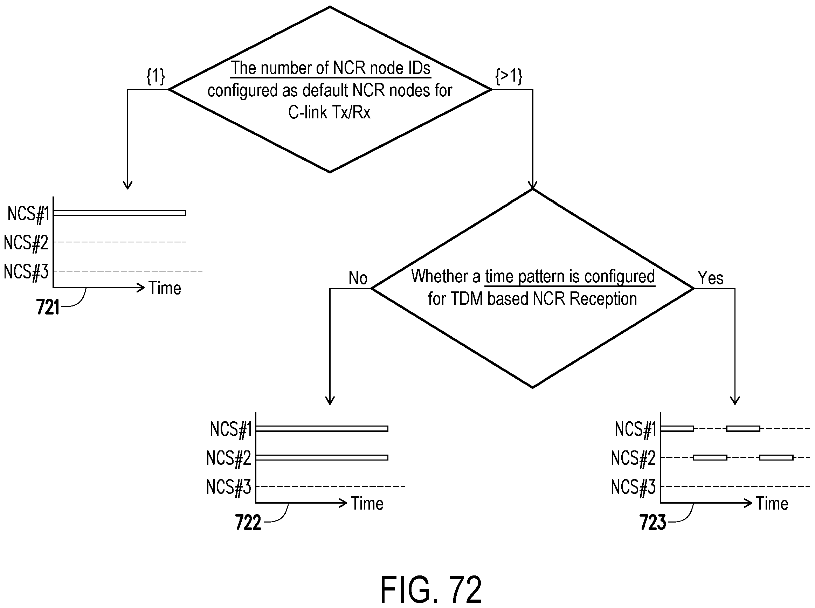

FIG. 72 illustrates a schematic diagram of a scheme of implicit NCR node reception for NCR-MT with Capability 3 (e.g., capability to switch among operation modes A, B, and C) according to one embodiment of the present disclosure. An NCR-MT may be configured with one or more default NCR nodes for C-link transmission/reception. The NCR-MT may determine the number of NCR node IDs (e.g., the N lowest NCR node IDs where N is a positive integer) configured as default NCR nodes for C-link transmission/reception. If the number of NCR node IDs is equal to one, the NCR-MT may apply operation mode A (e.g., the operation mode corresponding to control signaling transmission timeline 721). If the number of NCR node IDs is greater than one, the NCR-MT may determine whether a time pattern for TDM based NCR reception is configured to the NCR-MT. If the time pattern is not configured to the NCR-MT, the NCR-MT may apply operation mode B (e.g., the operation mode corresponding to control signaling transmission timeline 722). If the time pattern is configured to the NCR-MT, the NCR-MT may apply operation mode C (e.g., the operation mode corresponding to control signaling transmission timeline 723).

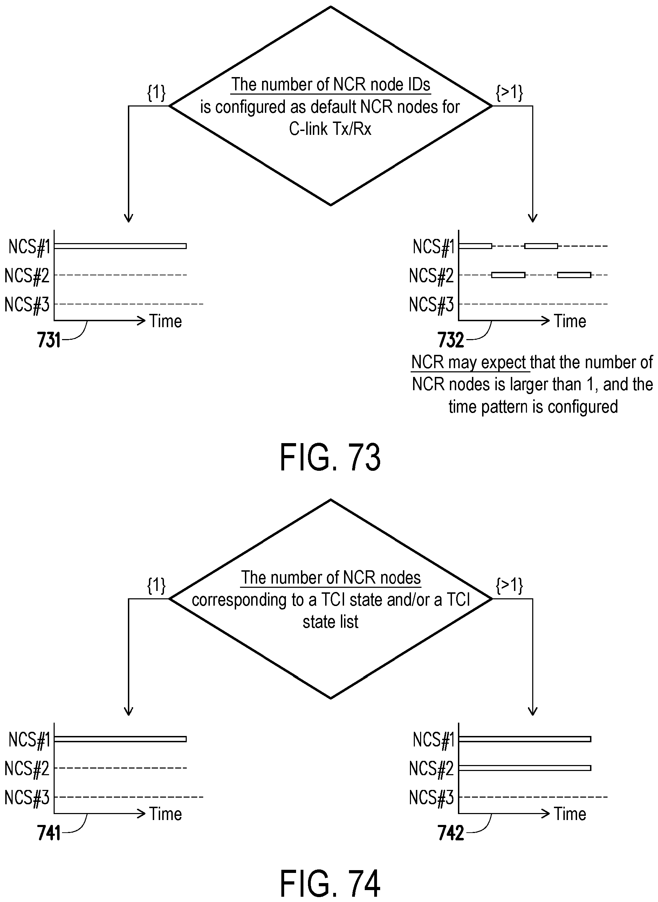

FIG. 73 illustrates a schematic diagram of a scheme of implicit NCR node reception for NCR-MT with Capability 2 (e.g., capability to switch among operation modes A and C) according to one embodiment of the present disclosure. An NCR-MT may be configured with one or more default NCR nodes for C-link transmission/reception. The NCR-MT may determine the number of NCR node IDs (e.g., the N lowest NCR node IDs where N is a positive integer) configured as default NCR nodes for C-link transmission/reception. If the number of NCR node IDs is equal to one, the NCR-MT may apply operation mode A (e.g., the operation mode corresponding to control signaling transmission timeline 731). If the number of NCR node IDs is greater than one, the NCR-MT may apply operation mode C (e.g., the operation mode corresponding to control signaling transmission timeline 732).

FIG. 74 illustrates a schematic diagram of NCR node reception based on NCR ID for NCR-MT with Capability 1 (e.g., capability to switch among operation modes A and B) according to one embodiment of the present disclosure. An NCR-MT may be configured with one or more NCR nodes corresponding to a TCI state and/or TCI state list. The NCR-MT may determine the number of NCR nodes corresponding to a TCI state and/or a TCI state list according to one or more higher layer configurations. If the number of NCR nodes corresponding to a TCI state and/or a TCI state list is equal to one, the NCR-MT may apply operation mode A (e.g., the operation mode corresponding to control signaling transmission timeline 741). If the number of NCR nodes corresponding to a TCI state and/or a TCI state list is greater than one, the NCR-MT may apply operation mode B (e.g., the operation mode corresponding to control signaling transmission timeline 742).

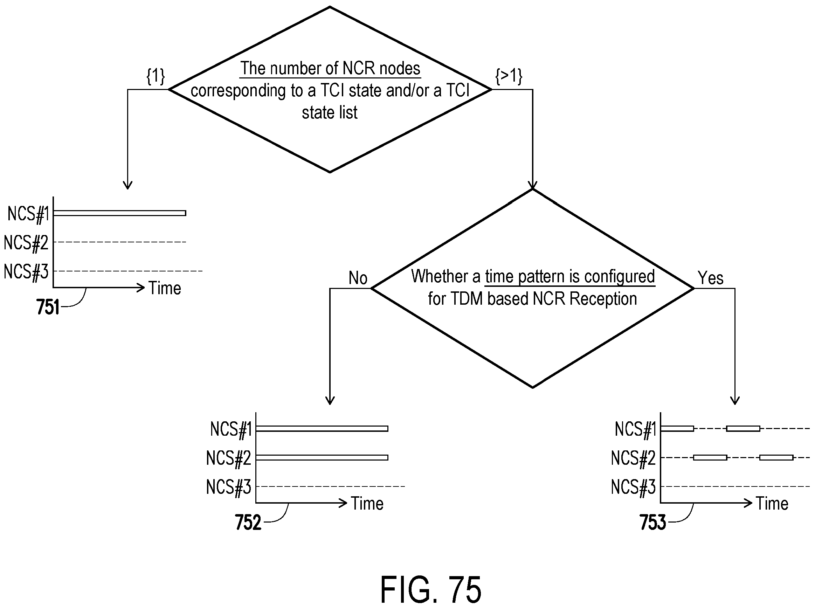

FIG. 75 illustrates a schematic diagram of NCR node reception based on NCR ID for NCR-MT with Capability 3 (e.g., capability to switch among operation modes A, B, and C) according to one embodiment of the present disclosure. An NCR-MT may be configured with one or more NCR nodes corresponding to a TCI state and/or TCI state list. The NCR-MT may determine the number of NCR nodes corresponding to a TCI state and/or a TCI state list according to one or more higher layer configurations. If the number of NCR nodes corresponding to a TCI state and/or a TCI state list is equal to one, the NCR-MT may apply operation mode A (e.g., the operation mode corresponding to control signaling transmission timeline 751). If the number of NCR node IDs is greater than one, the NCR-MT may determine whether a time pattern for TDM based NCR reception is configured to the NCR-MT. If the time pattern is not configured to the NCR-MT, the NCR-MT may apply operation mode B (e.g., the operation mode corresponding to control signaling transmission timeline 752). If the time pattern is configured to the NCR-MT, the NCR-MT may apply operation mode C (e.g., the operation mode corresponding to control signaling transmission timeline 753).

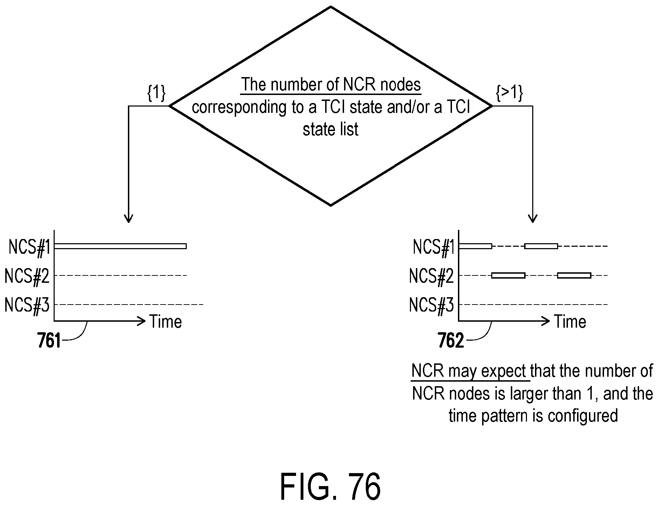

FIG. 76 illustrates a schematic diagram of NCR node reception based on NCR ID for NCR-MT with Capability 2 (e.g., capability to switch among operation modes A and C) according to one embodiment of the present disclosure. An NCR-MT may be configured with one or more NCR nodes corresponding to a TCI state and/or TCI state list. The NCR-MT may determine the number of NCR nodes corresponding to a TCI state and/or a TCI state list according to one or more higher layer configurations. If the number of NCR nodes corresponding to a TCI state and/or a TCI state list is equal to one, the NCR-MT may apply operation mode A (e.g., the operation mode corresponding to control signaling transmission timeline 761). If the number of NCR nodes corresponding to a TCI state and/or a TCI state list is greater than one, the NCR-MT may apply operation mode C (e.g., the operation mode corresponding to control signaling transmission timeline 762).

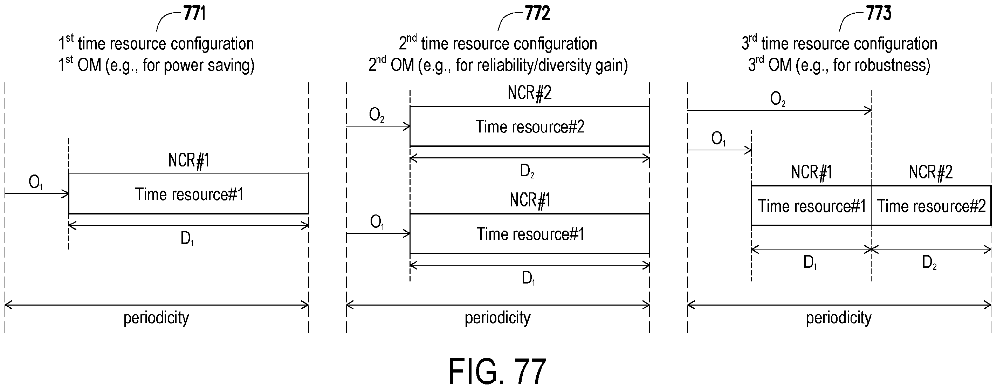

FIG. 77 illustrates a schematic diagram of time resource configurations according to one embodiment of the present disclosure. An NCR may be configured with one or more time resource configurations. The 1st time resource configuration 771 corresponding to the first OM (e.g., operation mode A) may be configured to the NCR for power saving purpose. The 1st time resource configuration 771 may include a mapping relationship among time source ID 1, symbol offset $O_1$, and duration Di. Time resource #1 corresponding to time resource ID 1 may be determined according to symbol offset $O_1$ and duration $D_1$, wherein the starting time of the time resource #1 may be determined according to offset $O_1$.

The 2nd time resource configuration 772 corresponding to the second OM (e.g., operation mode B) may be configured to the NCR for improving reliability/diversity gain. The 2nd time resource configuration 772 may include a mapping relationship among time source ID 1, symbol offset $O_1$, and duration Di and a mapping relationship among time resource ID 2, symbol offset $O_2$, and duration $D_2$ Time resource #1 corresponding to time resource ID 1 may be determined according to symbol offset $O_1$ and duration $D_1$, wherein the starting time of the time resource #1 may be determined according to offset $O_1$. Time resource #2 corresponding to time resource ID 2 may be determined according to symbol offset $O_2$ and duration $D_2$, wherein the starting time of the time resource #2 may be determined according to offset $O_2$. NCR#1 and NCR#2 may respectively access time resource #1 and time resource #2 simultaneously.

The 3rd time resource configuration 773 corresponding to the third OM (e.g., operation mode C) may be configured to the NCR for improving robustness. The 3rd time resource configuration 773 may include a mapping relationship among time source ID 1, symbol offset $O_1$, and duration Di and a mapping relationship among time resource ID 2, symbol offset $O_2$, and duration $D_2$ Time resource #1 corresponding to time resource ID 1 may be determined according to symbol offset $O_1$ and duration $D_1$, wherein the starting time of the time resource #1 may be determined according to offset $O_1$. Time resource #2 corresponding to time resource ID 2 may be determined according to symbol offset $O_2$ and duration $D_2$, wherein the starting time of the time resource #2 may be determined according to offset $O_2$. NCR#1 and NCR#2 may respectively access time resource #1 and time resource #2 by TDM.

In one embodiment, an NCR may be predetermined/configured with a default OM (or a default time resource configuration) such as operation mode A. If the NCR is not configured/activated/indicated with one of at least one time resource configuration, the NCR may apply the default OM for the C-link to communication with gNB.

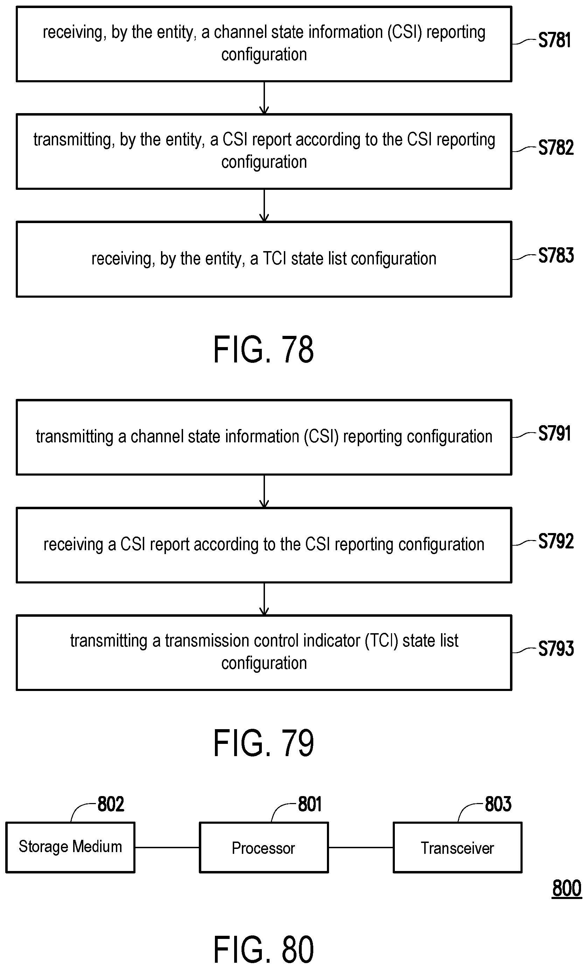

FIG. 78 illustrates a flowchart of a method of beam management according to one embodiment of the present disclosure. The method may be adapted to a communication device (e.g., UE or NCR-MT) including an entity and a function, wherein the entity communicates with a network via a first link, and the function forwards signals via a second link, wherein the first link is associated with a first transmission configuration indicator (TCI) state. In step S781, receiving, by the entity, a channel state information (CSI) reporting configuration. In step S782, transmitting, by the entity, a CSI report according to the CSI reporting configuration. In step S783, receiving, by the entity, a TCI state list configuration.

FIG. 79 illustrates a flowchart of a method of beam management according to one embodiment of the present disclosure. The method may be adapted to a communication device (e.g., base station or gNB). In step S791, transmitting a channel state information (CSI) reporting configuration. In step S792, receiving a CSI report according to the CSI reporting configuration. In step S793, transmitting a transmission configuration indicator (TCI) state list configuration.

FIG. 80 illustrates a schematic diagram of a communication device 800 according to one embodiment of the present disclosure, wherein the communication device 800 may be an NCR, NCR group, UE, cell TRP, gNB, or panel, as mentioned in the above embodiments, but not limited herein. The communication device 800 may include a processor 801, a storage medium 802, and a transceiver 803. The processor 801 is coupled to the storage medium 802 and the transceiver 803 and is configured to access and execute a plurality of modules stored in the storage medium 802.

The processor 801 could be implemented by using programmable units such as a microprocessor, a micro-controller, a DSP chip, a field programmable gate array (FPGA), and so forth.

The storage medium 802 may be, for example, any type of fixed or removable random access memory (RAM), a read-only memory (ROM), a flash memory, a hard disk drive (HDD), a solid state drive (SSD) or similar element, or a combination thereof, configured to record a plurality of modules or various applications executable by the processor 801. In one embodiment, the plurality of modules may include an NCR-MT entity or an NCR-Fwd entity.

The transceiver 803 may be configured to transmit or receive signals. The transceiver 803 may also perform operations such as low noise amplifying, impedance matching, frequency mixing, up or down frequency conversion, filtering, amplifying, and so forth. The transceiver 803 may include one or more digital-to-analog (D/A) converters or analog-to-digital (A/D) converters which are configured to convert from an analog signal format to a digital signal format during uplink signal processing and from a digital signal format to an analog signal format during downlink signal processing.

In summary, the present disclosure provides a method for enabling cooperation among multiple NCRs. For an NCR group, the number of NCR-MTs used to communicate with the gNB can be reduced. As a result, control signaling overhead may be decreased, UL resource scheduling (e.g., co-scheduled with normal UEs) may become more flexible, power consumption for C-link operations may be reduced, and greater flexibility in BH-link operations (e.g., the BH-link is not required to cooperate with the C-link) may be achieved.

## Claims

1. A communication device (800) comprises an entity (31) and a function (32), wherein the entity (31) communicates with a network via a first link, and the function (32) forwards signals via a second link, wherein the first link is associated with a first transmission configuration indicator (TCI) state, wherein the entity (31) is configured to perform:

    receiving a channel state information (CSI) reporting configuration;
    transmitting a CSI report according to the CSI reporting configuration; and
    receiving a TCI state list configuration.

2. The communication device (800) of claim 1, wherein the CSI reporting configuration comprises a reference signal list.

3. The communication device (800) of claim 1, wherein the CSI report comprises at least one of the following: an identification of reference signal, a reference signal received power (RSRP) value corresponding to the reference signal, or a signal to noise ratio value corresponding to the reference signal.

4. The communication device (800) of claim 1, wherein a TCI state in the TCI state list configuration comprises a parameter for configuring a quasi co-location relationship between a downlink reference signal and a demodulation reference signal (DM-RS) port, wherein the DM-RS port is corresponded to at least one of a physical downlink shared channel (PDSCH), a physical downlink control channel (PDCCH), or a channel state information reference signal (CSI-RS) port of a CSI-RS resource.

5. The communication device (800) of claim1, wherein the communication device (800) is configured to:

performing a reception via the second link according to a quasi co-location relationship, wherein the quasi co-location relationship is determined according to a TCI state, wherein the TCI state is comprised in a downlink beam indication in a medium access control control element (MAC CE).

**6.** The communication device (800) of claim1, wherein the communication device (800) is configured to:
performing a reception via the first link and the second link simultaneously in a set of symbols, wherein a second TCI state for a reception via the second link is the same as a first TCI state for a reception via the first link.

**7.** The communication device (800) of claim 1, wherein the communication device (800) is configured to:
performing a transmission via the first link and the second link simultaneously in a set of symbols, wherein a first spatial filter for a transmission via the first link is the same as a second spatial filter for a transmission via the second link.

**8.** The communication device (800) of claim 1, wherein the communication device (800) is configured to:
performing a reception via the first link in a first set of symbols and via the second link in a second set of symbols respectively, wherein the second set of symbols is different from the first set of symbols.

**9.** The communication device (800) of claim 8, wherein a reception via the second link is performed based on a quasi co-location relationship, wherein the quasi co-location relationship is determined according to a TCI state.

**10.** The communication device (800) of claim 1, wherein the communication device (800) is configured to:
performing a transmission via the first link in a first set of symbols and via the second link in a second set of symbols respectively, wherein the second set of symbols is different from the first set of symbols.

**11.** The communication device (800) of claim 10, wherein a transmission via the second link is performed by using a spatial filter corresponding to a unified TCI state.

**12.** The communication device of claim 1, wherein the communication device (800) is configured to:

accessing a network as a repeater; and
transmitting a repeater related information to a serving base station.

**13.** The communication device (800) of claim 1, wherein the communication device (800) is configured to:
receiving a periodic resource configuration, wherein the periodic resource configuration comprises the following: a periodicity, a periodic resource identity, a symbol offset, a duration in symbols, or a beam index.

**14.** The communication device (800) of claim 1, wherein the CSI report comprises at least one identification of at least one reference signal, wherein a number of the at least one reference signal is determined according to a number of reported reference signals per cell and a number of cells.

**15.** The communication device (800) of claim 14, wherein the communication device (800) is configured to perform:
in response to at least one of the number of reported reference signals per cell and the number of cells being greater than one, including a differential reference signal received power (RSRP) in the CSI report.

**16.** The communication device (800) of claim 15, wherein the CSI report further comprises a largest measured RSRP, wherein the largest measured RSRP is quantized to a first value and the differential RSRP is quantized to a second value.

**17.** The communication device (800) of claim 15, wherein the CSI report further comprises a largest measured RSRP, wherein the differential RSRP is with a reference to the largest measured RSRP.

**18.** A method of beam management, adapted to a communication device (800) comprising an entity (31) and a function (32), wherein the entity (31) communicates with a network via a first link, and the function (32) forwards signals via a second link, wherein the first link is associated with a first transmission configuration indicator (TCI) state, and the method comprises:

receiving, by the entity (31), a channel state information (CSI) reporting configuration;
transmitting, by the entity (31), a CSI report according to the CSI reporting configuration; and
receiving, by the entity (31), a TCI state list configuration.

**19.** A communication device (800), comprising:

a transceiver (803); and
a processor (801), coupled to the transceiver (803), wherein the processor (801) is configured to perform:

transmitting a channel state information (CSI) reporting configuration;
receiving a CSI report according to the CSI reporting configuration; and
transmitting a transmission configuration indicator (TCI) state list configuration.

**20.** A method of beam management, adapted to a communication device (800), wherein the method comprises:

transmitting a channel state information (CSI) reporting configuration;
receiving a CSI report according to the CSI reporting configuration; and
transmitting a transmission configuration indicator (TCI) state list configuration.

NCR
10
gNB
UE

FIG. 1

NCR
21
gNB
NCR
22
NCR
23
Independent NCR deployment

FIG. 2

UE
Access link
NCR
30
NCR-MT entity
31
NCR-Fwd entity
32
Control link
Backhaul link
gNB


FIG. 3

Beam measurement and reporting
40
NCR
gNB
RS#n
RS#n+1
CSI report
CSI fields
SSBRI (RS#n)
1st RSRP of RS#n
Beam maintenance/updating
TCI state list
TCI state ID
Spatial QCL assumption
...
...
A_n
RS#n
...
...
Beam application
40
NCR
gNB
Channel/RS
TCI state
#A_n(RS#n)

FIG. 4

gNB
S51
RS#1
RS#2
RS#3
RS#4
RS#5
S53
NCR
S52

FIG. 5

gNB
RS#1
RS#2
RS#3
...
RS#N
NCR
60

| TCI state list | |
|---|---|
| TCI state ID | RS of QCL assumption for spatial domain Rx filter |
| $A_1$ | RS#1 |
| $A_2$ | RS#2 |
| ... | ... |
| $A_N$ | RS#N |

FIG. 6

NCR
70
gNB
C-link
BH-link
NCR-MT
NCR-Fwd
RRC-configured list of beams for C-link
TCI state list
TCI state ID
Spatial QCL assumption
$A_n$
RS#n
$A_{n+1}$
RS#n+1
$A_{n+2}$
RS#n+2
$A_{n+3}$
RS#n+3
71
Select only one beam (TCI state ID) for BH-link by MAC CE
R
Downlink TCI state ID
Oct1
72
gNB
RS#n
RS#n+1
RS#n+2
RS#n+3
NCR
70


FIG. 7

No simultaneous Tx/Rx with C-link & BH-link
gNB
BH-link
RS#n
C-link
RS#n+2
NCR
80
Simultaneous Tx/Rx with C-link & BH-link
gNB
RS#n
C-link
BH-link
RS#n+2
NCR
80

FIG. 8

gNB
TCI state ID
DCI
90
NCR
(Spatial domain related parameter)
TCI state ID
(Frequency domain related parameter)
CORESET ID
(Time domain related parameter)
SS set ID
DCI
TCI State indication via MAC CE
Serving Cell
CORESET ID
CORE SET ID
TCI state ID

FIG. 9

Independent NCR deployment
NCR
101
gNB
C1&BH1
Fwd#1
MT#1
C2&BH2
NCR
102
Fwd#2
MT#2

FIG. 10

Independent NCR deployment
gNB
C1&BH1
C2&BH2
NCR
101
Fwd#1
MT#1
NCR
102
Fwd#2
MT#2
advanced NCR group
gNB
C&BH1
BH2
NCR
101
Fwd#1
NCR
102
Fwd#2
MT
103

FIG. 11

NCR 111
NCR 112
NCR 113
Time
gNB
C&BH1
BH2
BH3
111
112
113
NCR
NCR
NCR
Wireline or wireless

FIG. 12

131
NCR 111
NCR 112
NCR 113
Time
132
NCR 111
NCR 112
NCR 113
Time
gNB
C&BH1
C&BH2
BH3
111
112
113
NCR
NCR
NCR
Wireline or wireless

FIG. 13

140
NCR group
NCR#1
Fwd#1
NCR#2
Fwd#2
NCR#3
Fwd#3
MT
140
NCR group
gNB
S141. RACH preamble (MSG1)
S142. RAR(MSG2)
S143. RRC Setup Request (MSG3)
S144. RRC Setup (MSG4)
S145. RRC Setup Complete (MSG5)
Capability Report, e.g.,
Advanced NCR grouping functionalities
The number of NCRs among the NCR group

FIG. 14

Beam measurement & reporting
NCR
151
NCR
152
RS#n
Report same beam index
CSI report #n
CSI fields
SSBRI (RS#n)
1st RSRP of RS#n
SSBRI (RS#n)
2nd RSRP of RS#n
NCR 151
NCR 152
Beam application
NCR
151
NCR
152
Channel/RS
TCI state
(RS#n)

FIG. 15

Which NCR node should handle C-link?
→ Which BH-link's beam should follow C-link's beam
RS#n could be received by both NCRs for C-link
C-link through NCR 161
C-link through NCR 162
gNB
BH-link#1
RS#n+1
RS#n
RS#n+2
BH-link#2
C-link
NCR
161
NCR
162
→BH-link#1's beam may follow C-link's beam
gNB
RS#n+1
RS#n
RS#n+2
BH-link#2
C-link
BH-link#1
NCR
161
NCR
162
→BH-link#2's beam may follow C-link's beam
gNB
BH-link#1
RS#n+1
RS#n
RS#n+2
C-link
BH-link#2
NCR
161
NCR
162

FIG. 16

gNB
RS#n
NCR
171
NCR
172
CSI report #n
CSI fields
NCR ID
SSBRI (RS#n)
1st RSRP of RS#n
SSBRI (RS#n)
2nd RSRP of RS#n
MT may determine/report a NCR ID for e.g., C-link
(If more than one NCR node reports same RS)
Best beam measured from NCR 171
Best beam measured from NCR 172

FIG. 17

gNB
RS#n
RS#n+1
NCR 181
NCR 182
CSI report #n
CSI fields
SSBRI (RS#n)
1st RSRP of RS#n
SSBRI (RS#n)
2nd RSRP of RS#n
NCR 181
NCR 182
If 1st RSRP of RS#n ≥ 2nd RSRP of RS#n
CSI fields
SSBRI (RS#n)
RSRP/SINR of RS#n
SSBRI (RS#n+1)
RSRP/SINR of RS#n+1
NCR 181
NCR 182
If 1st RSRP of RS#n < 2nd RSRP of RS#n
CSI fields
SSBRI (RS#n+1)
RSRP of RS#n+1
SSBRI (RS#n)
RSRP/SINR of RS#n
NCR 181
NCR 182

FIG. 18

Beam measurement & reporting
CSI report #n
CSI fields
SSBRI (RS#n)
1st RSRP of RS#n
SSBRI (RS#n)
2nd RSRP of RS#n
NCR#1
NCR#2
Beam maintenance/updating
TCI state list
TCI state ID
Spatial QCL assumption
...
...
A_n
RS#n
...
...
Beam application
gNB
Channel/RS
TCI state A_n
(RS#n)
NCR
NCR
191
192
Which NCR node should handle C-link?
→ E.g., lowest NCR ID = NCR #1

FIG. 19

Beam measurement & reporting
CSI fields
CSI report #n
SSBRI (RS#n)
1st RSRP of RS#n
SSBRI (RS#n)
2nd RSRP of RS#n
NCR#1
NCR#2
Beam application
gNB
Channel/RS
TCI state (RS#n)
NCR
NCR
191
192
Which NCR node should handle C-link?
→ E.g., lowest NCR ID = NCR #1
Application time for determining the lowest NCR ID
CSI report
Time
T0
Application time
T1

FIG. 20

Beam measurement & reporting
CSI fields
SSBRI (RS#n)
1st RSRP of RS#n
SSBRI (RS#n)
2nd RSRP of RS#n
NCR#1
NCR#2
Beam maintenance/updating
TCI state list
TCI state ID
Spatial QCL assumption
...
An
RS#n
PDCCH
210
Serving cell ID
CORESET ID
CORE SET ID
TCI state ID (RS#n)
NCR ID
R
Oct1
Oct2
Oct3

FIG. 21

Beam measurement & reporting
CSI fields
SSBRI (RS#n)
1st RSRP of RS#n
NCR#1
SSBRI (RS#n)
2nd RSRP of RS#n
NCR#2
SSBRI (RS#n)
3rd RSRP of RS#n
NCR#3
Beam maintenance/updating
220
TCI state list
TCI state ID
Spatial QCL assumption
...
$A_n$
RS#n
Associated with NCR#1
$B_m$
RS#n
Associated with NCR#2
$C_k$
RS#n
Associated with NCR#3
PDCCH
Serving cell ID
CORESET ID
Oct1
TCI state ID (RS#n)
Oct2

FIG. 22

Size of TCI state list (1…maxNumberConfiguredTCIstates)
TCI state list
$A_1$ $B_1$ $A_2$ $B_2$ $A_3$ $A_4$ $B_3$ $B_4$ $C_1$ $C_2$ $C_3$ $C_4$ … $C_K$ $A_N$ $B_M$
Bit stream associated with NCR#1
Bit stream associated with NCR#2
Bit stream associated with NCR#3
231
232
233
1

FIG. 23

Size of TCI state list (1… maxNumberConfiguredTCIstates)
TCI state list
A1
B1
A2
B2
A3
A4
B3
B4
AN
BM
Bit stream
"1" associated with NCR#1
"0" associated with NCR#2
1
0
1
0
1
1
0
0
1
0
240

FIG. 24

250
Size of TCI state list (1... maxNumberConfiguredTCIstates)
Size of TCI state list of NCR#1
Size of TCI state list of NCR#2
A1
A2
AN
B1
B2
BM
TCI state list
260
Size of TCI state list (1... maxNumberConfiguredTCIstates)
Size of TCI state list of NCR#1
Size of TCI state list of NCR#2
Starting Position of NCR#1
Starting Position of NCR#2
A1
A2
AN
B1
B2
BM
TCI state list

FIG. 25

FIG. 26

270
TCI state list
TCI state ID
Spatial QCL assumption
NCR ID
...
$A_n$
RS#n
NCR1
$A_m$
RS#n
NCR2
PDCCH
Serving cell ID
CORESET ID
Oct1
CORE SET ID
TCI state ID $A_n$
Oct2
281
TCI state list 1: NCR#1
TCI state ID
Reference RS of QCL assumption for spatial domain Rx filter
$A_n$
RS#n
282
TCI state list 2: NCR#2
TCI state ID
Reference RS of QCL assumption for spatial domain Rx filter
$A_n$
RS#n
Serving cell ID
CORESET ID
Oct1
CORE SET ID
TCI state ID $A_n$
Oct2
R
TCI state list ID ( or NCR ID)
Oct3

FIG. 27

FIG. 28

gNB

RS#1

RS#2

RS#3

...

RS#N

NCR#1

NCR#2

NCR#3

NCR#4

290

| CSI report number | CSI fields | |
|---|---|---|
| CSI report #n | 1st CRI or SSBRI | NCR#1 |
| | 2nd CRI or SSBRI | |
| | 1st RSRP/SINR of 1st CRI or SSBRI | |
| | 2nd Differential RSRP/SINR of 2nd CRI or SSBRI | |
| | 3rd CRI or SSBRI | NCR#2 |
| | 4th CRI or SSBRI | |
| | 3rd RSRP/SINR of 3rd CRI or SSBRI | |
| | 4th Differential RSRP/SINR of 4th CRI or SSBRI | |
| | 5th CRI or SSBRI | NCR#3 |
| | 6th CRI or SSBRI | |
| | 5th RSRP/SINR of 5th CRI or SSBRI | |
| | 6th Differential RSRP/SINR of 6th CRI or SSBRI | |
| | 7th CRI or SSBRI | NCR#4 |
| | 8th CRI or SSBRI | |
| | 7th RSRP/SINR of 7th CRI or SSBRI | |
| | 8th Differential RSRP/SINR of 8th CRI or SSBRI | |

FIG. 29

300

| CSI report number | CSI fields | |
|---|---|---|
| CSI report #n | NCR index ordering = e.g., "01" | |
| | 1st CRI or SSBRI | NCR#2 |
| | 2nd CRI or SSBRI | NCR#2 |
| | 1st RSRP/SINR of 1st CRI or SSBRI | NCR#2 |
| | 2nd Differential RSRP/SINR of 2nd CRI or SSBRI | NCR#2 |
| | 3rd CRI or SSBRI | NCR#1 |
| | 4th CRI or SSBRI | NCR#1 |
| | 3rd Differential RSRP/SINR of 3rd CRI or SSBRI | NCR#1 |
| | 4th Differential RSRP/SINR of 4th CRI or SSBRI | NCR#1 |
| | 5th CRI or SSBRI | NCR#3 |
| | 6th CRI or SSBRI | NCR#3 |
| | 5th Differential RSRP/SINR of 5th CRI or SSBRI | NCR#3 |
| | 6th Differential RSRP/SINR of 6th CRI or SSBRI | NCR#3 |
| | 7th CRI or SSBRI | NCR#4 |
| | 8th CRI or SSBRI | NCR#4 |
| | 7th Differential RSRP/SINR of 7th CRI or SSBRI | NCR#4 |
| | 8th Differential RSRP/SINR of 8th CRI or SSBRI | NCR#4 |

FIG. 30

310

| CSI report number | CSI fields | |
|---|---|---|
| CSI report #n | CRI/SSBRI index ordering = e.g., "00" | |
| | 1st NCR index | CRI/SSBRI index #1 |
| | 2nd NCR index | |
| | 1st RSRP/SINR of 1st NCR index | |
| | 2nd Differential RSRP/SINR of 2nd NCR index | |
| | 3rd NCR index | CRI/SSBRI index #2 |
| | 4th NCR index | |
| | 3rd Differential RSRP/SINR of 3rd NCR index | |
| | 4th Differential RSRP/SINR of 4th NCR index | |
| | 5th NCR index | CRI/SSBRI index #3 |
| | 6th NCR index | |
| | 5th Differential RSRP/SINR of 5th NCR index | |
| | 6th Differential RSRP/SINR of 6th NCR index | |
| | 7th NCR index | CRI/SSBRI index #4 |
| | 8th NCR index | |
| | 7th Differential RSRP/SINR of 7th NCR index | |
| | 8th Differential RSRP/SINR of 8th NCR index | |

FIG. 31

Beam measurement & reporting
RS#n
NCR#1
NCR#2
NCR#3
321
322
323
Report same beam index
CSI fields
SSBRI (RS#n)
1st RSRP of RS#n
SSBRI (RS#n)
2nd RSRP of RS#n
SSBRI (RS#n)
3rd RSRP of RS#n
NCR#1
NCR#2
NCR#3
Beam application
Channel/RS
TCI state
(RS#n)
NCR#1
NCR#2
NCR#3
321
322
323

FIG. 32

Beam measurement & reporting
RS#n
RS#n+1
NCR#1
NCR#2
NCR#3
331
332
333
If (1st or 2nd)RSRP of RS#n & > 3rd RSRP of RS#n
CSI fields
SSBRI (RS#n)
1st RSRP of RS#n
SSBRI (RS#n)
2nd RSRP of RS#n
SSBRI (RS#n)
3rd RSRP of RS#n
CSI fields
SSBRI (RS#n)
RSRP/SINR of RS#n
SSBRI (RS#n)
RSRP/SINR of RS#n
SSBRI (RS#n+1)
RSRP/SINR of RS#n+1
Beam application
Channel/RS
TCI state
(RS#n)
NCR#1
NCR#2
331
332

FIG. 33

Beam measurement & reporting
CSI report #n
CSI fields
SSBRI (RS#n)
1st RSRP of RS#n
SSBRI (RS#n)
2nd RSRP of RS#n
SSBRI (RS#n)
3rd RSRP of RS#n
NCR#1
NCR#2
NCR#3
Beam application
TCI state
(RS#n)
Channel/RS
NCR#1
NCR#2
NCR#3
341
342
343

FIG. 34

Beam measurement & reporting
CSI report #n
CSI fields
SSBRI (RS#n)
1st RSRP of RS#n
SSBRI (RS#n)
2nd RSRP of RS#n
NCR#1
NCR#2
Beam application
TCI state
(RS#n)
Channel/RS
NCR#1
NCR#2
351
352

FIG. 35

Beam measurement & reporting
CSI fields
SSBRI (RS#n)
1st RSRP of RS#n
NCR#1
SSBRI (RS#n)
2nd RSRP of RS#n
NCR#2
SSBRI (RS#n)
3rd RSRP of RS#n
NCR#3
Beam maintenance/updating
TCI state list
TCI state ID
Spatial QCL assumption
...
A_n
RS#n
PDCCH
360
Serving cell ID
CORESET ID
Oct1
CORE SET ID
TCI state ID (RS#n)
Oct2
NCR ID#1
NCR ID#2
Oct3

FIG. 36

Beam measurement & reporting
CSI fields
SSBRI (RS#n)
1st RSRP of RS#n
SSBRI (RS#n)
2nd RSRP of RS#n
SSBRI (RS#n)
3rd RSRP of RS#n
NCR#1
NCR#2
NCR#3
Beam maintenance/updating
370
TCI state list
TCI state ID
Spatial QCL assumption
...
An
RS#n
Bm
Ck
Associated with NCR#1
Associated with NCR#2
Associated with NCR#3
PDCCH
Serving cell ID
CORESET ID
CORE SET ID
TCI state ID An
R
TCI state ID Bm
Oct1
Oct2
Oct3

FIG. 37

Size of TCI state list (1… maxNumberConfiguredTCIstates)
TCI state list
$A_1$
$B_1$
$A_2$
$B_2$
$A_3$
$A_4$
$B_3$
$B_4$
$C_1$
$C_2$
$C_3$
$C_4$
…
$C_K$
$A_N$
$B_M$
Bit stream associated with NCR#1
Bit stream associated with NCR#2
Bit stream associated with NCR#3
1
381
382
383


FIG. 38

Size of TCI state list (1… maxNumberConfiguredTCIstates)
TCI state list
A1
B1
A2
B2
A3
A4
B3
B4
AN
BM
1
0
1
0
1
1
0
0
1
0
Bit stream
"1" associated with NCR#1
"0" associated with NCR#2
390

FIG. 39

400
Size of TCI state list (1… maxNumberConfiguredTCIstates)
Size of TCI state list of NCR#1
Size of TCI state list of NCR#2
A1
A2
AN
B1
B2
BM
TCI state list
410
Starting Position of NCR#1
Starting Position of NCR#2


FIG. 40

FIG. 41

Beam measurement & reporting
CSI fields
SSBRI (RS#n)
1st RSRP of RS#n
SSBRI (RS#n)
2nd RSRP of RS#n
NCR#1
NCR#2
Beam maintenance/updating
420
TCI state list
TCI state ID
Spatial QCL assumption
...
$A_n$
RS#n
Associated with NCR1&NCR2
PDCCH
Serving cell ID
CORESET ID
Oct1
TCI state ID $A_n$
Oct2

FIG. 42

Size of TCI state list (1… maxNumberConfiguredTCIstates)
TCI state list
$A_1$
$B_1$
$A_2$
$B_2$
$A_3$
$A_4$
$B_3$
$B_4$
$A_n$
$A_N$
$B_{N'}$
Bit stream associated with NCR#1
Bit stream associated with NCR#2
431
432

FIG. 43

440
TCI state list
TCI state ID
Spatial QCL assumption
NCR ID
...
$A_n$
RS#n
NCR1
$A_{n'}$
RS#n
NCR2
PDCCH
Serving cell ID
CORESET ID
Oct1
CORE SET ID
TCI state ID $A_n$
Oct2
R
TCI state ID $A_{n'}$
Oct3
451
TCI state list 1: NCR#1
TCI state ID
Reference RS of QCL assumption for spatial domain Rx filter
$A_n$
RS#n
452
TCI state list 2: NCR#2
TCI state ID
Reference RS of QCL assumption for spatial domain Rx filter
$B_n$
RS#n
Serving cell ID
CORESET ID
CORE SET ID
TCI state ID $A_n$
R
TCI state list ID#1
TCI state ID $B_n$
TCI state list ID#2

FIG. 44

FIG. 45

Step 1: Time pattern establishment
1st Time resource
2nd Time resource
Time
Step 2: Determine the association between time pattern and NCR nodes
1st Time resource
2nd Time resource
?
NCR#1
NCR#2
...
NCR#M
461
462
46M
Periodicity (e.g., frame)
Slot
1st
2nd
...
nth
...
Nth
471
1 1 1 1 1
Bit stream associated with 1st time resource
472
1 1 1 1 1
Bit stream associated with 2nd time resource
1st Time resource
2nd Time resource
Time

FIG. 46

FIG. 47

Periodicity (e.g., frame)
Slot
1st
2nd
nth
Nth
481
482
1st Time resource
2nd Time resource
Time

FIG. 48

O2
O1
Time resource#1
Time resource#2
D1
D2
periodicity
490

| Time Resource ID | Symbol Offset | Duration |
| --- | --- | --- |
| 1 | $O_1$ | $D_1$ |
| 2 | $O_2$ | $D_2$ |

FIG. 49

Case 1 : If the same beam indexes (e.g., RS#n) corresponding to different NCRs are included in a CSI report

RS#n

Report same beam index

| CSI fields | |
| --- | --- |
| SSBRI (RS#n) | NCR#1 |
| 1st RSRP of RS#n | |
| SSBRI (RS#n) | NCR#2 |
| 2nd RSRP of RS#n | |
| SSBRI (RS#n) | NCR#3 |
| 3rd RSRP of RS#n | |

NCR#1 NCR#2 NCR#3

501 502 503

Case 2 : If different beam indexes corresponding to different NCRs are included in a CSI report

RS#n RS#n+1 RS#n+2

Report different beam indexes

| CSI fields | |
| --- | --- |
| SSBRI (RS#n) | NCR#1 |
| RSRP/SINR of RS#n | |
| SSBRI (RS#n+1) | NCR#2 |
| RSRP/SINR of RS#n+1 | |
| SSBRI (RS#n+2) | NCR#3 |
| RSRP/SINR of RS#n+2 | |

NCR#1 NCR#2 NCR#3

501 502 503

FIG. 50

Beam measurement & reporting
RS#n
RS#n+1
NCR#1
511
NCR#2
512
NCR#3
513
If (1st or 2nd)RSRP of RS#n & > 3rd RSRP of RS#n
CSI fields
SSBRI (RS#n)
1st RSRP of RS#n
SSBRI (RS#n)
2nd RSRP of RS#n
SSBRI (RS#n)
3rd RSRP of RS#n
NCR#1
NCR#2
NCR#3
CSI fields
SSBRI (RS#n)
RSRP/SINR of RS#n
SSBRI (RS#n)
RSRP/SINR of RS#n
SSBRI (RS#n+1)
RSRP/SINR of RS#n+1
NCR#1
NCR#2
NCR#3
Beam application
Channel/RS
TCI state
(RS#n)
NCR#1
511
NCR#2
512

FIG. 51

Beam application
TCI state
(RS#n)
Channel/RS
NCR#1
NCR#2
521
522
The 1st lowest NCR ID
1st Time resource
The 2nd lowest NCR ID
2nd Time resource
Time


FIG. 52

Beam measurement & reporting
CSI fields
SSBRI (RS#n)
1st RSRP of RS#n
SSBRI (RS#n)
2nd RSRP of RS#n
SSBRI (RS#n)
3rd RSRP of RS#n
NCR#1
NCR#2
NCR#3
TDM based Beam application
TCI state (RS#n)
Channel/RS
NCR#1
NCR#2
NCR#3
531
532
533
The 1st lowest NCR ID ⟷ 1st Time resource
The 2nd lowest NCR ID ⟷ 2nd Time resource
Time

FIG. 53

Beam measurement & reporting
CSI fields
SSBRI (RS#n)
1st RSRP of RS#n
SSBRI (RS#n)
2nd RSRP of RS#n
SSBRI (RS#n)
3rd RSRP of RS#n
NCR#1
NCR#2
NCR#3
PDCCH
540
CORE SET ID
Serving cell ID
CORESET ID
TCI state ID (RS#n)
NCR ID#1
NCR ID#2
Oct1
Oct2
Oct3
The 1st lowest NCR ID
1st Time resource
The 2nd lowest NCR ID
2nd Time resource
TCI#An (RS#n)
Time

FIG. 54

Beam measurement & reporting
CSI fields
SSBRI (RS#n)
1st RSRP of RS#n
NCR#1
SSBRI (RS#n)
2nd RSRP of RS#n
NCR#2
SSBRI (RS#n)
3rd RSRP of RS#n
NCR#3
Beam maintenance/updating
550
TCI state list
TCI state ID
Spatial QCL assumption
...
An
RS#n
Associated with NCR#1
Bm
RS#n
Associated with NCR#2
Ck
RS#n
Associated with NCR#3
PDCCH
Serving cell ID
CORESET ID
Oct1
TCI state ID An
Oct2
R
TCI state ID Bm
Oct3

FIG. 55

PDCCH
560
Serving cell ID
CORESET ID
Oct1
TCI state ID $A_n$
Oct2
R
TCI state ID $B_n$
Oct3

The 1st lowest NCR ID ⟷ 1st Time resource
The 2nd lowest NCR ID ⟷ 2nd Time resource
TCI#$A_n$ (RS#n)
TCI#$B_n$ (RS#n)
TCI#$A_n$ (RS#n)
TCI#$B_n$ (RS#n)
Time

FIG. 56

571
TCI state list
TCI state ID
Spatial QCL assumption
NCR ID
...
A_n
RS#n
NCR1
A_n'
RS#n
NCR2
572
PDCCH
Serving cell ID
CORESET ID
Oct1
CORE SET ID
TCI state ID A_n
Oct2
R
TCI state ID A_n'
Oct3
TCI#A_n (RS#n)
TCI#A_n' (RS#n)
Time
The 1st activated TCI state, e.g., TCI state A_n ⟷ 1st Time resource
The 2nd activated TCI state, e.g., TCI state A_n' ⟷ 2nd Time resource

FIG. 57

581
TCI state list 1: NCR#1
TCI state ID
Spatial QCL assumption
...
$A_n$
RS#n
582
TCI state list 2: NCR#2
TCI state ID
Spatial QCL assumption
...
$A_n$
RS#n
Serving cell ID
CORESET ID
CORE SET ID
TCI state ID $A_n$
R
TCI state list ID#1
TCI state ID $A_n$
TCI state list ID#2
TCI#$A_n$ (RS#n)
Time
The 1st TCI state list ID ⟷ 1st Time resource
The 2nd TCI state list ID ⟷ 2nd Time resource

FIG. 58

Step 2: Determine the association between time pattern and NCR nodes

NCR#1
NCR#2
...
NCR#M
?
1st Time resource
2nd Time resource

Case 2 : If different beam indexes corresponding to different NCRs are included in a CSI report

Report different beam indexes
RS#n
RS#n+1
RS#n+2
CSI fields
SSBRI (RS#n)
RSRP/SINR of RS#n
SSBRI (RS#n+1)
RSRP/SINR of RS#n+1
SSBRI (RS#n+2)
RSRP/SINR of RS#n+2
NCR#1
NCR#2
NCR#3
591
592
593

FIG. 59

Beam measurement & reporting
600
CSI fields
SSBRI (RS#n)
RSRP/SINR of RS#n
NCR#1
SSBRI (RS#n+1)
RSRP/SINR of RS#n+1
NCR#2
SSBRI (RS#n+2)
RSRP/SINR of RS#n+2
NCR#3
PDCCH
:CORESET
TCI state #A_n(RS#n)
TCI state #A_n+1(RS#n+1)
The 1st activated TCI state, e.g., TCI state A_n ⟷ 1st Time resource
The 2nd activated TCI state, e.g., TCI state A_n+1 ⟷ 2nd Time resource
TCI#A_n (RS#n)
TCI#A_n+1 (RS#n+1)
TCI#A_n (RS#n)
TCI#A_n+1 (RS#n+1)
Time


FIG. 60

Beam measurement & reporting
610
CSI fields
SSBRI (RS#n)
RSRP/SINR of RS#n
SSBRI (RS#n+1)
RSRP/SINR of RS#n+1
SSBRI (RS#n+2)
RSRP/SINR of RS#n+2
NCR#1
NCR#2
NCR#3
PDCCH
:CORESET#1
TCI state #A_n(RS#n)
:CORESET#2
TCI state #A_n+1(RS#n+1)
CORESET#1 ⟷ 1st Time resource
CORESET#2 ⟷ 2nd Time resource
TCI#A_n
(RS#n)
TCI#A_n+1
(RS#n+1)
TCI#A_n
(RS#n)
TCI#A_n+1
(RS#n+1)
Time

FIG. 61

PDCCH
:CORESET#1
TCI state #A$_n$(RS#n)
:CORESET#2
TCI state #A$_{n+1}$(RS#n+1)
SS set #B
620
SS set #B
620
CORESET#1
1st Time resource
CORESET#2
2nd Time resource
TCI#A$_n$
(RS#n)
TCI#A$_{n+1}$
(RS#n+1)
TCI#A$_n$
(RS#n)
TCI#A$_{n+1}$
(RS#n+1)
Time

FIG. 62

PDCCH
:CORESET#1
TCI state #A$_n$(RS#n)
SS set #A
631
:CORESET#2
TCI state #A$_{n+1}$(RS#n+1)
SS set #B
632
631
SS set #A ⟷ CORESET#1 ⟷ 1$^{st}$ Time resource
632
SS set #B ⟷ CORESET#2 ⟷ 2$^{nd}$ Time resource
TCI#A$_n$ (RS#n)
TCI#A$_{n+1}$ (RS#n+1)
TCI#A$_n$ (RS#n)
TCI#A$_{n+1}$ (RS#n+1)
Time

FIG. 63

Beam measurement & reporting
640
CSI report #n
CSI fields
SSBRI (RS#n)
RSRP/SINR of RS#n
SSBRI (RS#m)
RSRP/SINR of RS#m
SSBRI (RS#n+1)
RSRP/SINR of RS#n+1
SSBRI (RS#m+1)
RSRP/SINR of RS#m+1
NCR#1
NCR#2
PDCCH
CORESET group#1
:CORESET#1
TCI state #$A_n$(RS#n)
:CORESET#3
TCI state #$A_n$(RS#m)
CORESET group#2
:CORESET#2
TCI state #$A_{n+1}$(RS#n+1)
:CORESET#4
TCI state #$A_{n+1}$(RS#m+1)
CORESET group#1 ⟷ 1st Time resource
CORESET group#2 ⟷ 2nd Time resource
Time

FIG. 64

Capability 1
NCS#1
NCS#2
NCS#3
Time
651
?
NCS#1
NCS#2
NCS#3
Time
652
Capability 2
NCS#1
NCS#2
NCS#3
Time
651
?
NCS#1
NCS#2
NCS#3
Time
653
Capability 3
NCS#1
NCS#2
NCS#3
Time
651
?
NCS#1
NCS#2
NCS#3
Time
652
NCS#1
NCS#2
NCS#3
Time
653


FIG. 65

Capability 3
NCS#1
NCS#2
NCS#3
Time
661
RRC
NCS#1
NCS#2
NCS#3
Time
662
MAC CE
Activated/de-activated time pattern
NCS#1
NCS#2
NCS#3
Time
663
Mode A
NCS#1
NCS#2
NCS#3
Time
671
MAC CE
Activated/de-activated time pattern
Mode D
NCS#1
NCS#2
NCS#3
Time
672
based on time pattern


FIG. 66

FIG. 67

The number of NCR nodes associated with one beam index in a CSI report
{1}
{>1}
NCS#1
NCS#2
NCS#3
Time
681
NCS#1
NCS#2
NCS#3
Time
682

FIG. 68

The number of NCR nodes associated with one beam index in a CSI report
{1}
{>1}
Whether a time pattern is configured for TDM based NCR Reception
No
Yes
NCS#1
NCS#2
NCS#3
Time
691
692
693

FIG. 69

The number of NCR nodes associated with one beam index in a CSI report
{1}
{>1}
NCS#1
NCS#2
NCS#3
Time
701
NCS#1
NCS#2
NCS#3
Time
702

FIG. 70

The number of NCR node IDs configured as default NCR nodes for C-link Tx/Rx
{1}
{>1}
NCS#1
NCS#2
NCS#3
Time
711
NCS#1
NCS#2
NCS#3
Time
712

FIG. 71

The number of NCR node IDs configured as default NCR nodes for C-link Tx/Rx
{1}
{>1}
Whether a time pattern is configured for TDM based NCR Reception
No
Yes
NCS#1
NCS#2
NCS#3
Time
721
722
723

FIG. 72

The number of NCR node IDs
is configured as default NCR nodes for
C-link Tx/Rx
{1}
{>1}
NCS#1
NCS#2
NCS#3
Time
731
NCS#1
NCS#2
NCS#3
Time
732
NCR may expect that the number of
NCR nodes is larger than 1, and the
time pattern is configured

FIG. 73

The number of NCR nodes
corresponding to a TCI state and/or a TCI
state list
{1}
{>1}
NCS#1
NCS#2
NCS#3
Time
741
NCS#1
NCS#2
NCS#3
Time
742

FIG. 74

The number of NCR nodes corresponding to a TCI state and/or a TCI state list
{1}
{>1}
Whether a time pattern is configured for TDM based NCR Reception
No
Yes
NCS#1
NCS#2
NCS#3
Time
751
752
753

FIG. 75

The number of NCR nodes corresponding to a TCI state and/or a TCI state list
{1}
{>1}
NCS#1
NCS#2
NCS#3
Time
761
NCS#1
NCS#2
NCS#3
Time
762
NCR may expect that the number of NCR nodes is larger than 1, and the time pattern is configured

FIG. 76

771
1st time resource configuration
1st OM (e.g., for power saving)
NCR#1
Time resource#1
O1
D1
periodicity
772
2nd time resource configuration
2nd OM (e.g., for reliability/diversity gain)
NCR#2
Time resource#2
NCR#1
Time resource#1
O2
O1
D2
D1
periodicity
773
3rd time resource configuration
3rd OM (e.g., for robustness)
NCR#1
Time resource#1
NCR#2
Time resource#2
O2
O1
D1
D2
periodicity

FIG. 77

receiving, by the entity, a channel state information (CSI) reporting configuration
S781
transmitting, by the entity, a CSI report according to the CSI reporting configuration
S782
receiving, by the entity, a TCI state list configuration
S783

FIG. 78

transmitting a channel state information (CSI) reporting configuration
S791
receiving a CSI report according to the CSI reporting configuration
S792
transmitting a transmission control indicator (TCI) state list configuration
S793

FIG. 79

802
801
803
Storage Medium
Processor
Transceiver
800

FIG. 80

Europäisches
Patentamt
European
Patent Office
Office européen
des brevets

# EUROPEAN SEARCH REPORT

Application Number
EP 24 22 0449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/283348 A1 (MOLAVIANJAZI EBRAHIM [US] ET AL) 7 September 2023 (2023-09-07) * paragraphs [0090] - [0094], [0103], [0132], [0178] - [0188], [0227] - [0229], [0249] - [0256], [0274]; figure 14 * * paragraph [0343] * ----- | 1-13, 18-20 | INV. H04B7/06 H04B7/08 H04B7/155 H04L5/00 H04W72/23 |
| X | US 2023/327735 A1 (AWADIN MOHAMED MOKHTAR GABER MOURSI [US] ET AL) 12 October 2023 (2023-10-12) * paragraphs [0005], [0013] - [0033], [0172] - [0189], [0258], [0259]; figures 2, 16-18 * ----- | 1-8,10, 11,13-20 | |

TECHNICAL FIELDS SEARCHED (IPC)

H04B
H04L
H04W

The present search report has been drawn up for all claims

| Place of search | Date of completion of the search | Examiner |
|---|---|---|
| Munich | 12 May 2025 | Ganis, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2
EPO FORM 1503 03.82 (P04C01)

## ANNEX TO THE EUROPEAN SEARCH REPORT ON EUROPEAN PATENT APPLICATION NO. EP 24 22 0449

This annex lists the patent family members relating to the patent documents cited in the above-mentioned European search report. The members are as contained in the European Patent Office EDP file on
The European Patent Office is in no way liable for these particulars which are merely given for the purpose of information.

12-05-2025

| Patent document cited in search report | Publication date | Patent family member(s) | Publication date |
|---|---|---|---|
| US 2023283348 A1 | 07-09-2023 | EP 4473677 A1 | 11-12-2024 |
| | | KR 20240154560 A | 25-10-2024 |
| | | US 2023283348 A1 | 07-09-2023 |
| | | WO 2023167550 A1 | 07-09-2023 |
| US 2023327735 A1 | 12-10-2023 | EP 4262106 A2 | 18-10-2023 |
| | | KR 20230145914 A | 18-10-2023 |
| | | TW 202341689 A | 16-10-2023 |
| | | US 2023327735 A1 | 12-10-2023 |

EPO FORM P0459

For more details about this annex : see Official Journal of the European Patent Office, No. 12/82